# EUROPÄISCHE PATENTSCHRIFT

(11) **EP 3 838 731 B1**
(45) Veröffentlichungstag und Bekanntmachung des Hinweises auf die Patenterteilung: **15.05.2024**
(21) Anmeldenummer: 20000455.4
(22) Anmeldetag: 10.12.2020
(51) Int. Cl.: B62M 9/125, B62K 25/02

(54) **FAHRRAD-SCHALTWERK UND ANBINDUNG EINES SCHALTWERKS AN EINEM FAHRRAD-RAHMEN**
BICYCLE GEAR SYSTEM AND CONNECTION OF A GEAR SYSTEM TO A BICYCLE FRAME
DÉRAILLEUR DE BICYCLETTE ET RACCORDEMENT D'UN DÉRAILLEUR À UN CADRE DE BICYCLETTE

(30) Priorität: 18.12.2019 DE 102019008796; 03.12.2020 DE 102020132208
(43) Veröffentlichungstag der Anmeldung: 23.06.2021
(73) Patentinhaber: SRAM Deutschland GmbH, 97424 Schweinfurt (DE)
(72) Erfinder: Braedt, Henrik, 97456 Dittelbrunn/OT Hambach (DE); Heyna, Sebastian, 97456 Dittelbrunn/OT Hambach (DE)

(56) Entgegenhaltungen:
- EP-A1- 3 556 643
- DE-A1-102008 064 057
- US-A1- 2013 241 175
- US-A1- 2016 039 494

## Beschreibung

### Technischer Hintergrund

Ein Fahrrad kann mit einer Antriebsanordnung, wie z.B. einem Kettenantrieb, ausgestattet sein. Fahrrad-Antriebsanordnungen können verwendet werden, um das Drehmoment von einem Fahrer auf ein hinteres Laufrad zu übertragen, um das Fahrrad anzutreiben. Eine Antriebsanordnung kann zum Beispiel das Drehmoment von einer vorderen Kettenradanordnung über eine Kette auf ein hinteres Kettenrad oder Ritzel, etwa ein Ritzel einer sog. Ritzelkassette oder eines sog. Ritzelpakets, übertragen, um ein hinteres Laufrad anzutreiben. Eine solche Antriebsanordnung kann als Antriebsstrang bezeichnet werden.

Kettenradbaugruppen für Fahrräder können ein oder mehrere einzelne Kettenräder aufweisen. Die vorderen Kettenräder werden allgemein als Kettenblätter bezeichnet. Kettenblätter können mit Hilfe verschiedenartiger Befestigungsvorrichtungen befestigt werden. Ein Kettenblatt kann z.B. mit Kettenblattschrauben befestigt oder direkt an der Kurbel eines Fahrrades montiert werden. Die hinteren Kettenräder werden häufig als Ritzel bezeichnet. Eine Mehrzahl von hinteren Kettenrädern oder Ritzeln kann als Kassette, Ritzelkassette oder Ritzelpaket bezeichnet werden. Eine solche Kassette ist typischerweise so konfiguriert, dass sie an einem Freilaufteil eines hinteren Laufrades befestigt werden kann. Eine Kassette kann z.B. an einem Freilaufkörper eines Hinterrades mit Hilfe einer Keil- und/oder Gewindeverbindung befestigt werden.

Die Ausrichtung einer vorderen Kettenblattgruppe mit einer hinteren Ritzelkassette beeinflusst die Leistung der Kette. Zum Beispiel kann eine vordere Kettenblattbaugruppe ein einziges Kettenblatt aufweisen, welches nach einem bestimmten Ritzel der hinteren Ritzelkassette ausgerichtet ist. Wenn die Kette das einzelne Kettenblatt mit diesem im Wesentlichen ausgerichteten einzelnen hinteren Ritzel verbindet, steht die Kette unter geringer oder keiner seitlichen Belastung. Wenn die Kette jedoch seitlich zu einem anderen Ritzel der Kassette bewegt wird, z.B. durch einen hinteren Umwerfer oder ein hinteres Schaltwerk einer Kettenschaltung des Antriebsstrangs, erfährt die Kette eine gewisse seitliche Belastung. Entsprechende seitliche Belastungen der Kette treten auf, wenn die vordere Kettenblattbaugruppe mehrere Kettenblätter aufweist, zwischen denen die Kette durch einen vorderen Umwerfer oder ein vorderes Schaltwerk der Kettenschaltung bewegt wird.

Für eine gute Leistung einer solchen Kettenschaltung ist die Funktions- und Leistungsfähigkeit des im Fachgebiet auch als hinterer Fahrradderailleur oder hinteres Schaltwerk bezeichneten hinteren Umwerfers von besonderer Bedeutung. Dieser dient nicht nur zum Durchführen von Schaltvorgängen durch Umwerfen der Kette zwischen mehreren benachbarten Ritzeln des Ritzelsatzes des Fahrrads. Eine weitere, ebenfalls sehr wichtige Funktion des hinteren Umwerfers ist die Gewährleistung einer ausreichenden Kettenspannung.

Ein hinteres Schaltwerk hat hierzu regelmäßig den folgenden Aufbau. Es ist ein in Fachgebiet auch als B-Knuckle bezeichnetes Basiselement vorgesehen, mit dem das Schaltwerk an dem Fahrrad montiert wird. Ferner gibt es ein im Fachgebiet auch als P-Knuckle bezeichnetes bewegliches Element, welches beweglich an das Basiselement gekoppelt ist, und eine regelmäßig als sog. Kettenkäfig ausgeführte Kettenführung, die an das bewegliche Element zur Rotation bezüglich einer Rotationsachse beweglich gekoppelt ist. Das bewegliche Element ist in seitlicher (axialer) Richtung beweglich, um die Kettenführung entlang der Ritzel des Ritzelsatzes zu bewegen, so dass die Kette von einem Ausgangsritzel zu einem Zielritzel überführt werden kann. Die Kettenführung ist durch eine Spannfeder oder dergleichen elastisch in einer Rotationsrichtung vorgespannt, nämlich in Richtung einer Spannung der mittels der Kettenführung geführten Kette des Fahrrads, um die Kette im gespannten Zustand zu halten bzw. den gespannten Zustand nach vorangehendem Zustand der ungenügenden Kettenspannung wiederherzustellen. Diese Rotations- oder Schwenkrichtung wird hier auch als "Kettenspannrichtung" angesprochen. Eine Verdrehung der Kettenführung in dieser Richtung erhöht die Kettenspannung und verringert gleichzeitig die Spannung der auf die Kettenführung wirkenden Spannfeder.

Je nach momentanem Ritzel des Ritzelsatzes, mit dem die Kette zu einem gegebenen Zeitpunkt eingreift, wird die Kettenführung unterschiedliche Schwenkpositionen relativ zum beweglichen Element bezüglich der Rotationsachse einnehmen.

Einwirkungen auf die Kette und die Kettenführung ergeben sich nicht nur aus dem Schalten der Kettenschaltung durch Überführung der Kette zwischen verschiedenen Ritzeln des Ritzelsatzes, sondern auch aus dem Fahrbetrieb selbst. So sind das Schaltwerk und die Kette etwa beim Fahren auf unebenem Gelände Schlägen und Erschütterungen ausgesetzt, die auf die Kettenführung in einer zur "Kettenspannrichtung" entgegengesetzten Schwenkrichtung wirken können. Eine Verdrehung der Kettenführung in dieser zur "Kettenspannrichtung" entgegengesetzten Richtung vergrößert die Spannung der auf die Kettenführung wirkenden Spannfeder und führt unmittelbar zu einer Reduzierung der Kettenspannung (etwa wenn eine unmittelbare Einwirkung auf die Kettenführung diese in dieser Richtung verdreht) oder zumindest zu einer erheblichen Gefahr einer nachfolgenden Reduzierung der Kettenspannung unter das notwendige Maß. Negative Folge können Spannungsabfälle der Kette mit unerwünschtem Spiel bzw. "Schlackern" der Kette sein, im Extremfall hin bis zu einem Abspringen der Kette von dem Ritzelsatz.

Für eine gute Leistung einer solchen Kettenschaltung ist auch eine richtige Positionierung und Ausrichtung speziell des hinteren Schaltwerks am Rahmen des Fahrrads von großer Bedeutung. Es wurde erkannt, dass koaxiale Ausrichtungsmerkmale bei der Antriebsanordnung angewendet werden können. Beispielsweise kann eine einzelne Komponente als Referenz für die Ausrichtung verschiedener anderer Komponenten der Antriebsanordnung dienen. Beispielsweise können sowohl ein Schaltwerk als auch eine Kassette koaxial zu einer Achse ausgerichtet bzw. montiert sein. Die Ausrichtung einer Komponente des Antriebsstrangs, wie des Schaltwerks zu dieser Achse, kann die Ungenauigkeiten bei verschiedenen Anwendungen aufgrund von Toleranzvariationen der Räder oder des Rahmens reduzieren. Die koaxiale Ausrichtung des Schaltwerks mit der Radachse bzw. Kassette kann auch einen gleichmäßigen radialen Abstand zwischen Teilen des Schaltwerks und der Kassette über verschiedene Schwenkwinkel des Schaltwerks hinweg erleichtern.

Die Antriebsanordnung kann auch für Steifigkeit konfiguriert werden, um die Präzision zu erhöhen oder/und die relative Ausrichtung von Komponenten zu verbessern. Beispielsweise können einschlägige Komponenten und Elemente des hinteren Schaltwerks, der Hinterradachsanordnung mit der Hinterradnabe und der Ritzelkassette des hinteren Laufrads und die diesen zugeordneten Rahmenschnittstellen des Hinterbaus des Fahrradrahmens so in Bezug aufeinander konfiguriert werden, dass einerseits das Schaltwerk zuverlässig und in höchstens unschädlichem Ausmaß abhängig von Toleranzen richtig relativ zu der Ritzelkassette und der über diese laufende Kette am Rahmen positioniert und montiert ist und zugleich eine gute Steifigkeit erreicht wird, so dass diese richtige Positionierung auch im Fahrbetrieb trotz ggf. größerer und wechselnder Belastungen, je nach dem Untergrund auf dem gefahren wird, erhalten bleibt.

So ist eine entsprechend aufeinander abgestimmte Konfiguration des sog. B-Knuckle (oder Basiselements) eines hinteren Schaltwerks, also derjenigen Teilkomponente eines hinteren Schaltwerks, die an einer zugeordneten Rahmenschnittstelle montiert wird, des Hinterbaus des Fahrradrahmens und speziell dessen Rahmenschnittstellen, an denen die Hinterradachsordnung des hinteren Laufrads und das hintere Schaltwerk montiert wird, und der Hinterradachsanordnung möglich, um Anforderungen unter den angesprochenen Zielsetzungen der richtigen Positionierung und Ausrichtung, Präzision und Steifigkeit gerecht zu werden.

Wichtige andere Anforderungen und für die Praxis wichtige Eigenschaften eines hinteren Schaltwerks, unabhängig davon, ob dieser mit einer Dämpfungseinrichtung ausgeführt ist oder nicht, betreffen dessen Abmessungen, Toleranzketten, eine eine definierte Beweglichkeit des Kettenkäfigs relativ zum beweglichen Element (P-Knuckle) erreichende Drehlagerung des Kettenkäfigs, Dichtigkeit, Robustheit, Betriebssicherheit sowie Montage und Wartung.

Vor diesem technischen Hintergrund betrifft die vorliegende Erfindung allgemein ein hinteres Schaltwerk einer Fahrradkettenschaltung und die Art und Weise der Montage des hinteren Schaltwerks in Relation zu einer Hinterradachse an einem Fahrradrahmen, und damit auch einen eine geeignete Rahmenschnittstelle für das hintere Schaltwerk aufweisenden Fahrradrahmen.

### Stand der Technik

Herkömmlich wurden hintere Schaltwerke am rechten Ausfallende des Rahmens mit Hilfe eines gegenüber dem Rahmen gesonderten oder zum Rahmen zugehörigen Schaltauges montiert, und zwar in radialer Richtung versetzt gegenüber der Hinterradachse und damit nicht-koaxial in Bezug auf die Hinterradachse.

Das Schaltauge wird dazu an seinem einen Ende koaxial mit der Hinterradachse am Rahmen festgelegt und an seinem anderen Ende mit dem Basiselement (B-Knuckle) des Schaltwerks verbunden. Das Basiselement ist typischerweise relativ zum Schaltauge um die B-Achse drehbar. Schaltaugen unterscheiden sich je nach Rahmenhersteller und Anbringungsart stark voneinander. Sie können einteilig mit dem Rahmen ausgebildet sein oder als separates Bauteil vorliegen. Separate Schaltaugen können entweder über Schnellspannachsen oder über Steckachsen am Rahmen geklemmt und/oder zusätzlich mit dem Rahmen verschraubt sein. Sowohl die Klemmung auf der Rahmenaußenseite, als auch auf der Rahmeninnenseite ist möglich. Das kann u.a. dazu führen, dass das Schaltwerk je nach verwendetem Schaltauge eine andere Position relativ zur Hinterradachse und auch zum Ritzelpaket einnimmt. Diese Positionsunterschiede in axialer als auch in radialer Richtung machen die Schaltwerksauslegung und dessen Montage kompliziert. Das Schaltwerk muss je nach Schaltauge neu eingestellt werden. Durch das zusätzliche Schaltauge kommen Toleranzen hinzu, die sich negativ auf die Positionierungsgenauigkeit des Schaltwerks auswirken.

Außerdem sind Schaltaugen, gerade als separate Bauteile, schadensanfällig und oftmals instabil. Bei großen Ritzelpaketen und entsprechend großen Schaltwerksdimensionen treten erhöhte Hebelkräfte auf, die von einem austauschbaren Schaltauge nur ungenügend aufgenommen werden können. Darüber hinaus wirken sich die vergrößerten Schaltwerksdimensionen mit den verlängerten Hebelverhältnissen zusätzlich negativ auf die Positionierungsgenauigkeit des Schaltwerks aus. Im Konflikt dazu steht, dass gerade eine erhöhte Anzahl von eng nebeneinander angeordneten Ritzeln eine erhöhte Positionierungsgenauigkeit verlangt

Im Hinblick auf diese und andere Nachteile solch einer Montage des hinteren Schaltwerks am Rahmen hat die Anmelderin SRAM Deutschland GmbH einen neuen Typ eines hinteren Schaltwerks zur in Bezug auf die Hinterradachse koaxialen Montage an einem entsprechend ausgestalteten Fahrradrahmen entwickelt, auf welches anhängige Patentanmeldungen gerichtet sind.

Der Fahrradrahmen weist eine spezielle Schnittstelle zur sog. koaxialen Montage eines speziellen hinteren Schaltwerks auf, die zugleich, unter Mitwirkung eines Rahmenadapters des hinteren Schaltwerks, als Rahmenschnittstelle für die Hinterachsanordnung auf der einen axialen Rahmenseite dient. Ferner sind diese Rahmenschnittstelle, einschließlich Basiselement (B-Knuckle) und Rahmenadapter, und die Rahmenschnittstelle auf der anderen axialen Rahmenseite für die Hinterachsanordnung einerseits, sowie die Hinterachsanordnung anderseits bei diesem neuen Typ des hinteren Schaltwerks erstmalig besonders geeignet in Bezug aufeinander konfiguriert. Hierdurch werden nicht nur die genannten Nachteile überwunden, sondern es kann überdies eine hinreichende oder gar sehr gute Steifigkeit der Anordnung des Schaltwerks an seiner Rahmenschnittstelle erreicht werden. Es kann zuverlässig den eingangs angesprochenen Zielsetzungen der richtigen Positionierung, Ausrichtung und Präzision entsprochen werden.

Hierzu kann auf den folgenden Stand der Technik verwiesen werden: Aus der EP 3 388 324 A2 (nachstehend abgekürzt als EP'324) sowie aus der DE 10 2018 001 253 A1 (nachstehend abgekürzt als DE'253) sind ein Fahrrad-Schaltwerk für die koaxiale Montage relativ zu einer Fahrrad-Hinterradachse bekannt. Weitere Lösungen für eine koaxiale Schaltwerksanbindung sind aus der EP 3 712 052 A1 (nachstehend abgekürzt als EP'052) und der DE 10 2020 201 229 A1 (nachstehend abgekürzt als DE'229) bekannt.

Um angesichts dieser Vorteile alternativ auch herkömmliche Schaltwerke an einem Fahrradrahmen mit einer solchen speziellen Rahmenschnittstelle montieren zu können, hat die Anmelderin SRAM Deutschland GmbH geeignete Adapter in Form spezieller Schaltaugen entwickelt, die der englischen Fachsprache als "hanger" bezeichnet werden und die hier entsprechend ihrer Funktion auch als Halterungselement angesprochen werden.

Hierzu kann auf den folgenden Stand der Technik verwiesen werden: Aus der gattungsgemäßen EP 3 556 643 A1 (nachstehend abgekürzt als EP'643) und der DE 10 2018 206 104 A1 (nachstehend abgekürzt als DE'104) sowie aus der EP 3 670 315 A2 (nachstehend abgekürzt als EP'315) und der DE 10 2018 222 834.5 (nachstehend abgekürzt als DE'834) sind derartige spezielle Schaltaugen zur Montage von hinteren Fahrrad-Schaltwerken an die vorgenannten speziellen Fahrradrahmen in verschiedenen Varianten bekannt.

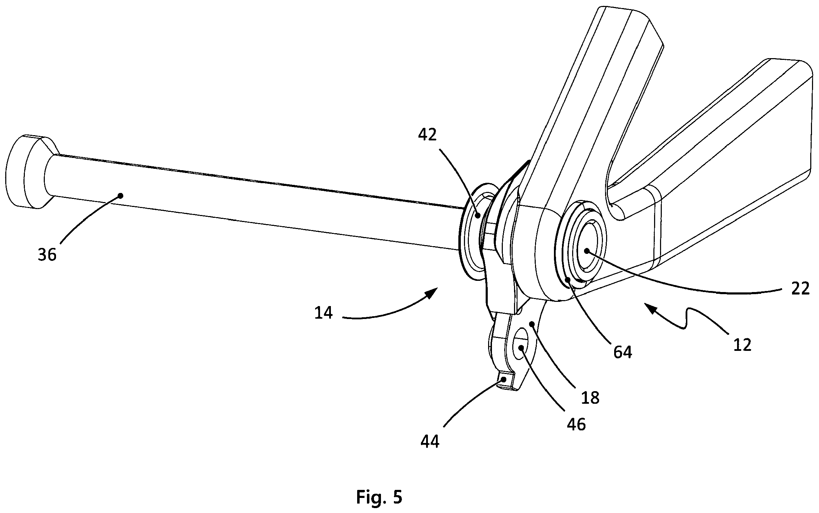

In der EP'324 wird, wie im Detail aus den dortigen Fig. 5 bis 8 ersichtlich, ein Adapter bzw. Achsbolzen 60 mit einem rechten Ausfallende bzw. Rahmenauge des Hinterbaus eines Fahrradrahmens so verschraubt, dass die zu dem Achsbolzen 60 gehörige Adaptermutter 66 (dort auch bezeichnet als Rändelscheibe bzw. Anschlagscheibe) mittels ihrer stirnseitigen Rändelung durch form- bzw. reibschlüssige Anlage an der Innenseite des rechten Rahmenauges eine definierte rotatorische Winkelstellung relativ zu dem Rahmenauge erhält.

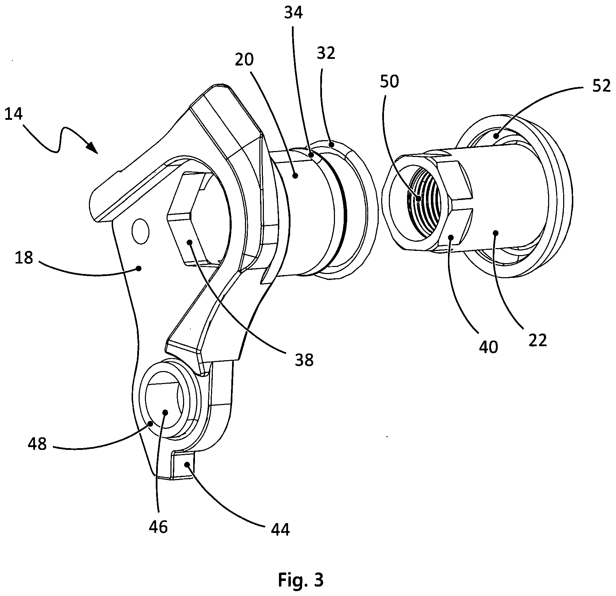

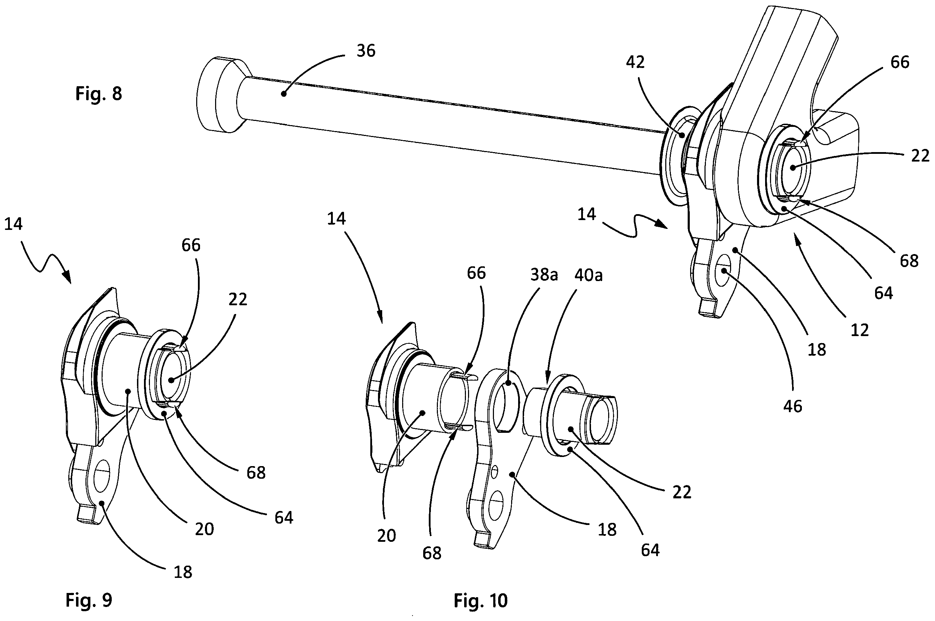

Mittels dieser definierten rotatorischen Winkelstellung der Adaptermutter 66 lässt sich durch Anschlag des Basiselements (sog. B-Knuckle) des Schaltwerks an rotatorischen Anschlagsvorsprüngen 68a/b der Adaptermutter 66 (vgl. Fig. 8 der EP'324) eine entsprechende rotatorische Schwenkposition des Schaltwerks bezogen auf die Fahrrad-Hinterachse bzw. auf das Ausfallende einstellen und fixieren. Hierdurch erhält die Fahrradkette die gewünschte bzw. für optimale Schaltfunktion erforderliche Kettenspannung mittels der üblicherweise zwischen P-Knuckle und Kettenkäfig angeordneten Torsionsfeder (vgl. z.B. Fig. 3 der EP'324).

Ein Ablauf dieses Einstellvorgangs zur Herstellung der gewünschten Kettenspannung bzw. des hierzu erforderlichen sog. Chain-Gap (Abstand zwischen oberem Kettenführungsröllchen und Referenzritzel) ist in der EP'324 insbesondere in den Absätzen [0088] bis [0095] in Bezug auf die dortigen Fig. 10 bis 12 beschrieben.

Die DE'834 beschreibt Universal-Schaltaugen (sog. Universal Derailleur Hanger, nachstehend abgekürzt als UDH) zur Montage von konventionellen Schaltwerken an Fahrrad-Hinterbauten.

Ausgehend von dem vorgenannten Stand der Technik werden unter anderem alternative Lösungen zur Anbindung von Fahrrad-Schaltwerken an das Rahmenauge bzw. Ausfallende eines Fahrradrahmen-Hinterbaus bereitgestellt. Bevorzugte Ausführungsformen dieser alternativen Lösungen sind in den beigefügten Figuren dargestellt und nachstehend beschrieben.

Gemäß einem unabhängigen ersten Aspekt schlägt die Erfindung ein Montageset vor, umfassend ein Halterungselement mit einem zugeordneten Halterungsbolzen, welche dafür eingerichtet sind, an einem Halterungsabschnitt eines Fahrradrahmens montiert zu werden, wobei das Halterungselement weiter dafür eingerichtet ist, ein hinteres Schaltwerk einer Kettenschaltung an dem Halterungsabschnitt zu montieren, wobei das Halterungselement umfasst:
- einen ersten Abschnitt, welcher eine Durchgangsöffnung aufweist, welche einer Montageöffnung des Halterungsabschnitts zugeordnet und im an einer Innenseite des Halterungsabschnitts montierten Zustand des Halterungselements zu dieser koaxial ist;
- einen zweiten Abschnitt, welcher eine Montageöffnung aufweist, mittels der ein Basiselement des hinteren Schaltwerks an einer Außenseite des zweiten Abschnitts montierbar oder montiert ist;
- eine mit dem ersten Abschnitt integrale oder an diesem angebrachte, vom ersten Abschnitt axial vorstehende Einführhülse, welche von der Innenseite des Halterungsabschnitts in die Montageöffnung des Halterungsabschnitts einführbar oder eingeführt ist, und in die von einer Außenseite des Halterungsabschnitts der Halterungsbolzen einführbar oder eingeführt ist, und die einen sich an die Durchgangsöffnung anschließenden Durchgang aufweist;

wobei die Einführhülse mit dem in diese eingeführten Halterungsbolzen in einen axiale Kräfte zwischen dem Halterungsbolzen und der Einführhülse abstützenden formschlüssigen Halteeingriff bringbar oder gebracht ist, um das Halterungselement und den Halterungsbolzen an dem Halterungsabschnitt zu halten;
und wobei der Halterungsbolzen mit einem Innengewinde ausgeführt ist, in welches ein Außengewinde an einem freien Ende einer durch die Durchgangsöffnung des ersten Abschnitts hindurchgeführten Steckachse einer Hinterrad-Achsanordnung des Fahrrads einschraubbar oder eingeschraubt ist, um das Halterungselement mit dem Halterungsbolzen an dem Halterungsabschnitt zu fixieren.

Erfindungsgemäß zeichnet sich dieses Montageset dadurch aus, dass wenigstens ein Element von der Einführhülse und dem Halterungsbolzen mit wenigstens einer Eingriffsformation ausgeführt ist, welche dafür eingerichtet ist, zusammen mit wenigstens einem gegenüber der Einführhülse und dem Halterungsbolzen gesonderten Gegeneingriffselement oder einer Gegeneingriffsformation des jeweils anderen Elements von der Einführhülse und dem Halterungsbolzen eine elastische Einschnapp-Halteverbindung oder eine bajonettartige Halteverriegelung herzustellen, die den formschlüssigen Halteeingriff realisiert. Dabei kann vorgesehen sein, dass die wenigstens eine Eingriffsformation und die wenigstens eine Gegeneingriffsformation unter Mitwirkung des wenigstens einen Gegeneingriffselements (wenn ein solches vorgesehen ist) die elastische Einschnapp-Halteverbindung bzw. die bajonettartige Halteverriegelung herstellen. Es kommt aber auch ein direkter Eingriff zwischen der wenigstens einen Eingriffsformation und der wenigstens einen Gegeneingriffsformation in Betracht, ohne Mitwirkung eines gesonderten Gegeneingriffselements,

So wird eine Vormontage der Einführhülse mit dem Halterungsbolzen am Rahmen wesentlich erleichtert.

Weiterbildend wird vorgeschlagen, dass der Halterungsbolzen mit einem nicht-rotationssymmetrischen Einsteckabschnitt oder mit wenigstens einer Mitnahmeformation am Einsteckabschnitt ausgeführt ist, der in die komplementär bzw. mit wenigstens einer Gegenmitnahmeformation ausgeführte Durchgangsöffnung oder den komplementär bzw. mit wenigstens einer Gegenmitnahmeformation ausgeführten Durchgang des Halterungselements drehfest eingreift.

Bevorzugt ist vorgesehen, dass die Durchgangsöffnung und die Montageöffnung in einem aus Metall ausgeführten laschenförmigen Bereich des Halterungselements ausgeführt sind und dass ein aus Kunststoff ausgeführter Bereich des Halterungselements die Einführhülse aufweist.

Man kann vorteilhaft vorsehen, dass als Gegeneingriffselement wenigstens ein elastisches Ringelement, vorzugsweise wenigstens ein O-Ring, vorgesehen ist, welches zwischen einem Innenumfangsabschnitt eines Elements von der Einführhülse und dem Halterungsbolzen und einem Außenumfangsabschnitt des anderen Elements von der Einführhülse und dem Halterungsbolzen aufnehmbar oder aufgenommen ist, wobei wenigstens ein Element von der Einführhülse und dem Halterungsbolzen an dem Innenumfangsabschnitt bzw. Außenumfangsschnitt mit einer Eingriffsformation ausgeführt ist, in die das Ringelement zur Herstellung des formschlüssigen Halteeingriffs einschnappen kann oder eingeschnappt ist.

Weiterbildend wird vorgeschlagen, dass die Einführhülse an einem Außenumfangsbereich an einem aus der Montageöffnung des Halterungsabschnitts außenseitig vorstehenden Endbereich die Eingriffsformation aufweist, dass der Halterungsbolzen an einem aus der Montageöffnung des Halterungsabschnitts außenseitig vorstehenden freien Endbereich mit einem in Richtung zum Halterungsabschnitt vorkragenden Flanschbereich ausgeführt ist, welcher an einem Innenumfangsbereich eine weitere Eingriffsformation aufweist, und dass das Ringelement zur Herstellung des formschlüssigen Halteeingriffs in die beiden Eingriffsformationen einschnappen kann oder eingeschnappt ist.

Eine besonders vorteilhafte Ausführungsform zeichnet sich dadurch aus, dass die Einführhülse an einem Innenumfangsbereich die Gegeneingriffsformation aufweist, welche zur Herstellung des formschlüssigen Halteeingriffs in die Eingriffsformation an einem Außenumfangsbereich des Halterungsbolzens einschnappen kann oder eingeschnappt ist, oder dass der Halterungsbolzen an einem Außenumfangsbereich die Gegeneingriffsformation aufweist, welche zur Herstellung des formschlüssigen Halteeingriffs in die Eingriffsformation an einem Innenumfangsbereich der Einführhülse einschnappen kann oder eingeschnappt ist.

Dabei kann man zweckmäßig vorsehen, dass die Eingriffsformation und die Gegeneingriffsformation an einem aus der Montageöffnung des Halterungsabschnitts außenseitig vorstehenden Endbereich der Einführhülse bzw. des Halterungsbolzens vorgesehen sind.

Eine andere vorteilhafte Ausführungsform zeichnet sich dadurch aus, dass die Einführhülse an einem aus der Montageöffnung des Halterungsabschnitts außenseitig vorstehenden Endbereich wenigstens ein axial vorstehendes Schnappelement aufweist, welches dafür eingerichtet ist, zur Herstellung des formschlüssigen Halteeingriffs mit einem nach radial innen vorstehenden Umgreifabschnitt außenseitig eines außenseitigen Endbereichs des Halterungsbolzens einzuschnappen und diesen zu umgreifen.

Nach einer anderen vorteilhaften Ausführungsform ist vorgesehen, dass der Halterungsbolzen an einem aus der Montageöffnung des Halterungsabschnitts außenseitig vorstehenden Endbereich mit wenigstens einer Eingriffsformation ausgeführt ist, die mit wenigstens einer Gegeneingriffsformation des gegenüber der Einführhülse und dem Halterungsbolzen gesonderten Gegeneingriffselements durch eine relative Verdrehung formschlüssig verriegelbar oder verriegelt ist, um die den formschlüssigen Halteeingriff realisierende bajonettartige Halteverriegelung herzustellen.

Weiterbildend wird vorgeschlagen, dass der Halterungsbolzen wenigstens einen flanschartig radial vorstehenden Verriegelungsabschnitt als wenigstens eine erste Eingriffsformation und wenigsten eine Aussparung oder Nut an einem Außenumfangsabschnitt des Halterungsbolzen als wenigstens eine zweite Eingriffsformation aufweist und das Gegeneingriffselement eine komplementär zu dem wenigstens einen Verrieglungsabschnitt ausgeführte Verriegelungsöffnung als gemeinsames Gegeneingriffselement für die ersten und zweiten Eingriffsformationen aufweist.

Dabei kann man vorsehen, dass das Gegeneingriffselement in einer ersten relativen Drehstellung mit der Verriegelungsöffnung auf den außenseitig vorstehenden Endbereich des Halterungsbolzens aufschiebbar oder aufgeschoben oder von diesem abschiebbar ist und durch Verdrehen aus der ersten relativen Drehstellung in wenigstens eine als Verriegelungsdrehstellung dienende zweite relative Drehstellung mit dem Gegeneingriffselement verriegelbar oder verriegelt ist, wobei in der Verriegelungsdrehstellung der wenigstens eine Verriegelungsabschnitt einen die Verriegelungsöffnung begrenzenden Abschnitt des Gegeneingriffselement umgreift und ein die Verriegelungsöffnung begrenzender Randabschnitt des Gegeneingriffselements mit der Aussparung oder Nut des Halterungsbolzens formschlüssig eingreift. Weiterbildend wird vorgeschlagen, dass das Gegeneingriffselement als zusätzliches Hilfs-Halterungselement ausgeführt ist, welches einen die Gegeneingriffsformation aufweisenden ersten Abschnitt und einen eine Koppelformation aufweisenden zweiten Abschnitt aufweist, wobei die Koppelformation gegenüber der Gegeneingriffsformation radial versetzt ist und mit einer Gegenkoppelformation des Basiselements des hinteren Schaltwerks oder mit einem das Basiselement mittels der Montageöffnung am Halterungselement montierenden Montagebolzen koppelbar oder gekoppelt ist.

Gemäß einem unabhängigen nicht beanspruchten zweiten Aspekt wird ein Montageset bereitgestellt, umfassend ein Halterungselement mit einem zugeordneten Halterungsbolzen, welche dafür eingerichtet sind, an einem Halterungsabschnitt eines Fahrradrahmens montiert zu werden, wobei das Halterungselement weiter dafür eingerichtet ist, ein hinteres Schaltwerk einer Kettenschaltung an dem Halterungsabschnitt zu montieren,
wobei das Halterungselement umfasst:
- einen ersten Abschnitt, welcher eine Durchgangsöffnung aufweist, welche einer Montageöffnung des Halterungsabschnitts zugeordnet und im an einer Innenseite des Halterungsabschnitts montierten Zustand des Halterungselements zu dieser koaxial ist;
- einen zweiten Abschnitt, welcher eine Montageöffnung aufweist, mittels der ein Basiselement des hinteren Schaltwerks an einer Außenseite des zweiten Abschnitts montierbar oder montiert ist;
- eine mit dem ersten Abschnitt integrale oder an diesem angebrachte, vom ersten Abschnitt axial vorstehende Einführhülse, welche von der Innenseite des Halterungsabschnitts in die Montageöffnung des Halterungsabschnitts einführbar oder eingeführt ist, und in die von einer Außenseite des Halterungsabschnitts der Halterungsbolzen einführbar oder eingeführt ist, und die einen sich an die Durchgangsöffnung anschließenden Durchgang aufweist;
   wobei die Einführhülse mit dem in diesen eingeführten Halterungsbolzen in einen axiale Kräfte zwischen dem Halterungsbolzen und der Einführhülse abstützenden formschlüssigen Halteeingriff bringbar oder gebracht ist, um das Halterungselement und den Halterungsbolzen an dem Halterungsabschnitt zu halten;
   und wobei der Halterungsbolzen mit einem Innengewinde ausgeführt ist, in welches ein Außengewinde an einem freien Ende einer durch die Durchgangsöffnung des ersten Abschnitts hindurchgeführten Steckachse einer Hinterrad-Achsanordnung des Fahrrads einschraubbar oder eingeschraubt ist, um das Halterungselement mit dem Halterungsbolzen an dem Halterungsabschnitt zu fixieren.

Es ist vorgesehen, dass das Montageset ein zusätzliches Hilfs-Halterungselement aufweist, welches einen eine erste Koppelformation aufweisenden ersten Abschnitt und einen eine zweite Koppelformation aufweisenden zweiten Abschnitt aufweist, wobei die erste Koppelformation mit einem aus der Montageöffnung des Halterungsabschnitts außenseitig vorstehenden Endbereich des Halterungsbolzens koppelbar oder gekoppelt ist, und wobei die zweite Koppelformation gegenüber der ersten Koppelformation radial versetzt ist und mit einer Gegenkoppelformation des Basiselements des hinteren Schaltwerks oder mit einem das Basiselement mittels der Montageöffnung am Halterungselement montierenden Montagebolzen gekoppelt oder koppelbar ist.

Es wird eine deutliche Versteifung der Halterung des Basiselements des hinteren Schaltwerkes und damit des hinteren Schaltwerks selbst an dem Ausfallende mittels des Halterungselements und mit Hilfe des Hilfs-Halterungselements erreicht. Nach diesem Lösungsvorschlag nähert sich die erzielte Steifigkeit bekannten Lösungen mit einer zweiarmigen koaxialen Anbindung des Basiselements an, wie eingangs diskutiert. Es werden somit entsprechende Vorteile auch für an sich konventionelle Schaltwerke der angesprochenen Art erreicht bzw. können erreicht werden.

Der Vorschlag nach dem zweiten nicht beanspruchten Aspekt kann mit den Erfindungs- und Weiterbildungsvorschlägen nach dem ersten Aspekt der Erfindung kombiniert werden.

Man kann zweckmäßig vorsehen, dass die Durchgangsöffnung und die Montageöffnung in einem aus Metall ausgeführten laschenförmigen Bereich des Halterungselements ausgeführt sind und dass ein aus Kunststoff ausgeführter Bereich des Halterungselements die Einführhülse aufweist.

Betreffend das Hilfs-Halterungselement wird vorgeschlagen, dass dieses ein laschenförmiges Metallelement umfasst, welches den ersten Abschnitt und den zweiten Abschnitt des Hilfs-Halterungselements aufweist.

Zweckmäßig kann man vorsehen, dass wenigstens eine von der ersten Koppelformation und der zweiten Koppelformation als Öffnung ausgeführt ist, durch welche der Halterungsbolzen bzw. der Montagebolzen hindurchführbar bzw. hindurchgeführt ist.

Dabei kann weiter vorgesehen sein, dass der Halterungsbolzen bzw. der Montagebolzen wenigstens einen außenseitig einen Rand der Öffnung umgreifenden Flanschabschnitt aufweist.

Weiter wird vorgeschlagen, dass in einem dem Montagebolzen zugeordneten Durchgang des Basiselements eine Lagerbuchse aufgenommen oder aufnehmbar ist, die axiale Klemmkräfte des festgezogenen Montagebolzens abstützt, um eine Verschwenkbarkeit des Basiselements relativ zu dem Halterungselement und dem Hilfs-Halterungselement vorzusehen. Alternativ kann vorsehen, dass das Basiselement im Bereich eines dem Montagebolzen zugeordneten Durchgangs axial derart dimensioniert ist, dass auf das Basiselement axiale Klemmkräfte des festgezogenen Montagebolzens wirken.

Bei einer anderen vorteilhaften nicht beanspruchten Ausführungsform ist vorgesehen, dass wenigsten eine von der ersten Koppelformation und der zweiten Koppelformation als axial vorstehender Koppelvorsprung ausgeführt ist, welcher in eine als Gegenkoppelformation dienende zugeordnete Koppelöffnung des Halterungsbolzens bzw. des Montagebolzens oder des Basiselements axial einführbar oder eingeführt ist.

Weiterbildend wird vorgeschlagen, dass der in die Koppelöffnung des Montagebolzens eingeführte Koppelvorsprung eine Schrauböffnung aufweist, in welche von Seiten des zweiten Abschnitts des Halterungselements durch die dortige Montageöffnung eine Befestigungsschraub einschraubbar oder eingeschraubt ist.

Eine allgemein vorteilhafte Lösung zeichnet sich dadurch aus, dass wenigsten eine von der ersten Koppelformation und der zweiten Koppelformation als Öffnung ausgeführt ist, durch welche eine Befestigungsschraube hindurchführbar bzw. hindurchgeführt ist, welche in eine Befestigungsschrauböffnung des Halterungsbolzens bzw. des Montagebolzen oder des Basiselements oder eines in den Halterungsbolzen bzw. den Montagebolzen oder das Basiselement aufgenommenen Gewindeeinsatzes einschraubbar bzw. eingeschraubt ist.

Gemäß einem unabhängigen nicht beanspruchten dritten Aspekt wird ein Montageset bereitgestellt, umfassend ein Halterungselement mit einem zugeordneten Halterungsbolzen, welche dafür eingerichtet sind, an einem Halterungsabschnitt eines Fahrradrahmens montiert zu werden, wobei das Halterungselement weiter dafür eingerichtet ist, ein hinteres Schaltwerk einer Kettenschaltung an dem Halterungsabschnitt zu montieren,
wobei das Halterungselement umfasst:
- einen ersten Abschnitt, welcher eine Durchgangsöffnung aufweist, welche einer Montageöffnung des Halterungsabschnitts zugeordnet und im an einer Innenseite des Halterungsabschnitts montierten Zustand des Halterungselements zu dieser koaxial ist;
- einen zweiten Abschnitt, welcher eine Montageöffnung aufweist, mittels der ein Basiselement des hinteren Schaltwerks an einer Außenseite des zweiten Abschnitts montierbar oder montiert ist;
und wobei der Halterungsbolzen mit einem Innengewinde ausgeführt ist, in welches ein Außengewinde an einem freien Ende einer durch die Durchgangsöffnung des ersten Abschnitts hindurchgeführten Steckachse einer Hinterrad-Achsanordnung des Fahrrads einschraubbar oder eingeschraubt ist, um das Halterungselement mit dem Halterungsbolzen an dem Halterungsabschnitt zu fixieren.

Es ist vorgesehen, dass das Halterungselement mit einer wenigstens eine manuell betätigbare Verstellschraube aufweisenden Einstelleinrichtung ausgeführt ist, mit der das Halterungselement oder zumindest dessen zweiter Abschnitt wenigstens in einem vormontierten Zustand an dem Halterungsabschnitt des Fahrradrahmens relativ zu der Steckachse in einer Kettenspannrichtung verschwenkbar ist.

Durch diese Ausgestaltung wird die Einstellung der Kettenspannung erleichtert, ohne dass das Schaltwerk selbst eine entsprechende Einstelleinrichtung benötigt.

Der Vorschlag nach dem dritten nicht beanspruchten Aspekt kann mit den Erfindungs- und Weiterbildungsvorschlägen nach dem ersten Aspekt oder/und mit den Weiterbildungsvorschlägen nach dem zweiten Aspekt kombiniert werden. Vorteilhaft kann man vorsehen, dass das Halterungselement eine Schraub-Durchgangsöffnung aufweist, in welche die Verstellschraube einschraubbar oder eingeschraubt ist, um sich und damit das Halterungselement an einer zugeordneten Abstützformation des Fahrradrahmens abzustützen.

Nach einem unabhängigen nicht beanspruchten vierten Aspekt wird eine Kombination aus einem Basiselement eines hinteren Schaltwerks einer Kettenschaltung und einem Montageset vorgeschlagen. Das Montageset umfasst ein Halterungselement mit einem zugeordneten Halterungsbolzen, welche dafür eingerichtet sind, an einem Halterungsabschnitt eines Fahrradrahmens montiert zu werden. Das Halterungselement ist weiter dafür eingerichtet, das Basiselement an dem Halterungsabschnitt zu montieren, wobei das Halterungselement umfasst:
- einen ersten Abschnitt, welcher eine Durchgangsöffnung aufweist, welche einer Montageöffnung des Halterungsabschnitts zugeordnet und im an einer Innenseite des Halterungsabschnitts montierten Zustand des Halterungselements zu dieser koaxial ist;
- einen zweiten Abschnitt, welcher eine Montageöffnung aufweist, mittels der ein Basiselement des hinteren Schaltwerks an einer Außenseite des zweiten Abschnitts montierbar oder montiert ist.

Der Halterungsbolzen ist mit einem Innengewinde ausgeführt, in welches ein Außengewinde an einem freien Ende einer durch die Durchgangsöffnung des ersten Abschnitts hindurchgeführten Steckachse einer Hinterrad-Achsanordnung des Fahrrads einschraubbar oder eingeschraubt ist, um das Halterungselement mit dem Halterungsbolzen an dem Halterungsabschnitt zu fixieren.

Es ist vorgesehen, dass das Basiselement einen eine erste Koppelformation aufweisenden ersten Abschnitt und einen eine zweite Koppelformation aufweisenden zweiten Abschnitt aufweist, wobei die erste Koppelformation mit einem aus der Montageöffnung des Halterungsabschnitts außenseitig vorstehenden Endbereich des Halterungsbolzens koppelbar oder gekoppelt ist, und wobei die zweite Koppelformation gegenüber der ersten Koppelformation radial versetzt ist und direkt oder indirekt mit dem zweiten Abschnitt des Halterungselements unter Nutzung dessen Montageöffnung koppelbar oder gekoppelt ist.

In ähnlicher Weise wie mit dem Hilfs-Halterungselement nach dem zweiten Aspekt wird eine steifere Anbindung des Basiselements und damit des gesamten Schaltwerks am Fahrradrahmen erreicht, die sich der bekannten koaxialen Anbindung mittels eines zweiarmigen Basiselements annähert.

Der Vorschlag nach dem nicht beanspruchten vierten Aspekt kann mit den Erfindungs- und Weiterbildungsvorschlägen nach dem ersten Aspekt oder/und mit den Weiterbildungsvorschlägen nach dem zweiten Aspekt oder/und mit den Weiterbildungsvorschlägen nach dem dritten Aspekt kombiniert werden. Somit kann man vorsehen, dass das Halterungselement mit einer wenigstens eine manuell betätigbare Verstellschraube aufweisenden Einstelleinrichtung ausgeführt ist, mit der das Halterungselement oder zumindest dessen zweiter Abschnitt wenigstens in einem vormontierten Zustand an dem Halterungsabschnitt des Fahrradrahmens relativ zu der Steckachse in einer Kettenspannrichtung verschwenkbar ist.

Alternativ kann das Basiselement selbst so ausgestaltet sein, dass die Kette der Kettenschaltung leicht spannbar ist, wofür im Folgenden Lösungsvorschläge angegeben werden.

Angemerkt sei, dass zweckmäßig ein Montagebolzen zur Montage des Basiselements mittels der Montageöffnung am Halterungselement dienen kann.

Vorteilhaft kann man vorsehen, dass wenigstens eine von der ersten Koppelformation und der zweiten Koppelformation als Durchgangsöffnung ausgeführt ist, durch welche der Halterungsbolzen bzw. ein/der Montagebolzen hindurchführbar bzw. hindurchgeführt ist.

Dabei kann man vorsehen, dass in der dem Montagebolzen zugeordneten Durchgangsöffnung des Basiselements eine Lagerbuchse aufgenommen oder aufnehmbar ist, die axiale Klemmkräfte des festgezogenen Montagebolzens abstützt, um eine Verschwenkbarkeit des Basiselements relativ zu dem Halterungselement vorzusehen. Es kann alternativ aber auch eine Festklemmung des Basiselements relativ zu dem Halterungselement vorgesehen sein.

Mani kann allgemein vorsehen, dass der Halterungsbolzen bzw. der Montagebolzen wenigstens einen außenseitig einen Rand der Durchgangsöffnung umgreifenden Flanschabschnitt aufweist.

Im Hinblick auf die angesprochene Einstellbarkeit der Kettenspannung wird weiterbildend vorgeschlagen, dass wenigstens eine von der ersten Koppelformation und der zweiten Koppelformation als Durchgangsöffnung in Form eines Langlochs ausgeführt ist, durch welche der Halterungsbolzen bzw. ein/der Montagebolzen hindurchführbar bzw. hindurchgeführt ist und welches zumindest in einem vormontierten Zustand eine Verschwenkung des Basiselements relativ zu dem Halterungselement ermöglicht.

Allgemein wird vorgeschlagen, dass die erste Koppelformation oder die zweite Koppelformation als axial vorstehender Koppelvorsprung ausgeführt ist, welcher in eine als Gegenkoppelformation dienende zugeordnete Koppelöffnung des Halterungsbolzens bzw. eines/des Montagebolzens axial einführbar oder eingeführt ist.

Allgemein wird vorgeschlagen, dass wenigstens eine von der ersten Koppelformation und der zweiten Koppelformation als Durchgangsöffnung ausgeführt ist, durch welche eine Befestigungsschraube hindurchführbar bzw. hindurchgeführt ist, welche in eine Befestigungsschrauböffnung des Halterungsbolzens bzw. eines/des Montagebolzens oder eines in den Halterungsbolzen bzw. den Montagebolzen aufgenommenen Gewindeeinsatzes einschraubbar bzw. eingeschraubt ist.

Dabei kann man weiter vorsehen, dass wenigstens eine von der ersten Koppelformation und der zweiten Koppelformation als Durchgangsöffnung in Form eines Langlochs ausgeführt ist, durch welche die Befestigungsschraube hindurchführbar bzw. hindurchgeführt ist und welche zumindest in einem vormontierten Zustand eine Verschwenkung des Basiselements relativ zu dem Halterungselement ermöglicht.

Es bestehen diverse Möglichkeiten für die konkrete Realisierung des Basiselements und der Kombination aus dem Halterungselement und dem Basiselement. So wird daran gedacht, dass zwischen dem Halterungselement und dem Basiselement ein gegenüber diesen gesonderter Abstandshalter vorgesehen ist oder dass das Basiselement mit einem zum Halterungselement axial vorstehenden Abstandshalterabschnitt ausgeführt ist, wobei der Abstandshalter bzw. Abstandshalterabschnitt mit einem Durchgang ausgeführt ist, durch welchen sich der Montagebolzen erstreckt.

Die Kombination kann ferner ein hinteres Schaltwerk umfassen, welches neben dem Basiselement auch einen Schwenkmechanismus, ein bewegliches Element und eine Kettenführungsanordnung aufweist. Auf übliche Weise kann der Schwenkmechanismus das Basiselement mit dem beweglichen Element verbinden, und kann die Kettenführungsanordnung um eine Drehachse drehbar mit dem beweglichen Element verbunden sein.

Nach einem unabhängigen nicht beanspruchten fünften Aspekt wird allgemein auch ein hinteres Schaltwerk zur Montage an einem Fahrradrahmen eines Fahrrads bereitgestellt. Dieses Schaltwerk weist auf:
- ein Basiselement,
- einen Schwenkmechanismus,
- ein bewegliches Element, und
- eine Kettenführungsanordnung;
wobei der Schwenkmechanismus das Basiselement mit dem beweglichen Element verbindet, und die Kettenführungsanordnung um eine Drehachse drehbar mit dem beweglichen Element verbunden ist.

Es ist vorgesehen, dass das Basiselement einen eine erste Koppelformation aufweisenden ersten Abschnitt und einen eine zweite Koppelformation aufweisenden zweiten Abschnitt aufweist, von denen die erste Koppelformation mit einer zu einer Drehachse eines hinteren Laufrads koaxialen Gegenkoppelformation am Fahrradrahmen oder einem am Fahrradrahmen gehaltenen Koppelelement koppelbar oder gekoppelt ist und eine erste Abstützstelle zur direkten oder indirekten Abstützung außenseitig am Fahrradrahmen bildet, und von denen die zweite Koppelformation radial gegenüber der Drehachse versetzt ist und eine zweite Abstützstelle zur direkten oder indirekten Abstützung am Fahrradrahmen bildet. Diesbezüglich wird vor allem daran gedacht, dass die zweite Koppelformation zur direkten oder indirekten Abstützung innenseitig am Fahrradrahmen dient.

Es wird vor allem daran gedacht, dass das hintere Schaltwerk nach dem fünften Aspekt ein Basiselement aufweist, wie in der Kombination nach dem vierten nicht beanspruchten Aspekt enthalten. Das hintere Schaltwerk nach dem fünften Aspekt steht somit im engen inhaltlichen Zusammenhang mit der Kombination nach dem nicht beanspruchten vierten Aspekt. Die Weiterbildungsvorschläge nach dem fünften nicht beanspruchten Aspekt können somit mit den Weiterbildungsvorschläge nach dem vierten nicht beanspruchten Aspekt kombiniert werden.

Die Weiterbildungsvorschläge nach dem vierten und fünften nicht beanspruchten Aspekt können mit den Erfindungs- und Weiterbildungsvorschlägen nach dem ersten Aspekt oder/und mit den Weiterbildungsvorschlägen nach dem zweiten nicht beanspruchten Aspekt oder/und mit den Weiterbildungsvorschlägen nach dem dritten nicht beanspruchten Aspekt kombiniert werden. Es wird diesbezüglich daran gedacht, dass die zweite Koppelformation mittels eines Halterungselements innenseitig am Fahrradrahmen abstützbar oder abgestützt ist, welches die Merkmale des Halterungselements bzw. der Kombination nach den vorangehend behandelten Aspekten aufweist.

Nach einem unabhängigen nicht beanspruchten sechsten Aspekt ein hinteres Schaltwerk zur in Bezug auf eine Hinterradachse koaxialen Montage an einem Fahrrad eines Fahrrads bereitgestellt, welches aufweist:
- ein Basiselement,
- einen Schwenkmechanismus,
- ein bewegliches Element, und
- eine Kettenführungsanordnung;

wobei der Schwenkmechanismus das Basiselement mit dem beweglichen Element verbindet, und die Kettenführungsanordnung um eine Drehachse drehbar mit dem beweglichen Element verbunden ist;
wobei das Basiselement ein erstes Anschlussende zur in Bezug auf die Hinterradachse koaxialen Montage an dem Fahrradrahmen und ein zweites Anschlussende zur Kopplung mit dem Schwenkmechanismus umfasst;
wobei das erste Anschlussende einen ersten Arm und einen zweiten Arm aufweist, die in axialer Richtung voneinander beabstandet angeordnet und zur Montage des Schaltwerks an einem zugeordneten, eine Durchgangs-Montageöffnung aufweisenden Halterungsabschnitt eines Hinterbaus des Fahrradrahmens mittels eines zugehörigen Adapters eingerichtet sind, wobei der Adapter ein Gewinde zur Herstellung einer Schraubverbindung aufweist,
und wobei sich in einem definierten vormontierten Zustand und in einem fertig montierten Zustand der erste Arm auf einer axialen Innenseite des Halterungsabschnitts und der zweite Arm auf einer axialen Außenseite des Halterungsabschnitts befinden.

Es ist vorgesehen, dass der zweite Arm eine Koppelformation aufweist, die direkt oder indirekt mit einer Gegenkoppelformation des am Halterungsabschnitt vormontierten oder nach Positionierung der beiden Arme beidseitig des Halterungsabschnitts von der axialen Innerseite des Halterungsabschnitts her in die Durchgangs-Montageöffnung einzuschiebenden oder eingeschobenen Adapters in Eingriff bringbar ist oder steht.

Nach dieser Lösung wird eine besonders einfache Montage bzw. Vormontage des zweiarmigen Basiselements am Rahmen ermöglicht. Weiterbildend wird vorgeschlagen, dass die Koppelformation als axial vorstehender Koppelvorsprung ausgeführt ist, welcher in eine als Gegenkoppelformation dienende Koppelöffnung des als Halterungsbolzen ausgeführten Adapters in Eingriff bringbar ist oder steht.

Nach einer alternativen Ausgestaltung ist vorgesehen, dass die Koppelformation als Öffnung ausgeführt ist, in welche ein im montierten Zustand vom Halterungsabschnitt vorstehender, als Gegenkoppelformation dienender Abschnitt des als Halterungsbolzen ausgeführten Adapters in Eingriff bringbar ist oder steht.

Eine andere nicht beanspruchte Möglichkeit ist, dass die Koppelformation als Öffnung ausgeführt ist, durch welche eine Befestigungsschraube hindurchführbar bzw. hindurchgeführt ist, welche in eine Befestigungsschrauböffnung des als Halterungsbolzen ausgeführten Adapters einschraubbar oder eingeschraubt ist.

Allgemein wird vorgeschlagen, dass der als Halterungsbolzen ausgeführte Adapter von der axialen Innerseite des Halterungsabschnitts her in die Durchgangs-Montageöffnung einzuschieben oder eingeschoben ist und auf der axialen Außenseite des Halterungsabschnitts durch ein zugeordnetes Sicherungselement axial fixierbar oder fixiert ist.

Zweckmäßig kann man vorsehen, dass das Basiselement ist mit einer wenigstens eine manuell betätigbare Verstellschraube aufweisenden Einstelleinrichtung ausgeführt ist, mit der das Basiselement in wenigstens einem von dem vormontierten Zustand und dem fertig montierten Zustand relativ zu wenigstens einem von dem Adapter und dem Halterungsabschnitt koaxial zur Hinterradachse in einer Kettenspannrichtung verschwenkbar ist.

Diesbezüglich wird weiterbildend vorgeschlagen, dass die Verstellschraube vermittels eines koaxial zu der Durchgangs-Montageöffnung zu positionierenden oder positionierten, im fertig montierten Zustand eine in das Gewinde des Adapters eingeschraubte Steckachse umschließenden Ringteils an einer Abstützformation des Fahrradrahmens abstützbar oder abgestützt ist.

Gemäß einem unabhängigen nicht beanspruchten siebten Aspekt wird ein hinteres Schaltwerk zur in Bezug auf eine Hinterradachse koaxialen Montage an einem Fahrradrahmen eines Fahrrads bereitgestellt, welches aufweist:
- ein Basiselement,
- einen Schwenkmechanismus,
- ein bewegliches Element, und
- eine Kettenführungsanordnung;

wobei der Schwenkmechanismus das Basiselement mit dem beweglichen Element verbindet, und die Kettenführungsanordnung um eine Drehachse drehbar mit dem beweglichen Element verbunden ist;
wobei das Basiselement ein erstes Anschlussende zur in Bezug auf die Hinterradachse koaxialen Montage an dem Fahrradrahmen und ein zweites Anschlussende zur Kopplung mit dem Schwenkmechanismus umfasst;
wobei das erste Anschlussende einen ersten Arm und einen zweiten Arm aufweist, die in axialer Richtung voneinander beabstandet angeordnet und zur Montage des Schaltwerks an einem zugeordneten, eine Durchgangs-Montageöffnung aufweisenden Halterungsabschnitt eines Hinterbaus des Fahrradrahmens mittels eines zugehörigen Adapters eingerichtet sind, wobei der Adapter ein Gewinde zur Herstellung einer Schraubverbindung aufweist;
und wobei sich in einem montierten Zustand der erste Arm auf einer axialen Innenseite des Halterungsabschnitts und der zweite Arm auf einer axialen Außenseite des Halterungsabschnitts befinden.

Es ist vorgesehen, dass das Basiselement eine Stoß-Überlastsicherung in wenigstens einem der Arme oder in einem die Arme aufweisenden Bereich des Basiselements oder einem Zwischenbereich des Basiselements zwischen einem die Arme aufweisenden Bereich des Basiselements und einem mit dem Schwenkmechanismus ausgestatteten Bereich des Basiselements aufweist, welche dafür eingerichtet ist, auf ein eine Auslöseschwelle übersteigende Belastungskraft in Folge einer direkten oder indirekten Stoßeinwirkung auf das Basiselement, anzusprechen, um eine Ausweichbewegung eines/des mit dem Schwenkmechanismus ausgestatteten Bereichs des Basiselements freizugeben.

Ersthafte Beschädigungen des Basiselements bzw. von anderen Teilen des Schaltwerks können so zuverlässig vermieden werden.

Der Vorschlag nach dem siebten nicht beanspruchten Aspekt kann mit den

Weiterbildungsvorschlägen nach dem sechsten Aspekt kombiniert werden und kann auf die Erfindungs- und Weiterbildungsvorschläge und die Ausführungsformen der DE 10 2018 001 253 A1 und der DE 10 2020 201 229 A1 angewendet werden.

Hinsichtlich der konkreten Realisierung der Stoß-Überlastsicherung bestehen grundsätzlich viele Möglichkeiten. Es wird speziell vorgeschlagen, dass die Stoß-Überlastsicherung sich durch wenigstens eines der folgenden Merkmale auszeichnet:
- die Stoß-Überlastsicherung umfasst wenigstens ein Element aus reversibel biegbarem Material;
- die Stoß-Überlastsicherung umfasst wenigstens ein erneuerbares Sollbruchelement;
- die Stoß-Überlastsicherung umfasst wenigstens ein Gelenk;
- die Stoß-Überlastsicherung umfasst wenigstens eine Schnapp- oder Rastverbindung;
- die Stoß-Überlastsicherung umfasst wenigstens eine Kupplung;
- die Stoß-Überlastsicherung umfasst wenigsten eine Markierung, die das Erkennen einer Soll-Positionierung oder Soll-Orientierung oder einer Soll-Gradlinigkeitseigenschaft erleichtert;
- die Stoß-Überlastsicherung wirkt zwischen einem ersten Basiselement-Teil, welcher die beiden Arme umfasst, und einem demgegenüber gesonderten zweiten Basiselement-Teil, welcher im Normalzustand unter Mitwirkung der Stoß-Überlastsicherung formschlüssig am ersten Basiselement-Teil gehalten ist und durch die Stoß-Überlastsicherung im Falle der die Auslöseschwelle übersteigenden Belastungskraft freigebbar ist, sich von dem m ersten Basiselement-Teil zu lösen.

Die Erfindung wird im Folgenden anhand von in den Figuren gezeigten exemplarischen, nur als nicht beschränkende Beispiele dienenden Ausführungsformen näher erläutert.
Fig. 1 zeigt ein exemplarisches Fahrrad mit einem hinteren Umwerfer eines Typs A) einer Kettenschaltung des Fahrrads.
Fig. 1A zeigt eine Abwandlung des exemplarischen Fahrrads mit einem hinteren Umwerfer eines Typs B).
Fig. 2 zeigt eine erste Ausführungsform eines Schaltauges mit einer vorteilhaften UDH-Hülse und einem zugehörigen UDH-Bolzen im Zustand der Montage oder Vormontage an einem rechten Ausfallende eines Fahrradrahmens.
Fig. 3 zeigt das Schaltauge mit der angeformten UDH-Hülse und den UDH-Bolzen der ersten Ausführungsform in einer Art perspektivischen Explosionsansicht.
Fig. 4 zeigt eine Schnittansicht des Schaltauges, der UDH-Hülse und des UDH-Bolzens der ersten Ausführungsform im Montagezustand gemäß Fig. 2.
Fig. 5 entspricht der Fig. 2, zeigt aber das Schaltauge, die UDH-Hülse und den UDH-Bolzen einer zweiten Ausführungsform.
Fig. 6 zeigt eine Schnittansicht des Schaltauges, der UDH-Hülse und des UDH-Bolzens gemäß Fig. 5.
Fig. 7 zeigt eine Art perspektivischer Explosionsansicht des Schaltauges mit der angeformten UDH-Hülse und des UDH-Bolzens der zweiten Ausführungsform.
Fig. 8 zeigt in einer Ansicht entsprechend Fig. 2 das Schaltauge, die UDH-Hülse und den UDH-Bolzen einer dritten Ausführungsform.
Fig. 9 zeigt die Komponenten der Fig. 10 im aneinander montierten Zustand ohne das Ausfallende des Fahrradrahmens.
Fig. 10 zeigt die UDH-Hülse und den UDH-Bolzen der dritten Ausführungsform samt einem Halterungselement in einer Art perspektivischen Explosionsansicht.
Fig. 11 zeigt in einer Ansicht entsprechend Fig. 2 das Schaltauge, die UDH-Hülse und den UDH-Bolzen einer vierten Ausführungsform, samt einem zugehörigen, zugleich als Verstärkungselement dienenden Verriegelungselement.
Fig. 12 zeigt das Schaltauge, die UDH-Hülse und den UDH-Bolzen samt dem Verstärkungselement in einem aneinander montierten Zustand, ohne weitere Fig. 11 erkennbare Elemente der Gesamtanordnung.
Fig. 13 zeigt die Komponenten der Fig. 12 in einer perspektivischen und betreffend den UDH-Bolzen explosionsartigen Ansicht.
Fig. 14 zeigt die Komponenten der Fig. 13 in einem voneinander gelösten Zustand.
Fig. 15 zeigt das Schaltauge, die UDH-Hülse und den UDH-Bolzen samt einem Verstärkungselement gemäß einer fünften nicht beanspruchten Ausführungsform in einem am Fahrradrahmen montierten Zustand.
Fig. 16 zeigt die Komponenten der Fig. 15 ohne das in Fig. 15 dargestellte Schaltwerk.
Fig. 17 zeigt das Verstärkungselement der fünften nicht beanspruchten Ausführungsform in zwei alternativen Ansichten.
Fig. 18 zeigt die Komponenten der Fig. 15 in einer teilgeschnittenen Ansicht.
Fig. 19 zeigt das Schaltauge, die UDH-Hülse und den UDH-Bolzen samt einem Verstärkungselement gemäß einer sechsten nicht beanspruchten Ausführungsform in einem am Fahrradrahmen montierten Zustand.
Fig. 20 zeigt das Verstärkungselement der sechsten nicht beanspruchten Ausführungsform in zwei alternativen Ansichten.
Fig. 21 zeigt die Komponenten der Fig. 19 in einer teilgeschnittenen Ansicht.
Fig. 22 zeigt das Schaltauge, die UDH-Hülse und den UDH-Bolzen samt einem Verstärkungselement gemäß einer siebten nicht beanspruchten Ausführungsform in einem am Fahrradrahmen montierten Zustand.
Fig. 23 zeigt das Verstärkungselement der siebten nicht beanspruchten Ausführungsform in einer Einzelansicht.
Fig. 24 zeigt die Komponenten der Fig. 19 in einer teilgeschnittenen Ansicht.
Fig. 25 zeigt das Schaltauge, die UDH-Hülse und den UDH-Bolzen samt einem Verstärkungselement gemäß einer achten nicht beanspruchten Ausführungsform in einem am Fahrradrahmen montierten Zustand.
Fig. 26 zeigt das Verstärkungselement der achten nicht beanspruchten Ausführungsform in einer Einzelansicht.
Fig. 27 zeigt die Komponenten der Fig. 25 in einer teilgeschnittenen Ansicht.
Fig. 28 zeigt das Schaltauge, die UDH-Hülse und den UDH-Bolzen samt einem Verstärkungselement gemäß einer neunten nicht beanspruchten Ausführungsform in einem am Fahrradrahmen montierten Zustand.
Fig. 29 zeigt das Verstärkungselement der neunten nicht beanspruchten Ausführungsform in einer Einzelansicht.
Fig. 30 zeigt die Komponenten der Fig. 28 in einer teilgeschnittenen Ansicht.
Fig. 31 zeigt das Schaltauge, die UDH-Hülse und den UDH-Bolzen samt einem Verstärkungselement gemäß einer zehnten nicht beanspruchten Ausführungsform in einem am Fahrradrahmen montierten Zustand.
Fig. 32 zeigt das Verstärkungselement der zehnten nicht beanspruchten Ausführungsform in einer Einzelansicht.
Fig. 33 zeigt Komponenten der Fig. 31 in einer teilgeschnittenen Ansicht.
Fig. 34 zeigt die Komponenten der Fig. 31 in einer weiteren teilgeschnittenen Ansicht.
Fig. 35 zeigt das Schaltauge, die UDH-Hülse und den UDH-Bolzen samt einem Verstärkungselement gemäß einer elften Ausführungsform in einem am Fahrradrahmen montierten Zustand.
Fig. 36 zeigt das Verstärkungselement der elften nicht beanspruchten Ausführungsform in zwei alternativen Ansichten.
Fig. 37 zeigt die Komponenten der Fig. 35 in einer teilgeschnittenen Ansicht.
Fig. 38 zeigt ein Halterungselement oder Schaltauge und ein Basiselement oder B- Knuckle in einer Montagesituation an einem Fahrradrahmen gemäß einer zwölften nicht beanspruchten Ausführungsform.
Fig. 39 zeigt die Komponenten der Fig. 38 aus einer anderen Sichtrichtung.
Fig. 40 zeigt die Komponenten der Fig. 38 in einer geschnittenen Darstellung.
Fig. 41 zeigt ein Halterungselement oder Schaltauge und ein Basiselement oder B- Knuckle in einer Montagesituation an einem Fahrradrahmen gemäß einer dreizehnten nicht beanspruchten Ausführungsform.
Fig. 42 zeigt die Komponenten der Fig. 41 aus einer anderen Sichtrichtung.
Fig. 43 zeigt die Komponenten der Fig. 41 in einer geschnittenen Darstellung.
Fig. 44 zeigt ein Halterungselement oder Schaltauge und ein Basiselement oder B- Knuckle in einer Montagesituation an einem Fahrradrahmen gemäß einer vierzehnten nicht beanspruchten Ausführungsform
Fig. 45 zeigt die Komponenten der Fig. 44 aus einer anderen Sichtrichtung.
Fig. 46 zeigt die Komponenten der Fig. 44 in einer geschnittenen Darstellung.
Fig. 47 zeigt ein als fünfzehnte nicht beanspruchte Ausführungsform angesprochenes zweiarmiges Basiselement oder B-Knuckle in einer koaxialen Montagesituation am Rahmen eines Fahrrads.
Fig. 48 zeigt das zweiarmige Basiselement für sich alleine in einer ersten Ansicht.
Fig. 49 zeigt das zweiarmige Basiselement in einer zweiten Ansicht.
Fig. 50 zeigt die Montagesituation der Fig. 47 ohne das zweiarmige Basiselement.
Fig. 51 zeigt eine eine Abstützung am Fahrradrahmen vermittelnde sogenannte B-Scheibe für sich alleine.
Fig. 52 zeigt eine Schnittansicht der Montagesituation der Fig. 47.
Fig. 53 zeigt einen oberen Bereich der beiden Arme des Basiselements der fünfzehnten nicht beanspruchten Ausführungsform samt einem zugehörigen Adapter oder Achsbolzen, der auch in Fig. 52 zu erkennen ist.
Fig. 54 zeigt noch einmal die mit zwei radial vorstehenden Armen ausgeführte B-Scheibe in einer perspektivischen Ansicht.
Fig. 55 zeigt die in Fig. 52 erkennbaren verschiedenen Komponenten in einer perspektivischen Explosionsansicht.
Fig. 56 zeigt schematisch ein als sechszehnte nicht beanspruchte Ausführungsform angesprochenes zweiarmiges Basiselement oder B-Knuckle in einer Montagesituation am Fahrradrahmen in einer teilgeschnittenen Ansicht.
Fig. 57 zeigt schematisch ein als siebzehnte nicht beanspruchte Ausführungsform angesprochenes zweiarmiges Basiselement in einer Montagesituation am Fahrradrahmen in einer teilgeschnittenen Ansicht.
Fig. 58 zeigt schematisch ein als achtzehnte nicht beanspruchte Ausführungsform angesprochenes zweiarmiges Basiselement in einer Montagesituation am Fahrradrahmen in einer teilgeschnittenen Ansicht.
Fig. 59 zeigt schematisch eine Ausgestaltung des zweiarmigen Basiselements, welches bei den Ausführungsformen der Fig. 26, 27 und 28 vorteilhaft vorgesehen werden kann.
Fig. 60 erläutert die Funktion dieser Ausgestaltung gemäß Fig. 59.
Fig. 61 zeigt schematisch ein als neunzehnte nicht beanspruchte Ausführungsform angesprochenes zweiarmiges Basiselement in einer Montagesituation am Fahrradrahmen in einer Ansicht von hinten und in einer Seitenansicht.

In der nachfolgenden Beschreibung wie auch teilweise in Bezug auf die zugehörigen Figuren verwendete Orts- bzw. Richtungsangaben wie "links", "rechts", "vorne", "hinten", "oben", "unten" usw. entsprechen der Fahrerperspektive auf einem Fahrrad. Die hierin verwendete Richtungsangabe "inboard" ist gleichbedeutend mit "von links".

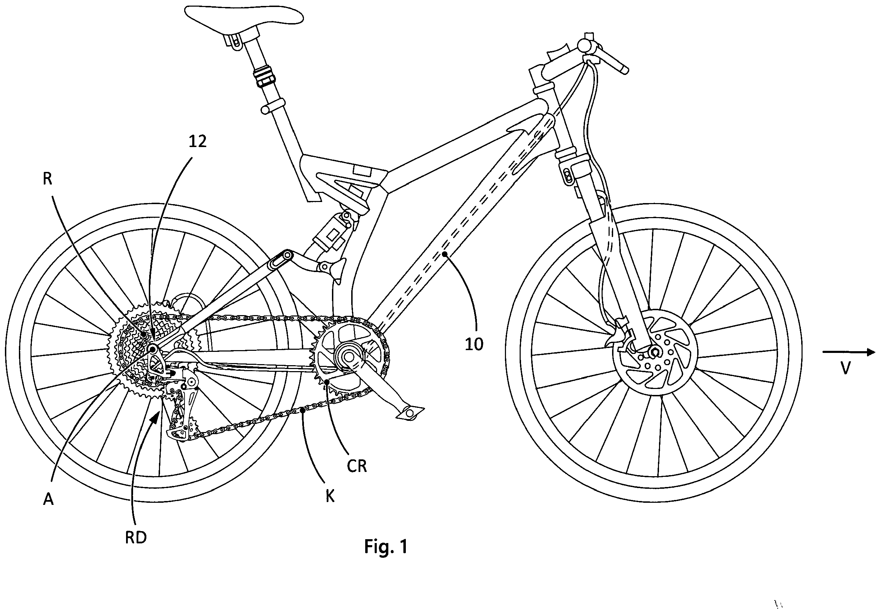

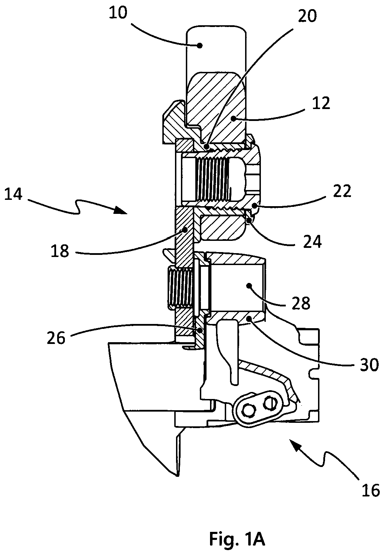

Figur 1 zeigt exemplarisch ein Fahrrad mit einem an sich üblichen Fahrradantrieb. Der Fahrradantrieb umfasst ein vorderes Kettenrad CR, ein hinteres Ritzelpaket R und eine Kette K, die mittels des hinteren Umwerfers RD von einem Ritzel zum nächsten bewegt werden kann. Die im Folgenden verwendeten Richtungsangaben rechts/links und vorne/hinten beziehen sich auf ein Fahrrad in Fahrtrichtung V, entsprechen also der Fahrerperspektive auf dem Fahrrad. Der Fahrradrahmen 10 hat typischerweise ein linkes und ein rechtes hinteres Ausfallende oder Rahmenauge, zwischen denen das Hinterrad montiert ist. Das Hinterrad dreht sich zusammen mit dem Ritzelpaket R um die Hinterradachse A. Axial bezieht sich auf die Hinterradachse A bzw. die Drehachse A der Mehrfach-Ritzelanordnung R oder eine hierzu parallele Richtung. Das größte Ritzel liegt axial weiter innen als die kleineren Ritzel. Die Zähne sind radial außen an den Ritzeln angeordnet. Der hintere Umwerfer weist ein sogenanntes Basiselement (B-Knuckle) auf, welches am Fahrradrahmen, genauer an dessen rechten Ausfallende, montiert ist. Ein sogenanntes bewegliches Element (P-Knuckle), an welchem ein Kettenkäfig um eine Drehwelle schwenkbar gelagert ist, ist über einen Schwenkmechanismus mit dem Basiselement verbunden. Der Schwenkmechanismus des hinteren Umwerfers kann als Schrägparallelogramm ausgeführt sein.

Das hier gezeigte Schaltwerk RD eines Typs A) ist ohne Verwendung eines gesonderten Schaltauges am rechten Ausfallende 12 des Rahmens befestigt. Das Basiselement (B-Knuckle) des Schaltwerks ist für eine zur Drehachse A koaxiale Montage am Ausfallende mittels eines inneren und äußeren Arms oder Armabschnitts des Basiselements ausgeführt, die auf der Innenseite und der Außenseite des Ausfallendes an diesem fest gehalten sind, wie an sich aus der Offenlegungsschrift DE 10 2018 001 253 A1 und den korrespondierenden Schriften EP 3 388 324 A2 und US 2018/0265169 A1 bekannt und wie an sich aus der Offenlegungsschrift DE 10 2020 201 229 A1 und den korrespondierenden Schriften EP 3 712 052 A1 und US 2020/0298933 A1 bekannt.

Ein derartiges Schaltwerk bietet viele Vorteile, wie sich aus dieser auf die vorliegende Anmelderin zurückgehenden Patentliteratur ergibt, die durch Bezugnahme vollständig in die Offenbarung der vorliegenden Beschreibung einbezogen wird. So sorgen die beiden voneinander beabstandeten Arme des Basiselements in montiertem Zustand des Schaltwerks für eine stabile Ausrichtung des Schaltwerks parallel zur Rotationsebene der Ritzel und damit senkrecht zur Hinterradachse. Ein Verkippen des Schaltwerks aus dieser Ebene wird auch bei größeren Kräften wirksam verhindert. Die zwei axial beabstandeten Befestigungspunkte des Basiselements an der Hinterradachse können die am Schaltwerk angreifenden Kräfte deutlich besser aufnehmen, als herkömmliche Schaltwerke mit nur einem Befestigungsende.

Allerdings setzt die gegenüber herkömmlichen Schaltwerken verbesserte Lösung mit den die zwei axial beabstandeten Befestigungspunkten des Basiselements spezielle Rahmenschnittstellen am linken und rechten Ausfallenden des Fahrradrahmens voraus. Um am rechten Ausfallende eines solchen Fahrradrahmens auch ein herkömmliches Schaltwerk eines Typs B) mit nur einem Befestigungsende montieren zu können, hat die vorliegende Anmelderin die Verwendung eines auf die Rahmenschnittstelle abgestimmten, im Fachgebiet auch als Schaltauge bekannten Halterungselements in verschiedenen Varianten vorgeschlagen, welches auf der Innenseite des rechten Ausfallendes montiert wird. Hierzu wird auf die Offenlegungsschrift DE 10 2018 206 104 A1 und die korrespondierenden Schriften EP 3 556 643 A1 und US 2019/0322333 A1 sowie auf die Offenlegungsschrift DE 10 2018 222 834 A1 und die korrespondierenden Schriften EP 3 670 315 A1 und US 2020/0198728 A1 verwiesen, die ebenfalls durch Bezugnahme vollständig in die Offenbarung der vorliegenden Beschreibung einbezogen werden. Der hier angesprochene Schaltwerkstyp B) entspricht dem "ersten Typ" und der hier angesprochene Schaltwerkstyp A) entspricht dem "zweiten Typ" der DE 10 2018 206 104 A1.

Figur 1A, die Fig. 3b der DE 10 2018 222 834 A1 entspricht, zeigt ein solches Halterungselement oder Schaltauge 14, wie es zur Montage eines herkömmlichen Schaltwerks dieses Typs B) mit nur einem Befestigungsende an einem Fahrradrahmen 10 wie dem Fahrradrahmen der Fig. 1 vorteilhaft eingesetzt werden kann.

Fig. 1A zeigt also zunächst den Stand der Technik gemäß der DE'834 bezüglich einer koaxialen Anbindung eines herkömmlichen Standard-Fahrradschaltwerks an ein Rahmen-Ausfallende 12. Man erkennt in Fig. 1A, dass gemäß der DE 10 2018 222 834 A1 (kurz DE'834) zur Schaltwerksmontage ein Universal-Schaltauge (Universal Derailleur Hanger, UDH) 14 verwendet wird, welches im Wesentlichen eine UDH-Basisplatte 18, eine UDH-Hülse 20 und einen UDH-Bolzen 22 (nachfolgend auch bezeichnet als Achsbolzen) umfasst. Gemäß einer in der DE 10 2018 206 104 A1 (kurz DE'104) verwendeten Terminologie kann der UDH-Bolzen auch als Adapter bezeichnet werden.

Dieser UDH wird im Rahmen-Ausfallende 12 montiert, indem der UDH-Bolzen 22 mittels eines Linksgewindes in die UDH-Hülse 20 eingeschraubt wird, nachdem diese in das Ausfallende eingesteckt wurde. Das Linksgewinde wird eingesetzt, um zu vermeiden, dass sich der UDH-Bolzen 22 beim späteren Einschrauben der Steckachse aus der UDH-Hülse 20 löst.

In Fig. 1A sind weiter eine UDH-Unterlegscheibe 24 und eine sogenannte B-Scheibe 26 erkennbar. Die B-Scheibe dient zur Einstellung des sogenannten Chain-Gap sowie zum Anschlag einer sogenannten B-Schraube beim sogenannten Bouncing des Schaltwerks. Die B-Schraube dient zum Einstellen eines Vornanschlags für das Schaltwerk, wofür der Hanger bzw. das Schaltauge 14 einen Vornanschlag-Abschnitt aufweist. Bei einem herkömmlichen Rahmen könnte auch das Ausfallende im Bereich des gegebenenfalls verwendeten Schaltauges einen geeigneten Vornanschlag-Abschnitt aufweisen.

Solch ein Vornanschlag befindet sich jedoch typischerweise auf einem kleinen Radius, sodass die B-Schraube überlastet werden könnte, würden die im Fahrbetrieb auftretenden Schaltwerksschläge, also Ausschläge des Schaltwerks nach hinten und wieder zurück an den Anschlag im Falle von Bodenunebenheiten, Sprüngen oder dergleichen direkt von einer (dann radial weiter innen liegenden) B-Schraube auf den Vornanschlag-Abschnitt übertragen werden. Deswegen ist die B-Scheibe 26 eingeführt, um die Schläge von der B-Schraube auf einem großen Radius und damit mit kleineren Kräften zuerst auf die B-Scheibe, und von dieser wiederum auf den Hanger-Anschlag oder Vornanschlag-Abschnitt des UDH übertragen zu können.

Das Schaltwerk 16 ist mittels eines nicht dargestellten Montagebolzens am UDH montiert, welcher sich bei der Anordnung der Fig. 1A durch den Durchgang 28 des Basiselements (B-Knuckle) des Schaltwerks erstreckt und in eine als Schrauböffnung ausgeführte Montageöffnung des UDH eingeschraubt ist.

Im Folgenden geht es zuerst um sich auf die Montage eines herkömmlichen Schaltwerks des Typs B) beziehende und von Schaltwerken des Typs B) ausgehende Lösungsvorschläge, ohne Beschränkung der Allgemeinheit vor allem (aber nicht ausschließlich) in Bezug auf einen Rahmen, der für die Montage eines Schaltwerks des Typs A) vorgesehen ist.

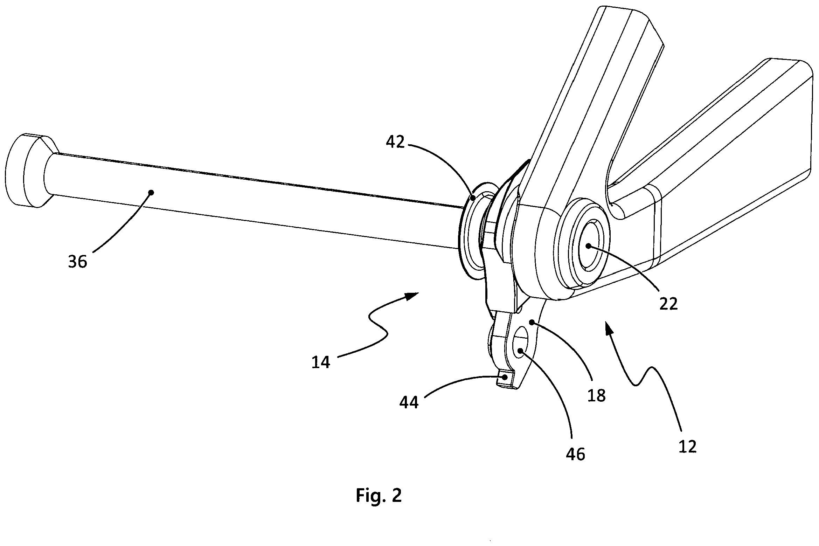

Fig. 2 bis 14 zeigen hierzu verschiedene Aspekte der vorliegenden Erfindung erläuternde alternative Ausführungsformen für einen UDH, bei denen die Verbindung zwischen UDH-Bolzen und UDH-Hülse nicht mehr mittels Gewinde, sondern durch Steck- bzw. Schnappverbindungen erfolgt. Eine besondere, durch diese Ausführungsformen gelöste Herausforderung besteht dabei darin, die im Wesentlichen aus Basisplatte, Hülse und Bolzen bestehende UDH-Anordnung auch bei nicht montierter Steckachse sicher mit dem Rahmenende zu verbinden. Insbesondere beim Transport ohne Hinterrad darf sich die UDH-Anordnung auch mit daran montiertem Schaltwerk nicht vom Rahmen lösen.

Es werden in der folgenden Beschreibung für entsprechende oder analoge Elemente die gleichen Bezugszeichen wie in den Figuren 1 und 1A verwendet und jeweils nur die Unterschiede gegenüber der bzw. den vorangehend schon behandelten Ausführungsformen erläutern.

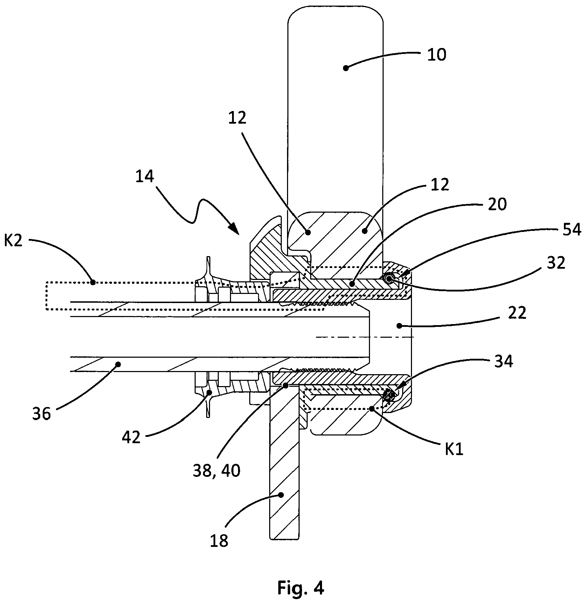

Bei der in Fig. 2 bis 4 gezeigten Ausführungsform werden UDH-Hülse und UDH-Bolzen durch eine elastisch-formschlüssige Schnappverbindung unter Verwendung eines O-Rings 32 verbunden. Zur Montage wird hierzu gemäß Fig. 3 und 4 zunächst der aus Basisplatte 18 und UDH-Hülse 20 bestehende UDH 14 in das Rahmen-Ausfallende 12 eingeführt. Sodann wird ein O-Ring 32 in die zugehörige Nut (Einstich) 34 an der UDH-Hülse 20 eingesetzt und sichert damit den UDH 14 bereits gegen Herausziehen.

Nachfolgend wird der UDH-Bolzen 22 von rechts in die UDH-Hülse 20 eingesetzt, wobei der Kopf des UDH-Bolzens über den O-Ring 32 gedrückt wird. Der O-Ring 32 wird durch die Fase am Außendurchmesser des Einstichs am UDH-Bolzen 22 komprimiert. Daraus resultiert eine axiale Kraft am UDH-Bolzen 22, die das selbstständige Lösen des Bolzens 22 verhindert. Weiterhin wird der O-Ring 32 bei moniertem Bolzen sicher in der Nut 34 gehalten, da ein Abheben des O-Rings 32 in radiale Richtung aufgrund der Überdeckung durch den Bolzenkopf nicht möglich ist, so dass sich die UDH-Anordnung nicht vom Rahmen 10 lösen kann.

Hierdurch wird bei dieser Ausführungsform der den UDH 14 im Ausfallende fixierende Kraftfluss vollständig unabhängig von dem beim Einschrauben der Steckachse erzeugten Kraftfluss (vgl. Fig. 4). Zudem hat das Ein- ebenso wie das Ausschrauben der Steckachse 36 keinen Einfluss auf den Halt des UDH 14 im Ausfallende 12. Die Übertragung des beim Ein- bzw. Ausschrauben der Steckachse 36 anfallenden Gewindedrehmoments erfolgt über das insbesondere in Fig. 3 sichtbare Sechskantprofil 38 bzw. 40 von UDH-Basisplatte 18 und UDH-Bolzen 22. Auf diese Weise wird somit ein unerwünschtes Mitdrehen des UDH-Bolzens 22 beim Anziehen der Steckachse 36 verhindert.

Fig. 2 zeigt die schraubbaren Steckachse zusammen mit einer sogenannten Nabenendkappe 42. Die schon angesprochene Anschlagfläche des Hangers 14 für die B-Schraube bzw. die B-Scheibe ist mit 44 bezeichnet. Die Montageöffnung 46 des UDH 18 für den B-Bolzen ist in dieser Figur und den folgenden Figuren ohne Innengewinde dargestellt. Dieses Innengewinde kann mittels eines in einer entsprechenden Öffnung des Hangers eingepressten Gewindeeinsatzes 48 realisiert sein, wie in Fig. 3 erkennbar, die auch das Innen-Sechskantprofil 38 in der UDH-Basisplatte 18 und das Außen-Sechskantprofil 40 des UDH-Bolzens 22 zeigt. Erkennbar ist auch ein Aufnahmegewinde 50 für die Steckachse 36.

Gegenüber vorbekannten Lösungen wird der UDH-Bolzen also gesteckt statt geschraubt, sodass es keinen Einfluss des Gewindedrehmoments beim Ein- oder Ausschrauben der Steckachse auf die Fixierung des UDH im Ausfallende gibt.

Gut zu erkennen sind auch der O-Ring 32, die Aufnahmenut (Einstich) 34 der UDH-Hülse 20 für den O-Ring und eine zugeordnete weitere Aufnahmenut (Einstich) 52 an einem Innenumfangsbereich eines Flanschabschnitts des Bolzenkopfes.

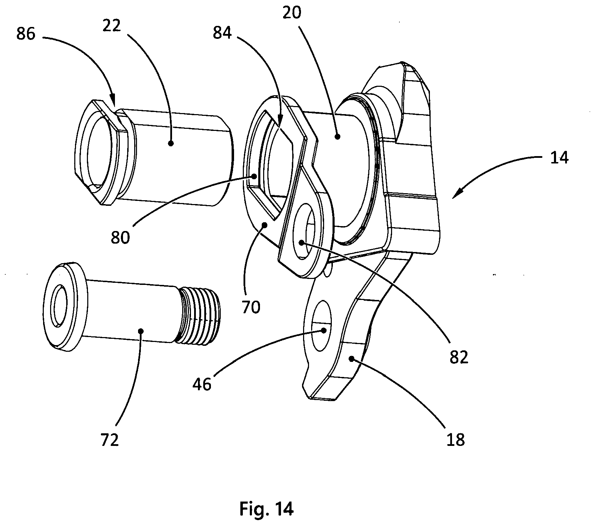

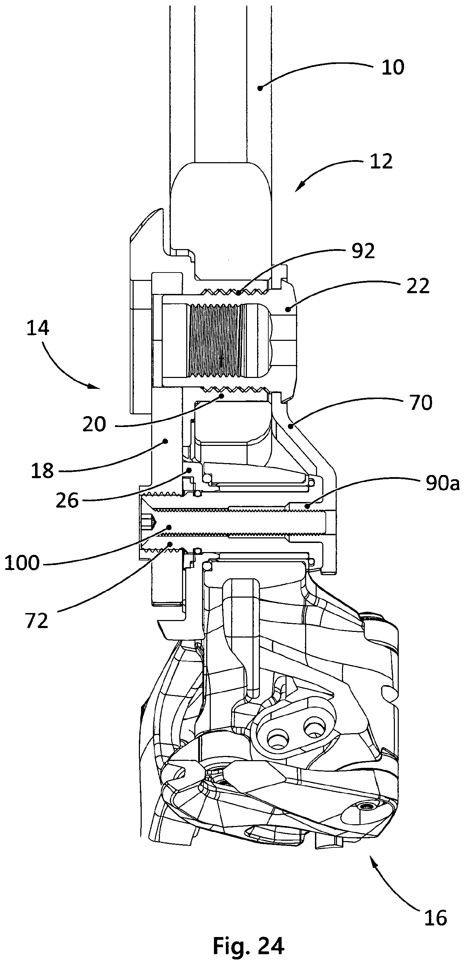

Fig. 4 lässt gut erkennen, auf welche Weise die UDH-Hülse 20 am rechten Rahmen-Ausfallende 12 des Rahmen-Hinterbaus des Rahmens 10 fixiert ist, vermittels des O-Rings 32, der eine elastisch-formflüssige Schnappverbindung zwischen dem UDH-Bolzen 22 und der UDH-Hülse 20 herstellt. Die UDH-Hülse lässt sich somit aufgrund der elastischformflüssigen Sperrwirkung des O-Rings erst aus dem Ausfallende entnehmen, nachdem der UDH-Bolzen nach rechts herausgezogen wurde. 54 bezeichnet eine Fase am Außendurchmesser des Einstichs am UDH-Bolzen und 34 die schon angesprochene Aufnahmenut in der UDH-Hülse für den O-Ring. Mit K1 ist der den UDH im Ausfallende fixierende Kraftfluss durch den UDH und den UDH-Bolzen bei gelöster Steckachse bezeichnet (dies gilt entsprechend für alle Ausführungsbeispiele gemäß den Figuren 2 bis 14). Mit K2 ist der den UDH im Ausfallende fixierende Kraftfluss durch die Basisplatte 18 und den UDH-Bolzen 22 bei eingeschraubter Steckachse 36 bezeichnet (dies gilt entsprechend für alle Ausführungsbeispiele gemäß den Figuren 2 bis 14; vgl. auch EP '324, Absatz [0082], Fig. 14, 16, 24A).

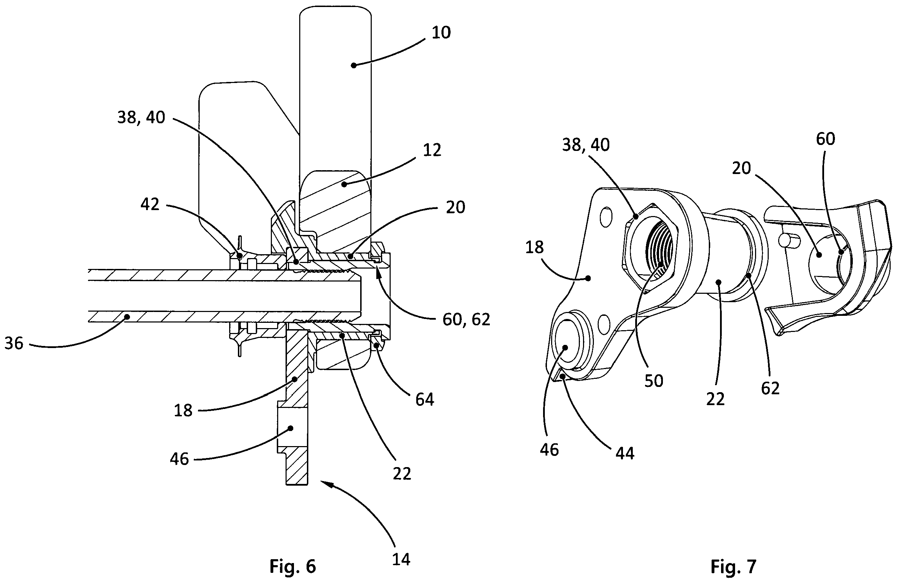

Fig. 5 bis 7 zeigen eine Ausführungsform, bei der UDH-Hülse 20 und der UDH-Bolzen 22 durch eine ringförmig ausgebildete Schnappverbindung verbindbar sind. Hierzu umfasst die UDH-Hülse 20 an einem Innenumfang einen umlaufenden Sperr- oder Schnappvorsprung 60 und der UDH-Bolzen 22 eine hierzu formkorrespondierend ausgebildete, umlaufende Rastnut 62. Die Montage erfolgt, indem zuerst die UDH-Basisplatte 18 mit der umspritzten UDH-Hülse 20 von links in die Öffnung des Rahmen-Ausfallendes 12 eingeführt, und anschließend der UDH-Bolzen 22 von rechts in die Öffnung der UDH-Hülse 20 eingedrückt wird, bis der umlaufende Schnappvorsprung 60 der UDH-Hülse in die umlaufende Rastnut 62 am UDH-Bolzen einrastet (vgl. Explosionsdarstellung in Fig. 7, die jedoch aus perspektivischen Gründen nicht die tatsächliche Montagereihenfolge zeigt).

In Fig. 7 ist die UDH-Hülse 20 zur Verdeutlichung getrennt von der Schaltauge-Basisplatte 18 dargestellt. In Realität ist die UDH-Hülse bevorzugt als festverbundene Umspritzung um die Schaltauge-Basisplatte ausgebildet, um so den eine Einheit bildenden UDH zu realisieren. Die Montagereihenfolge ist wie folgt: als erstes wird die UDH-Basisplatte 18 mit der umspritzten Hülse von links in das Ausfallende 12 gesteckt, danach wird als zweites der UDH-Bolzen 22 von rechts in die Hülse um die Basisplatte gesteckt und mit der Hülse verrastet. Dies ist als eine Vormontage am Rahmen anzusehen. Die endgültige Montage erfolgt dann durch Einschrauben der Steckachse 36 in das Aufnahmegewinde 50 des UDH-Bolzens. In den Figuren 5 und 6 ist noch eine UDH-Unterlegscheibe 64 zu erkennen, die denn in die Rastnut 62 eingeschnappten Schnappvorsprung 60 umgibt und einen Flanschabschnitt des UDH-Bolzens an der Außenseite des Ausfallendes 12 abstützt, wenn die Steckachse 36 eingeschraubt und festgezogen ist.

Bezüglich der Kraftflüsse und der damit verbundenen Vorteile gilt dieser Ausführungsform dasselbe wie vorstehend hinsichtlich der Ausführungsform gemäß Fig. 2 bis 4 gesagte.

Eine weitere Ausführungsform für die Verbindung zwischen UDH-Hülse und UDH-Bolzen ist in Fig. 8 bis 10 dargestellt. Auch hier handelt es sich um eine Schnappverbindung. Diese Schnappverbindung weist hier Schnappelemente an der UDH-Hülse auf, welche das rechte Ende des UDH-Bolzens formschlüssig schnappend umgreifen. Bei der dargestellten Ausführungsform sind zwei Schnappelemente 66 und 68 vorgesehen.

Zur Montage wird zunächst wieder die UDH-Basisplatte 18 mit der umspritzten UDH-Hülse 20 von links in die Öffnung des Rahmen-Ausfallendes 12 eingeführt. Anschließend wird der UDH-Bolzen 22 von rechts in die Öffnung der UDH-Hülse 20 eingeführt, bis die an der Kunststoffhülse des UDH angeformten Schnappelemente 66, 68 an zugehörigen Kanten des UDH-Bolzens 22 einrasten und den Bolzen so axial sichern.

Der UDH-Bolzen 22 und die UDH-Basisplatte 18 weisen hier etwas andere Drehabstützungsformationen als die Sechskantprofile 38 und 40 gemäß Fig. 3 auf, nämlich zwei Abflachungen 40a am Außenumfang des Bolzens, mit denen Abflachungen 38a am Innenumfang der Durchgangsöffnung der Basisplatte 18 korrespondieren. Letztlich gibt es viele Möglichkeiten, wie eine Drehmomentübertragung beim Einschrauben der Steckachse 36 konkret realisiert werden kann.

Auch hier gilt bezüglich der Kraftflüsse und der damit verbundenen Vorteile wieder dasselbe wie vorstehend hinsichtlich der Ausführungsform gemäß Fig. 2 bis 4 beschrieben.

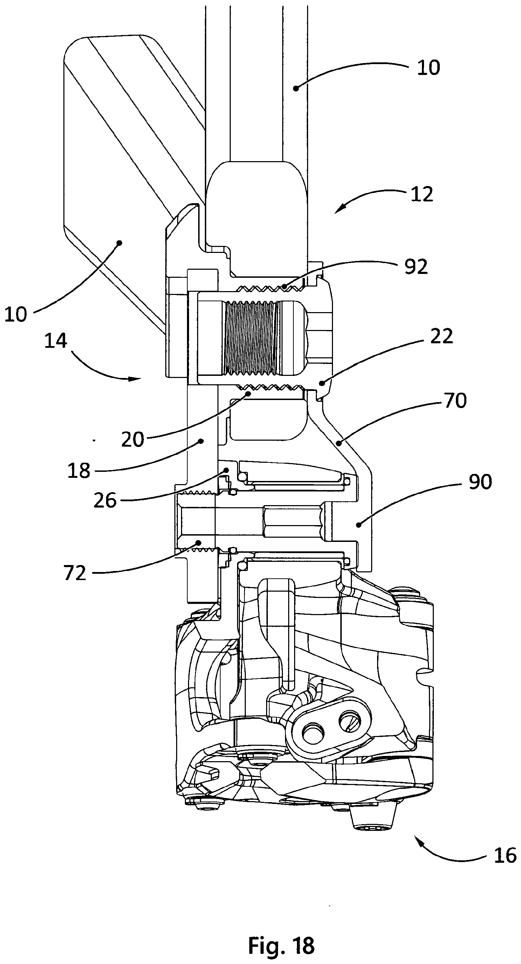

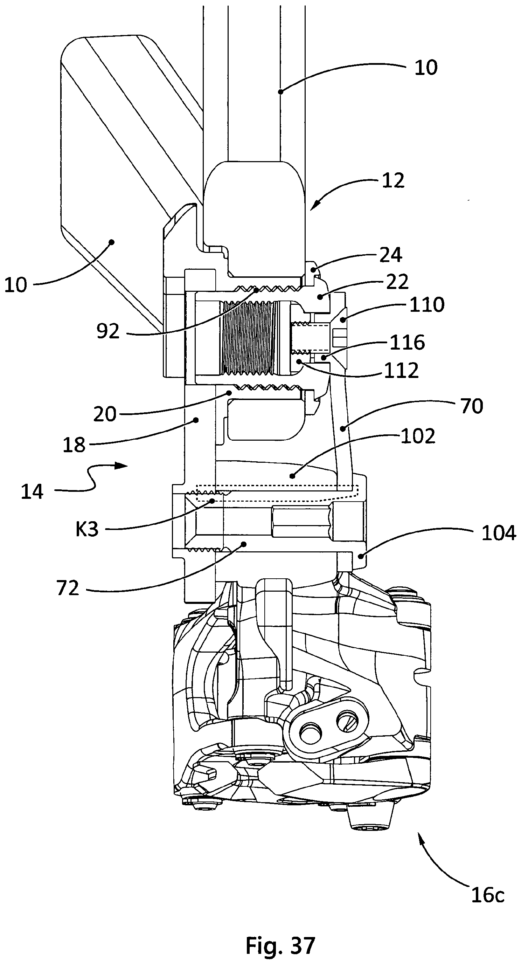

Die Ausführungsformen gemäß Fig. 2 bis 10 können für herkömmliche Schaltwerks-Anordnungen (vgl. Fig. 1A) verwendet werden, nämlich Schaltwerks-Anordnungen ohne ein außenseitig montiertes Verstärkungselement im Folgenden erläuterten Sinne. Für den weiter unten beschriebenen Einsatz mit Verstärkungselement kann bei diesen Ausführungsformen einfach die UDH-Unterlegscheibe 64 gegen das Verstärkungselement 70 ausgetauscht werden (vgl. z.B. Fig. 18). Wahlweise kann eine alternative Verbindungsmöglichkeit zwischen dem Verstärkungselement und dem UDH-Bolzen 22 gewählt werden, beispielsweise eine Verschraubung des Verstärkungselements am UDH-Bolzen durch Gewindeeinsatz (vgl. Fig. 37) oder durch ein zusätzliches Gewinde.

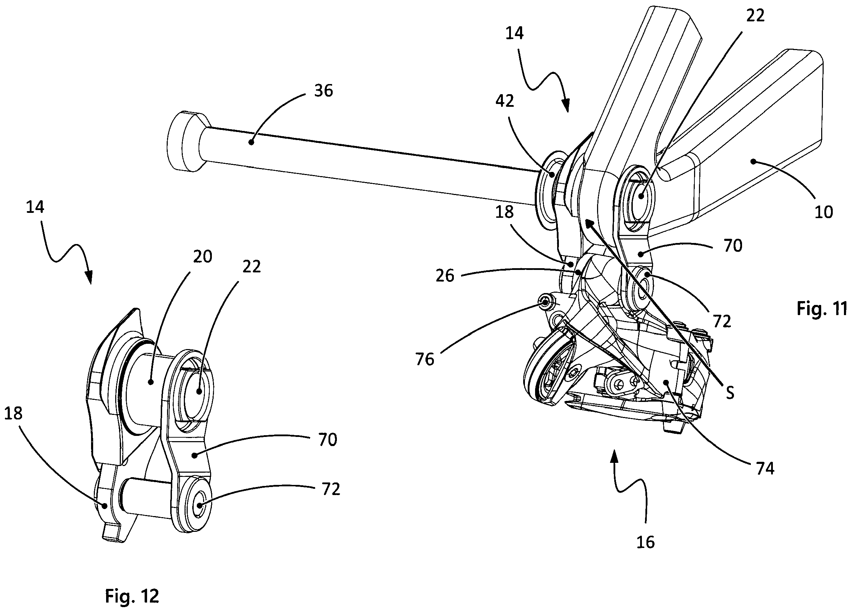

Wird ausschließlich ein Aufbau mit Verstärkungselement verwendet, kann teilweise auch auf Mittel zur axialen Sicherung der UDH-Anordnung wie z.B. gemäß Fig. 2 bis 10 verzichtet werden, wenn das Verstärkungselement selbst ein Lösen vom Rahmen beim Transport verhindern kann. Letzteres ist beispielsweise bei der nachfolgend beschriebenen Ausführungsform gemäß Fig. 11 bis 14 der Fall. Das Verstärkungselement 70 bildet hier zugleich ein Verriegelungselement.

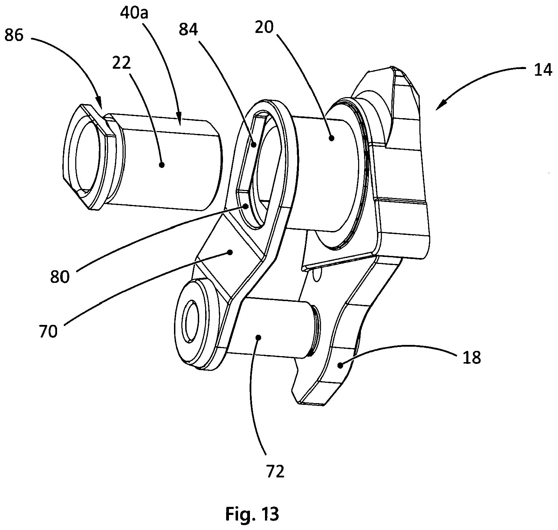

Fig. 11 bis 14 stellen also eine weitere Ausführungsform dar für die Verbindung zwischen UDH-Bolzen und UDH-Hülse, bzw. für die Montage eines UDH im Ausfallende. Bei dieser Ausführungsform erfolgt eine formschlüssige Verriegelung des UDH-Bolzens mittels eines bajonettartigen Verschlusses, dessen Aufbau und Wirkung insbesondere einer Zusammenschau von Fig. 13 und 14 entnommen werden kann.

Fig. 11 zeigt ein komplettes konventionelles Schaltwerk 16, welches mittels eines B-Bolzens 72 und dem Universal-Schaltauge 14 sowie dem Verstärkungselement 70 am hinteren rechten Ausfallende des Rahmens montiert ist. Der B-Bolzen 72 erstreckt sich durch einen Durchgang des Basiselements (B-Knuckle) 74 und die schon angesprochene B-Scheibe 26 und ist in die zugehörige Schrauböffnung der Schaltauge-Basisplatte 18 eingeschraubt. In der Figur ist auch die schon erwähnte B-Schraube 76 zu erkennen, die auf an sich konventionelle Weise sowohl zur Einstellung des Chain-Gap als auch zur Aufnahme von Schaltwerksschlägen beim Bouncing dient. Das Schaltwerk ist um den B-Bolzen gegen die Kettenspannung frei nach hinten schwenkbar. Ein Pfeil S repräsentiert beispielhaft eine Stoßrichtung auf das Schaltwerk, welche durch den B-Bolzen verläuft.

Zur Montage wird hierbei zunächst wieder die UDH-Basisplatte 18 mit der umspritzten UDH-Hülse 20 von links in die Öffnung des Rahmen-Ausfallendes eingeführt. Anschließend wird der UDH-Bolzen 22 von rechts in die Öffnung der UDH-Hülse 20 eingeführt, wobei durch entsprechend formkorrespondierende Ausbildung von Bolzen und UDH-Hülse nur eine gerichtete Montage möglich ist (hier sind zwei um 180° versetzte Positionen möglich, vgl. Fig. 14).

Nachfolgend wird das obere Auge 80 des Verriegelungselements 70 über den unterbrochenen Flansch am UDH-Bolzen geführt. Dann wird das Verriegelungselement 70 verdreht, bis sich dessen unteres Auge 82 mit der Gewindebohrung 46 an der UDH-Basisplatte 18 überdeckt, vgl. Fig. 13. Durch die Verdrehung des Verriegelungselements treten Abflachungen 84 in dessen oberem Auge 80 in eine Nut 86 am UDH-Bolzen 22 ein und sichern diesen in axialer Richtung. Es erfolgt also eine gegenseitige formflüssige Verriegelung durch Eingriff der Abflachungen 84 in die Nut 86.

Eine Besonderheit dieser Ausführungsform liegt darin, dass das Verriegelungselement gleichzeitig ein Verstärkungselement bildet, welches für eine erhebliche Erhöhung der Steifigkeit und Belastbarkeit der Verbindung zwischen dem Rahmen-Ausfallende und dem Schaltwerk sorgt. Anders als beim Stand der Technik beispielsweise gemäß der Lehre der DE'834 (vgl. Fig. 1A), bei der die Verbindung zwischen Schaltwerk und Ausfallende lediglich mittels Biegemoment über die UDH-Basisplatte erfolgt, bilden bei der Ausführungsform gemäß Fig. 11 bis 14 die UDH-Basisplatte 18 und das Verriegelungselement 70 einen sandwich-artigen Zweiarm-Verbund, über den auf das Schaltwerk 16 einwirkende seitliche Kräfte nicht mehr nur mittels Biegemoment, sondern über Zug- und Druckkräfte auf das Ausfallende 12 übertragen werden können. Die Steifigkeit und Belastbarkeit eines derartigen Zweiarm-Verbunds lässt sich gegenüber dem vorgenannten Stand der Technik ohne weiteres um nahezu eine Größenordnung vergrößern.

Die Auswirkungen und Vorteile einer zweiarmigen Verbindung zwischen Schaltwerk und Ausfallende sind ausführlich bereits in der EP'324 beschrieben, und kommen aufgrund der auch bei der Ausführungsform gemäß Fig. 11 bis 14 vorliegenden, zweiarmigen Verbindung auch hier zum Tragen.

Die Ausführungsform gemäß Fig. 11 bis 14 weist im Unterschied zur Lehre der EP'324 jedoch die Besonderheit auf, dass hier ein weitgehend oder vollständig unverändertes konventionelles Schaltwerk eingesetzt werden kann.

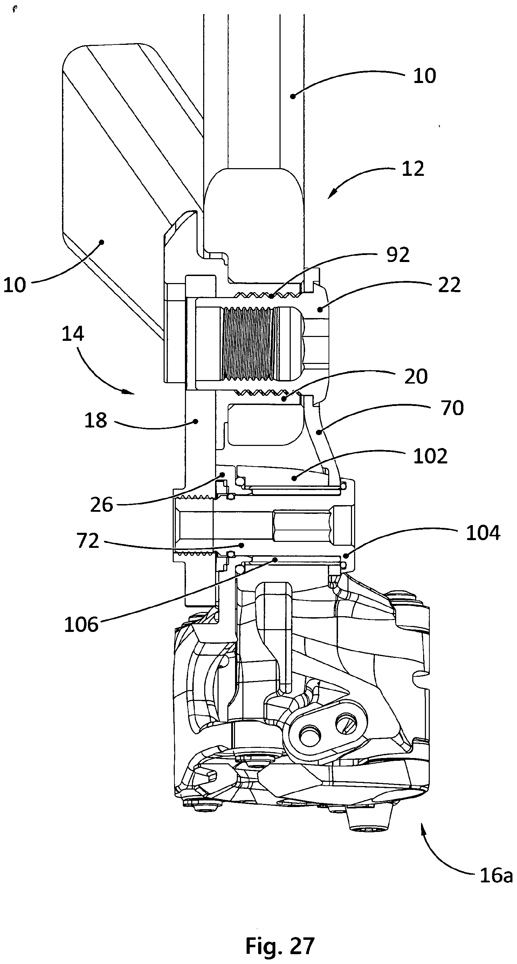

Um das konventionelle Schaltwerk 16 gemäß dieser Ausführungsform zweiarmig montieren zu können, wird das Verriegelungselement 70, welches hier zugleich das Verstärkungselement 70 bildet, zwischen dem Kopf des B-Bolzens 72 des Schaltwerks und dem Körper des sog. B-Knuckles 74 angeordnet bzw. geklemmt, ähnlich wie dies z.B. auch in den Fig. 27 bis 34 und dort der zugehörigen Beschreibung dargestellt ist.

Hinsichtlich der Kraftflüsse und der damit verbundenen Vorteile gilt auch bei dieser Ausführungsform wieder dasselbe wie weiter oben hinsichtlich der Ausführungsform gemäß Fig. 2 bis 4 dargelegt.

Anzumerken ist, dass man auch ein Verstärkungselement 70 vorsehen könnte, das nicht zugleich auch als Verriegelungselement dient. In diesem Fall könnte eine Schraubverbindung des UDH-Bolzens 22 mit der UDH-Hülse 20 vorgesehen sein, oder eine Schnappverbindung wie bei der vorangehend beschriebenen Ausführungsform. Überdies kann man alternativ auch ein Verriegelungselement 70 vorsehen, welches nicht zugleich als Verstärkungselement dient, etwa wenn man auf die Vorteile des Zweiarm-Verbunds verzichten mag.

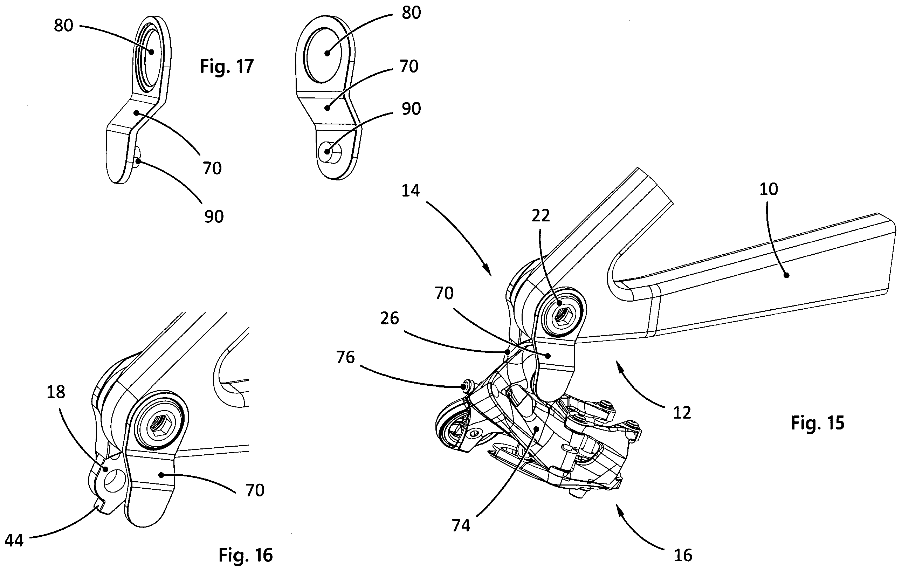

Fig. 15 bis 18 zeigen nicht beanspruchte eine Ausführungsform, welche wie die vorstehende Ausführungsform gemäß Fig. 11 bis 14 eine zweiarmige Montage eines weitgehend oder vollständig unveränderten konventionellen Schaltwerks erlaubt. Im Unterschied zu den bisher oben beschriebenen Ausführungsformen wird bei dieser Ausführungsform zudem auch ein weitgehend unverändertes Universal-Schaltauge (UDH) mit geschraubter Befestigung im Ausfallende eingesetzt, wie es aus der DE'834 bekannt und z.B. in Fig. 1A dargestellt ist. Das Verstärkungselement 70 dient also nicht als Verriegelungselement im erläuterten Sinn.

Eine Zusammenschau der Fig. 15 bis 18 mit Fig. 1A zeigt, dass hier lediglich die UDH-Unterlegscheibe 24 des aus der DE'834 bekannten UDH durch das Verstärkungselement 70 gemäß Fig. 15 bis 18 ersetzt wird, welches hierzu in seinem oberen Auge 80 eine mit der UDH-Unterlegscheibe übereinstimmende Lochgeometrie aufweist.

Das Verstärkungselement 70 wird hierzu mit seinem oberen Auge 80 zwischen Kopf des UDH-Bolzens 22 und der rechte Außenfläche des Ausfallendes 12 geklemmt (vgl. insbesondere Fig. 18). Gleichzeitig greift ein Zapfen 90 am unteren Ende des Verstärkungselements in das Innensechskantprofil des B-Bolzens 72 des hier verwendeten, konventionellen Schaltwerks 16 ein.

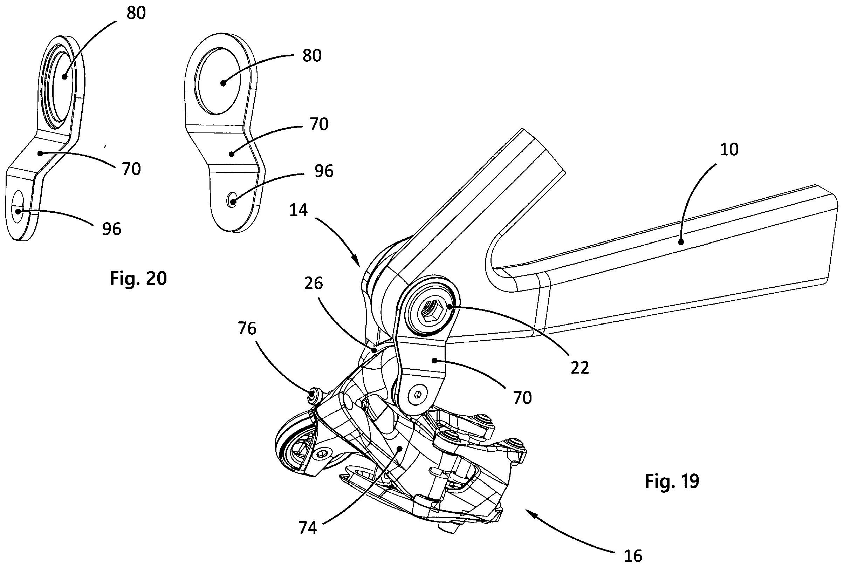

Durch die Klemmung des Verstärkungselements 70 im Bereich seines oberen Auges 80 unter dem UDH-Bolzen 22 ergibt sich zudem ein Reibmoment zur Verdrehsicherung. Damit eignet sich diese Ausführungsform vor allem in Verbindung mit einer Fixierung des Verstärkungselements 70 am B-Bolzen 72, welche dort in konventioneller Weise die freie Schwenkbarkeit des Schaltwerks 16 gewährleistet. Letzteres gilt außer für die Ausführungsformen gemäß Fig. 15 bis 18 auch für die weiter unten beschriebenen Ausführungsformen gemäß Fig. 19 bis 27.

Es muss hierzu jedoch nicht zwangsläufig der aus der DE'834 bekannte UDH und dessen Basisplatte verwendet werden, da sich das Prinzip der zweiarmigen Montage eines konventionellen Schaltwerks insbesondere gemäß Fig. 15 bis 18 auch auf anders gestaltete Schaltaugen anwenden lässt. Hierzu ist ggf. die Geometrie des Verstärkungselements 70, insbesondere dessen Länge, an das jeweils verwendete Schaltauge 14 anzupassen.

Bei der in den Figuren 15 bis 18 konkret gezeigten nicht beanspruchten Ausführungsform ist noch darauf hinzuweisen, dass eine herkömmliche Schraubverbindung 92 zwischen dem UDH-Bolzen 22 und der UDH-Hülse 20 realisiert ist. Die Ausführungsform entspricht insoweit also der bekannten Lösung ähnlich gemäß Fig. 3b aus der DE '834, allerdings mit dem Verstärkungselement 70 anstelle der herkömmlichen UDH-Unterlegscheibe. Es wird der erwähnte Reibschluss zwischen dem UDH-Bolzen 22, dem Ausfallende 12 und dem Verstärkungselement 70 erreicht. Da das Verstärkungselement von außen gesteckt wird, wird auf einfache Weise eine erhöhte Seitensteifigkeit erhalten. Es ist ein konventionelles Schaltwerk ohne Modifikation verwendbar, welches normalerweise mit oder ohne das Verstärkungselement montierbar ist. Der Zapfen ist vorzugsweise derart dimensioniert, dass er in den normalen Inbuskopf eines herkömmlichen konventionellen B-Bolzens eingesteckt werden kann.

Insgesamt wird eine vorteilhafte Zwei-Arm-Aufhängung des Schaltwerks ähnlich EP '324 erhalten, jedoch mit einem konventionellen Schaltwerk 16.

In den Fig. 19 bis 21 ist eine nicht beanspruchte Ausführungsform dargestellt, welche weitestgehend mit der vorstehend beschriebenen Ausführungsform gemäß Fig. 15 bis 18 übereinstimmt. Der Unterschied zwischen dieser Ausführungsform und der vorstehenden Ausführungsform besteht lediglich in der Verbindung des unteren Endes des Verstärkungselements 70 mit dem B-Bolzen 72 des Schaltwerks 16. Diese Verbindung erfolgt hier mittels eines zusätzlichen Gewindeeinsatzes, welcher in das vorhandene Innensechskantprofil des B-Bolzens 72 eingesteckt oder eingepresst wird. Mit diesem Gewindeeinsatz wird wiederum das untere Ende des Verstärkungselements 70 verschraubt. Hierzu weist das Verstärkungselement 70 anstelle des Zapfens 90 eine Öffnung oder Bohrung 96 auf, durch welche eine Befestigungsschraube 98 in eine Schrauböffnung des Gewindeeinsatzes 94 eingeschraubt ist. Vorzugsweise ist ein üblicher B-Bolzen verwendet, in dessen Inbuskopf ein geeigneter Gewindeeinsatz eingesteckt oder eingepresst ist. Auf diese Weise ergibt sich eine besonders feste, spielfreie und belastbare Verbindung des unteren Endes des Verstärkungselements mit dem Schaltwerk.

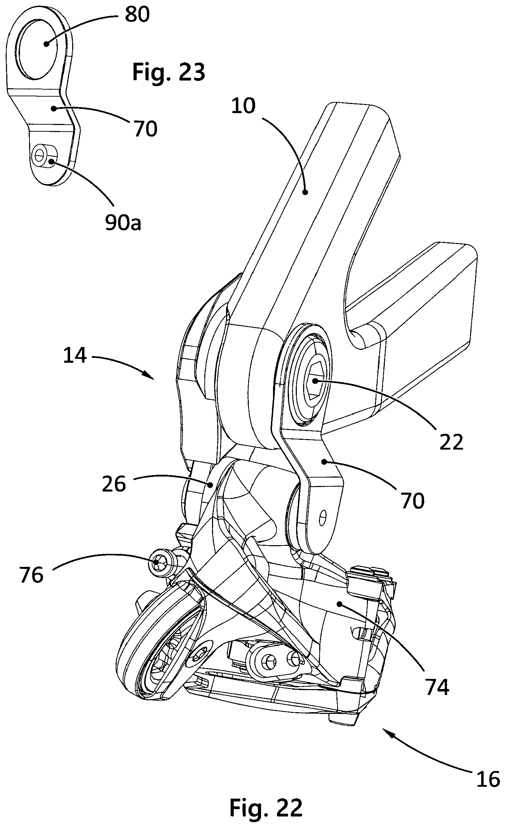

Die nicht beanspruchte Ausführungsform gemäß Fig. 22 bis 24 weist gegenüber der vorstehenden Ausführungsform nach Fig. 19 bis 21 lediglich den Unterschied auf, dass die Verschraubung zwischen dem unteren Ende des Verstärkungselements 70 und dem B-Bolzen 72 des Schaltwerks hier von links und nicht wie bei der vorstehenden Ausführungsform von rechts erfolgt. Auf diese Weise kann auf den bei der vorstehenden Ausführungsform verwendeten Gewindeeinsatz verzichtet werden, und es kann dennoch eine feste Verschraubung zwischen dem Verstärkungselement auch an dessen unterem Ende erfolgen. Gleichzeitig kann auch hier ein nahezu oder vollständig unverändertes, konventionelles Schaltwerk verwendet werden.

Die gezeigte nicht beanspruchte Ausführungsform hat auch Gemeinsamkeiten mit der Ausführungsform der Figuren 16 bis 18. Anstelle des Zapfens 90 ist ein Zapfen 90a auf der Innenseite des Verstärkungselements 70 ausgeführt, welcher mit einer Einschrauböffnung für die von der anderen Seite (von links) zugeführte Befestigungsschraube 100 vorgesehen ist.

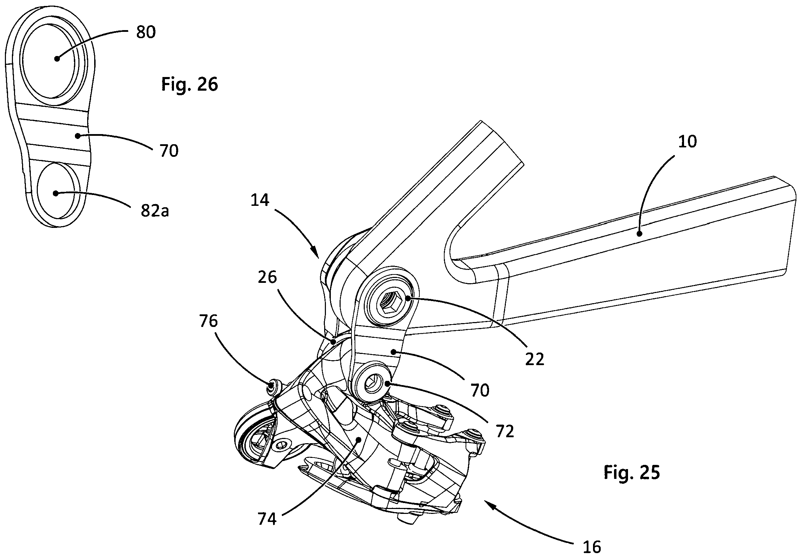

Eine weitere Ausführungsform ist in den Fig. 25 bis 27 dargestellt. Diese Ausführungsform unterscheidet sich von den vorstehend beschriebenen Ausführungsformen gemäß Fig. 15 bis 24 insbesondere durch eine vergrößerte Integration des Verstärkungselements in die Gesamtanordnung, besonders mit dem Schaltwerk 16a.

Es handelt sich um ein nahezu unverändertes Standard-Schaltwerk, dessen B-Knuckle-Lagerkörper lediglich axial etwas verkürzt ist, um Platz für das untere Auge 82a des Verstärkungselements 70 zu schaffen, welches gegenüber dem unteren Auge 82 der vorstehend behandelten Ausführungsform einen größeren Durchmesser für eine nicht klemmende Ausführung aufweist. 102 bezeichnet den Lagerkopf des B-Knuckle 74 und 104 den Kopf des B-Bolzens 72. Der Bolzenkopf 104 des festgezogenen B-Bolzens 72 ist über eine zwischen dem B-Bolzen und dem Lagerkopf 102 eingefügte Lagerbuchse 106 vermittels der B-Scheibe 26 an der Schaltauge-Basisplatte 18 abgestützt. Die B-Scheibe ist hier wie beim konventionellen Schaltwerk noch vorgesehen, als Anschlag für die B-Schraube 76 beim Schaltwerk-Bouncing.

Das Schaltwerk ist somit wie herkömmlich üblich gegen die Kettenspannung frei nach hinten schwenkbar, sodass das Verstärkungselement die erläuterte strukturelle Verbesserung hinsichtlich der Seitensteifigkeit erreicht, aber noch keine funktionale Verbesserung bezüglich eines Energieabbaus durch Reibung beim Schwenken des Schaltwerks nach hinten, wie dies im Prinzip ebenfalls möglich ist und anhand eines weiteren Ausführungsbeispiels nachfolgend erläutert werden wird.

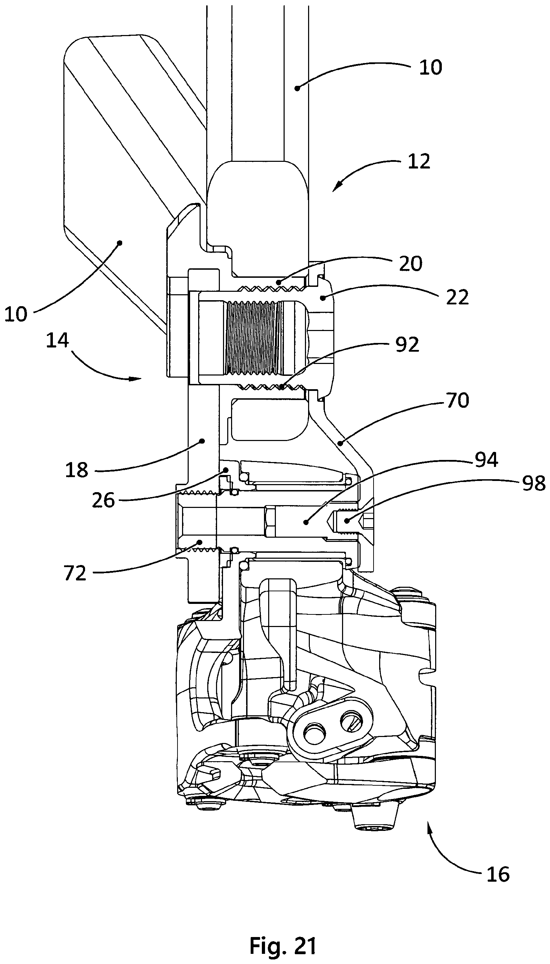

Ein Vergleich von Fig. 27 mit beispielsweise Fig. 21 zeigt, dass bei der Ausführungsform gemäß Fig. 25 bis 27 das Verstärkungselement 70 nicht mehr von rechts außen am B-Bolzen 72 des Schaltwerks 16a angreift wie bei den weiter oben beschriebenen Ausführungsformen gemäß Fig. 15 bis 24, sondern hier mittels seines unteren Auges 82a zwischen dem Kopf 104 des B-Bolzens 72 und dem Lagergehäuse des Schaltwerk-B-Knuckles angeordnet ist.

Wie schon angesprochen, ist aufgrund der hier noch nahezu unverändert vorhandenen P-Knuckle-Lageranordnung das untere Auge des Verstärkungselements dabei jedoch nicht unter dem Kopf 104 des B-Bolzens 72 geklemmt, so dass das Schaltwerk weiterhin konventionell frei um den B-Bolzen nach hinten schwenkbar ist.

Auf diese Weise kann mit einem allenfalls im Bereich seines Lagergehäuses minimal geänderten Schaltwerk eine besonders robuste Zweiarm-Befestigung des Schaltwerks 16a am Ausfallende 12, zusammen mit einem UDH 14 oder auch mit einem konventionellen Schaltauge, erfolgen.

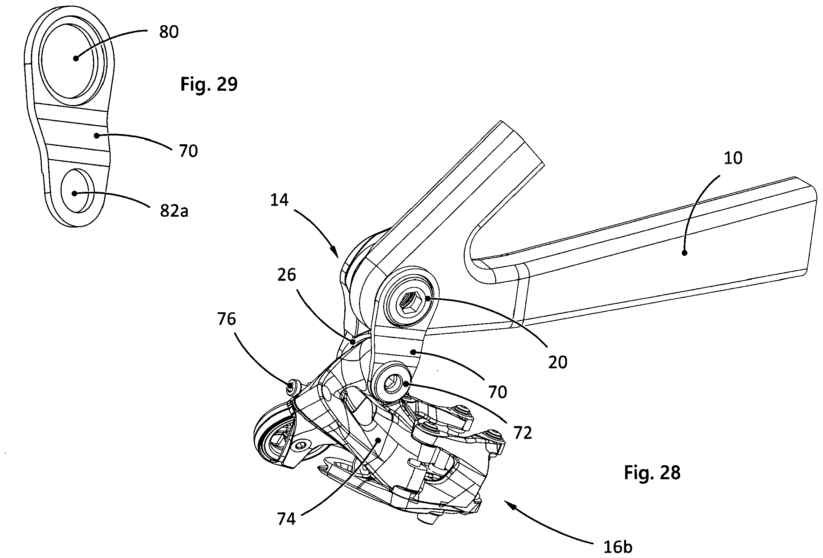

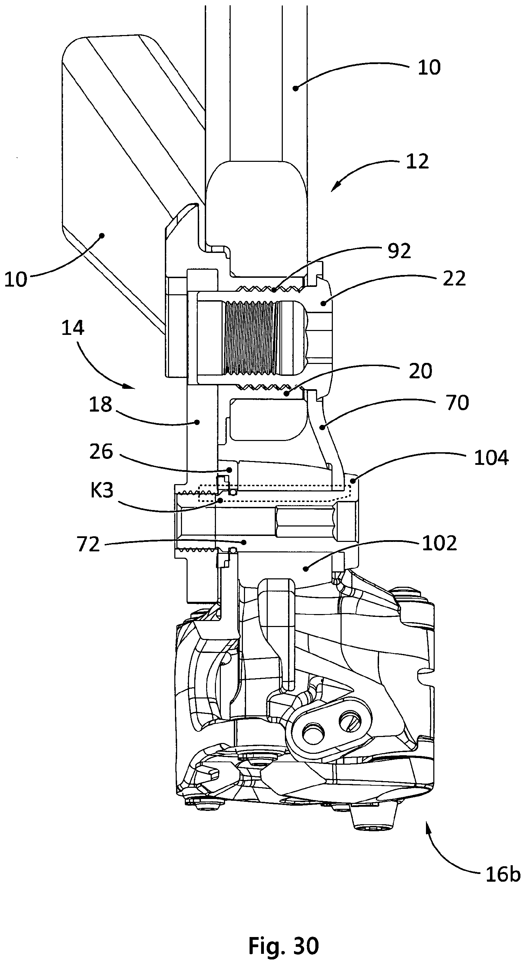

Die weitere nicht beanspruchte Ausführungsform gemäß Fig. 28 bis 30 ist gegenüber der vorstehenden Ausführungsform gemäß Fig. 25 und 27 äußerlich nahezu ununterscheidbar, wie eine Zusammenschau der Fig. 28 und 25 zeigt. Aus einer Zusammenschau der Fig. 30 und 27 wird jedoch deutlich, dass sich die beiden Ausführungsbeispiele im Bereich der Lagerung des B-Knuckle 74 unterscheiden.

Insbesondere ist gemäß Fig. 30 hier die Lagerbuchse 106 des B-Knuckle 74 entfernt, wodurch zunächst einmal bereits Aufwand und Kosten eingespart werden. Zudem führt die Entfernung der Lagerbuchse dazu, dass der Lagerkopf 104 des B-Knuckle 74 durch den B-Bolzen 72 axial zwischen der Schaltaugen-Basisplatte 18 und dem Kopf 104 des B-Bolzens 72 geklemmt wird. Aufgrund dessen ist das Schaltwerk nicht mehr wie bei den vorangegangenen Ausführungsformen (und wie bei konventionell montierten Schaltwerken, vgl. Fig. 1A) frei um den B-Bolzen 72 nach hinten schwenkbar, sondern nur nach Überwindung der durch den Kraftfluss der Klemmung des B-Bolzens erzeugten rotatorischen Reibkräfte beim Schwenken nach hinten.

Auf diese Weise besitzt die nicht beanspruchte Ausführungsform gemäß Fig. 28 bis 30 gegenüber der konventionellen, einseitigen Schaltwerksmontage (vgl. z.B. in Fig. 1A) sowohl vergleichbare strukturelle Verbesserungen bezüglich Seitensteifigkeit als auch vergleichbare funktionale Verbesserungen, insbesondere bezüglich der Unterbindung des unerwünschten sog. Schaltwerks-Bouncing (das nachfolgend beschriebene Aufschlagen im Bereich von B-Schraube und B-Scheibe), wie sie die aus der EP'324 bekannten Schaltwerke mit zweiarmigem B-Knuckle und Hinterachskoaxialer Befestigung gegenüber der konventionellen Schaltwerksmontage aufweisen.

Wie auch in der EP'324 zum Stand der Technik ausgeführt, sind herkömmlich ausgelegte und montierte Schaltwerke (vgl. Fig. 1A) frei schwenkbar um den B-Bolzen ausgelegt, insbesondere um so das Herausnehmen des Hinterrades zu erleichtern. Derartige Schaltwerke werden durch den Kettenzug an einen zumeist justierbaren Vornanschlag gedrückt (üblicherweise via B-Scheibe und B-Schraube, vgl. beispielsweise Fig. 11 bzw. 22), und so in einer definierten rotatorischen Position um den B-Bolzen gehalten. Zum Herausnehmen des Hinterrades können derartige Schaltwerke gegen den Kettenzug um den B-Bolzen nach hinten geschwenkt werden.

Vor allem in rauem Gelände führt dieser Freiheitsgrad konventionell montierter und ausgeführter Schaltwerke jedoch zu Problemen. Durch starkes Aufschwingen der Kette während der Fahrt in unebenem Gelände oder bei Fahrwerksschlägen kann das Schaltwerk vom Anschlag der B-Scheibe bzw. B-Schraube abheben. Dies führt zu Geräuschentwicklungen und fördert weiteres, generell unerwünschtes Aufschwingen der Kette, welches auch als Kettenschlag bekannt ist und beispielsweise zum Abspringen der Kette führen kann.

Zudem kommt es durch dieses Abheben des Schaltwerks vom Anschlag mit nachfolgendem Wiederaufschlagen zu einer starken Impulsbelastung an den Anschlagsflächen zwischen B-Schraube, B-Scheibe und Ausfallende bzw. Schaltaugen-Basisplatte, woraus sich eine Reihe typischer Schadensfälle herkömmlicher Schaltwerke ergeben, wie beispielsweise brechende B-Schrauben oder B-Scheiben, oder ein unerwünschtes Verstellen der B-Schraube.

Bei Stößen von vorne kann ein konventionell montiertes Schaltwerk (vgl. Fig. 1A) je nach Stoßrichtung kaum ausweichen (beispielsweise wenn die Richtung des Stoßes auf das Schaltwerk näherungsweise durch den B-Bolzen des Schaltwerks verläuft, vgl. die beispielhafte Darstellung der Stoßrichtung in Fig. 11).

Zudem wird durch ein etwaiges Ausweichen des Schaltwerks aufgrund der freien Rotierbarkeit konventioneller Schaltwerk um den B-Bolzen kaum Energie abgebaut. Dies kann insbesondere in Situationen ein Problem darstellen, in denen der Schwenkbereich nach hinten voll ausgenutzt wird, beispielsweise im Fall des Verklemmens der Kette im Schaltwerk.

Diese Nachteile bzw. Probleme im Fahrbetrieb werden mit dem Ausführungsbeispiel gemäß Fig. 28 bis 30 vermieden, ähnlich wie durch die in der EP'324 beschriebenen Lösungen, hier allerdings unter Verwendung eines weitgehend konventionellen, nur geringfügig im Bereich seines Lagerkopfes veränderten Schaltwerks.

Zudem wird, wie bereits weiter oben ausgeführt, durch die zweiarmige Montage des Schaltwerks auch bei dieser Ausführungsform eine erhebliche Erhöhung der Seitensteifigkeit der Schaltwerksbefestigung erreicht. Das bei konventioneller Schaltwerksmontage (vgl. Fig. 1A) bekannte relativ leichte Verbiegen des Schaltauges oder des Rahmen-Ausfallendes durch Krafteinwirkung, wie z.B. durch seitliche Aufschläge auf das Schaltwerk in rauem Gelände, mit den damit verbundenen unerwünschten Folgen u.a. hinsichtlich der Schaltpräzision, wird auf diese Weise faktisch vollständig unterbunden.

Wesentliche Aspekte der beschriebenen nicht beanspruchten Ausführungsform sind also die folgenden: Anstelle der herkömmlichen UDH-Unterlegscheibe (vgl. etwa Fig. 3b aus DE '834: Reibschluss zwischen UDH-Bolzen, Ausfallende und Scheibe) ist das Verstärkungselement 70 vorgesehen und durch den UDH-Bolzen 22 gehalten und nach Festziehen der Steckachse gegen das rechte Ausfallende 12 geklemmt. Da das Basiselement (B-Knuckle) des Schaltwerks 16b axial durch den B-Bolzen 72 geklemmt ist, ist es schwenkbar, wenn der B-Bolzen gelöst ist. Eine Einstellung des Chain-Gap und ein Radausbau kann also nur erfolgen, wenn der B-Bolzen gelöst würde. Insgesamt ist eine wesentliche strukturelle Verbesserung hinsichtlich der Seitensteifigkeit und eine funktionale Verbesserung hinsichtlich der Vermeidung eines Bouncing erreicht. Es ist ein nahezu unverändertes Standard-Schaltwerk verwendet. Lediglich das B-Knuckle-Lager ist axial verkürzt für das untere Auge des Verstärkungselements, und es ist die Schwenklagerung mittels der angesprochenen Lagerbuchse weggelassen. Trotz der rotatorischen Klemmung des B-Knuckle ist die B-Scheibe 18 hier noch vorhanden, da ein weitgehend unverändertes Schaltwerk verwendet wird.

K3 bezeichnet in Fig. 30 den Kraftfluss der Klemmung des B-Knuckle 74 durch den B-Bolzen 72. Das Verstärkungselement 70 hat ein unteres Auge 82b kleineren Durchmessers für die beschriebene klemmende Ausführung.

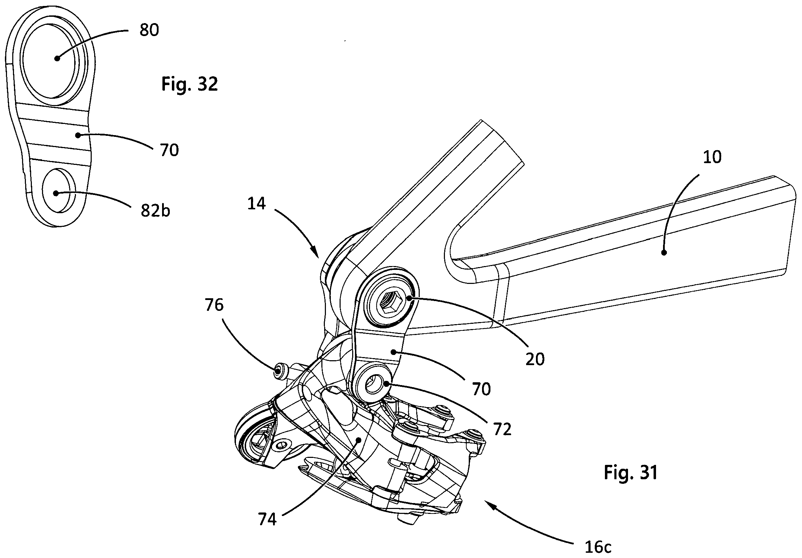

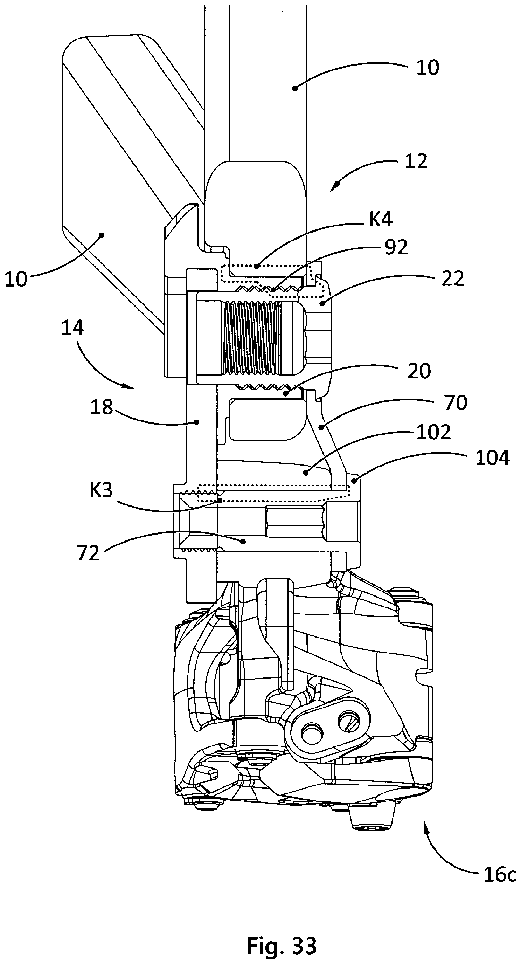

Eine weitere nicht beanspruchte Ausführungsform ist in Fig. 31 bis 34 dargestellt. Diese Ausführungsform ist weitestgehend identisch mit dem vorstehend beschriebenen Ausführungsbeispiel gemäß Fig. 28 bis 30. Wie insbesondere eine Zusammenschau der Fig. 33 und 30 zeigt, entfällt bei der Ausführungsform gemäß Fig. 31 bis 34 jedoch die bei den vorigen Ausführungsformen noch vorhandene B-Scheibe.

Eine B-Schraube 76 ist weiterhin vorhanden, vgl. eine Zusammenschau der Fig. 31 und 28. Bei den Ausführungsformen gemäß Fig. 28 bis 34 dient die B-Schraube jedoch lediglich noch der Einstellung des Chain-Gap.

Aufgrund der vorstehend bereits hinsichtlich des Ausführungsbeispiels gemäß Fig. 28 bis 30 beschriebenen, rotatorisch klemmenden Befestigung des B-Knuckle zwischen Schaltaugen-Basisplatte und Verstärkungselement muss die B-Schraube hier kein rotatorisches Aufschlagen des Schaltwerks beispielsweise durch Aufschwingen der Kette mehr ertragen. Hierdurch kann die B-Schraube konstruktiv schwächer ausgeführt werden, und insbesondere die B-Scheibe komplett entfallen, wie dies bei der Ausführungsform gemäß Fig. 31 bis 34 der Fall ist.

Wie eine Zusammenschau der Fig. 31 und 28 zeigt, kann die B-Schraube dementsprechend auch weiter oben bzw. rotatorisch näher am B-Bolzen angeordnet werden. Damit ist verbunden, dass die B-Schraube ohne die üblicherweise dazwischen angeordnete B-Scheibe direkt auf die Anschlagfläche des Schaltauges wirkt (vgl. beispielsweise Fig. 2, 3, 7 oder 16).

Fig. 33 zeigt ähnlich wie auch bereits Fig. 30 ferner den klemmenden Kraftfluss K3, welcher bei dieser und der vorherigen Ausführungsform durch den B-Bolzen 72 erzeugt wird, und welcher das B-Knuckle 74 des Schaltwerks 16c, wie vorstehend beschrieben, rotatorisch relativ zum Schaltauge 14 festlegt. In Fig. 33 ist zudem stellvertretend für alle Ausführungsbeispiele gemäß Fig. 15 bis 37 der das Universal-Schaltauge (UDH) bei gelöster Steckachse im Rahmen-Ausfallende fixierende Kraftfluss K4 gezeigt.

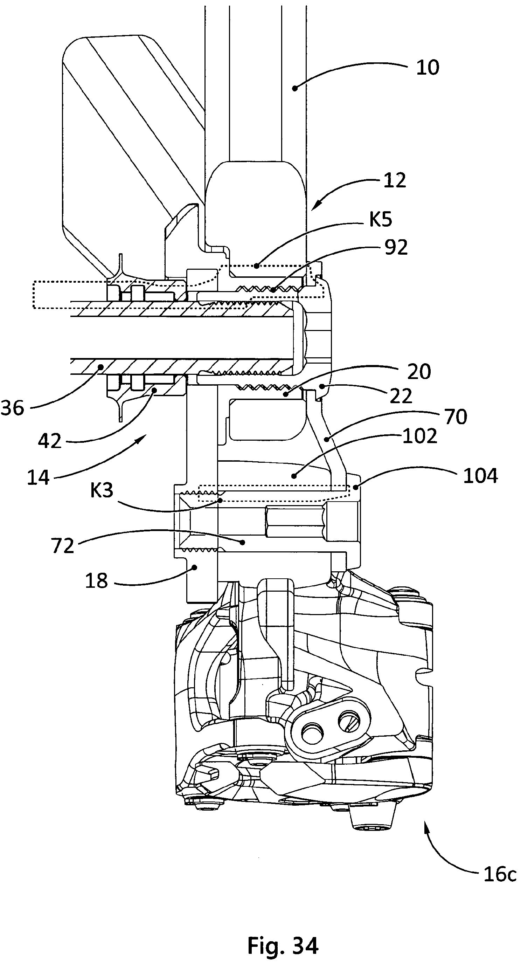

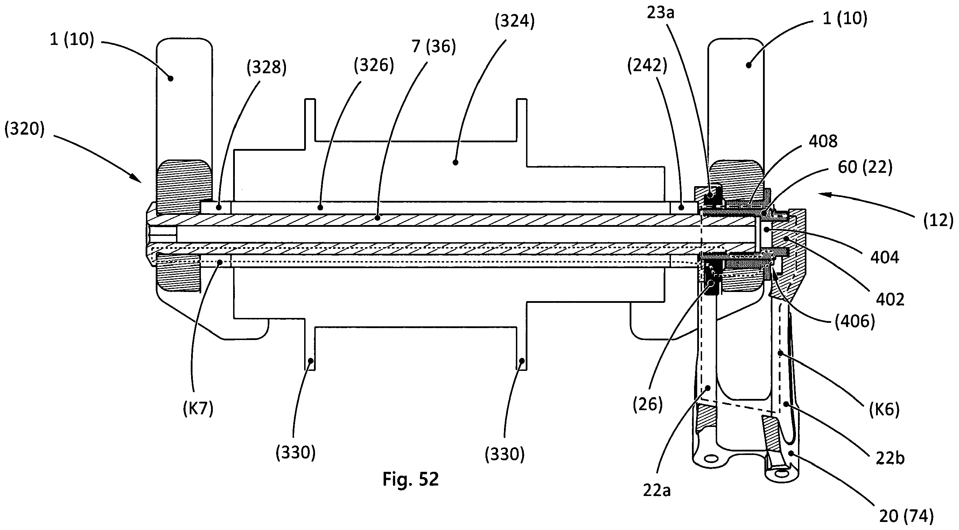

Fig. 34 entspricht genau Fig. 33 mit dem einzigen Unterschied, dass in Fig. 34 die Steckachse des Hinterrades montiert ist, wodurch sich der gegenüber Fig. 33 geänderte Kraftfluss K5 im Bereich des UDH-Bolzens 22 und des Ausfallendes 12 ergibt. Der in Fig. 34 gezeigte Kraftfluss durch die Steckachse wird über die (hier nicht dargestellte) Nabe sowie über das (hier ebenso nicht gezeigte) linke Ausfallende geschlossen, ähnlich wie auch in Fig. 52 gezeigt. Dieser Kraftfluss repräsentiert sinngemäß den Kraftfluss für alle Ausführungsbeispiele gemäß den Figuren 15 bis 37, vgl. auch Fig. 52 sowie EP '324, Absatz [0082], Fig. 14, 16 und 24a im Falle der montierten und festgezogenen Steckachse 36.

Besonderheiten der beschriebenen nicht beanspruchten Ausführungsform sind zusammenfassend die folgenden: Es ist ein vereinfachtes Schaltwerk ohne Schwenklagerung im B-Knuckle sowie ohne B-Scheibe verwendet, welches bei festgezogenem B-Bolzen nur gegen Reibungen nach hinten schwenkbar ist. Hierzu ist der B-Knuckle wie beim Ausführungsbeispiel gemäß Figuren 28 bis 30 geklemmt. Auf die B-Scheibe kann verzichtet werden, da sie wegen der Klemmung nicht mehr nötig ist, sodass eine weitere Kostenersparnis erreicht wird. Die B-Schraube unterliegt einer reduzierten Belastung, da sie nun noch zur Einstellung des Chain-Gap und nicht mehr zur Aufnahme von Schaltwerksschlägen beim Bouncing dient, aufgrund der Energie aufnehmenden Klemmung des Schaltwerks durch den B-Bolzen ähnlich EP '324.

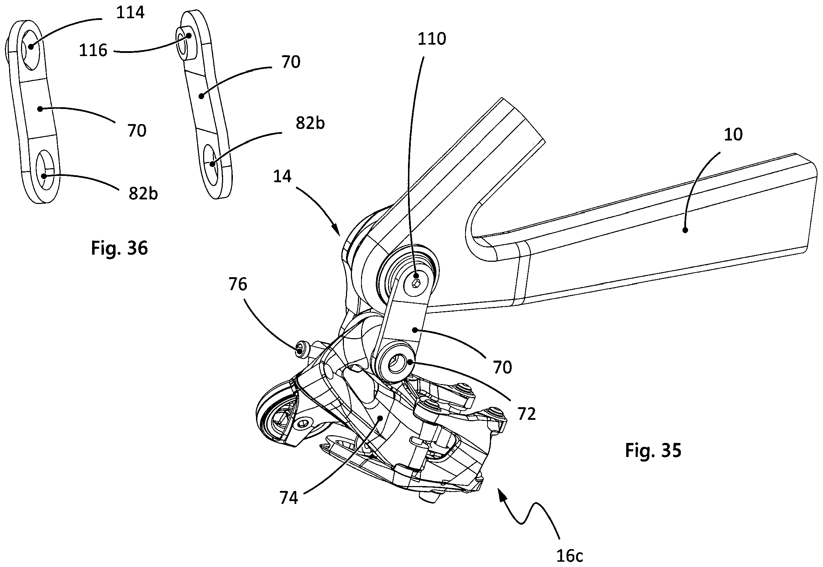

Fig. 35 bis 37 zeigen eine weitere nicht beanspruchte Ausführungsform für eine zweiarmige Montage eines weitgehend konventionellen Schaltwerks. Diese Ausführungsform ist im Bereich des Schaltwerks 16c und des B-Bolzens 72 praktisch identisch mit der vorherigen Ausführungsform gemäß Fig. 31 bis 34.

Wie insbesondere eine Zusammenschau bzw. ein Vergleich der Fig. 37 und 33 zeigt, ist auch bei der Ausführungsform gemäß Fig. 35 bis 37 das Schaltwerk wieder durch den B-Bolzen 72 rotatorisch klemmend an der Schaltaugen-Basisplatte 18 befestigt, mit denselben Vorteilen wie vorstehend beschrieben. Die herkömmliche B-Scheibe ist entfallen, und die B-Schraube unterliegt nur noch geringen Belastungen.

Wie im Wesentlichen schon erläutert, muss bei den nicht beanspruchten Ausführungsformen z.B. gemäß Fig. 31 und Fig. 35 die B-Schraube keine ungebremsten Schaltwerksschläge mehr abfangen, ist die B-Schraube bei diesen Ausführungsformen daher - unter Entfall der B-Scheibe - bezogen auf den B-Bolzen radial weiter innen angeordnet, und liegt die B-Schraube damit direkt am Vornanschlag des Schaltungsauges an. Dies im Unterschied beispielsweise zu den Ausführungsformen gemäß Fig. 15, Fig. 19, Fig. 22, Fig. 25 und Fig. 28, bei denen noch eine B-Scheibe vorhanden und die B-Schraube entsprechend auf einem größeren Radius angeordnet ist.

Im Unterschied zur vorherigen Ausführungsform gemäß Fig. 31 bis 34 erfolgt bei der nicht beanspruchten Ausführungsform gemäß Fig. 35 bis 37 die obere Befestigung des Verstärkungselements 70 im Bereich des Ausfallendes 12 bzw. des UDH-Bolzens 22 jedoch durch eine zusätzliche Befestigungsschraube 110, die in einem im UDH-Bolzen 22 angeordneten Gewindeeinsatz 112, oder alternativ (nicht dargestellt) in ein direkt im UDH-Bolzen angeordnetes Gewinde eingreift. Auf diese Weise kann der UDH-Bolzen 22 einschließlich der UDH-Unterlegscheibe 24 (vgl. Fig. 1A) vollständig unverändert bleiben.

Anstelle des oberen Auges der anderen entsprechenden Ausführungsformen weist das Verstärkungselement 70 eine Aufnahme 114 für die Befestigungsschraube 110 und einen Fortsatz 116 auf, der in einer Öffnung des UDH-Bolzen 22 eingreift, wie in Fig. 37 zu erkennen. Die Befestigungsschraube 110 erstreckt sich durch einen Durchgang des Fortsatzes 116, der sich an die Aufnahme 114 anschließt.

Ohne dass dies eigens dargestellt oder im Einzelnen beschrieben ist, können die Ausführungsformen gemäß Fig. 2 bis 37 im Detail miteinander kombiniert und untereinander ausgetauscht werden, insbesondere durch a) Austausch der jeweiligen Befestigung (geklemmt oder geschraubt) des Schaltauges bzw. UDH im Ausfallende und b) Kombination mit bzw. Austausch der jeweiligen oberen Befestigung eines etwa vorgesehenen Verstärkungselements im Bereich des Ausfallendes bzw. UDH-Bolzens sowie c) Kombination mit bzw. Austausch der jeweiligen unteren Verbindung zwischen Verstärkungselement und Schaltwerks-B-Knuckle im Bereich des B-Bolzens.

Insbesondere kann bei den vorstehend beschriebenen Ausführungsformen die Schraubverbindung 92 zwischen der UDH-Hülse 20 und dem UDH-Bolzen 22 durch eine Schnapp- oder Rastverbindung entsprechend den weiter oben behandelten Ausführungsbeispielen ersetzt werden.

Zur Montage der verschiedenen Ausführungsformen ist noch auf Folgendes hinzuweisen. Bei den nicht beanspruchten Ausführungsformen der Fig. 15 bis 24 erfolgt die Montage des UDH mit dem Verstärkungselement und dem Schaltwerk am Rahmen am besten auf die folgende Weise: Zuerst wird das Schaltwerk an dem UDH angebracht und dieser dann durch Einführen der UDH-Hülse 20 in die Montageöffnung des rechten Ausfallendes an diesem angeordnet. Anschließend wird das Verstärkungselement außenseitig positioniert, unter Herstellung des Eingriffs des Verstärkungselements mit dem B-Bolzen, worauf dann der UDH-Bolzen von der Außenseite her in der UDH-Hülse fixiert wird. Im Falle der Ausführungsform der Fig. 19 bis 21 könnte die Herstellung des Eingriffs des Verstärkungselements 70 mit dem UDH-Bolzen 72 vermittels der Befestigungsschraube 98 auch später erfolgen, nach Fixierung des UDH-Bolzen 22 in der UDH-Hülse 20. Bei dieser Ausführungsform kommt alternativ auch in Betracht, das Schaltwerk erst später zu montieren, nach Positionierung des UDH 14 mit dem UDH-Bolzen 22 am Ausfallende, indem das Verstärkungselement 70, wenn es durch den UDH-Bolzen 22 noch nicht festgezogen ist, zur Seite gedreht wird, um das Schaltwerk am UDH zu positionieren und durch Einschrauben des B-Bolzens in die untere Montageöffnung der Basisplatte 18 daran zu montieren. Danach kann das Verstärkungselement 70 in die richtige Position gedreht werden und mit der Befestigungsschraube 98 am B-Bolzen montiert werden. Anschließend kann dann die Schraubverbindung 92 zwischen dem UDH-Bolzen 22 und der UDH-Hülse 20 festgezogen werden.

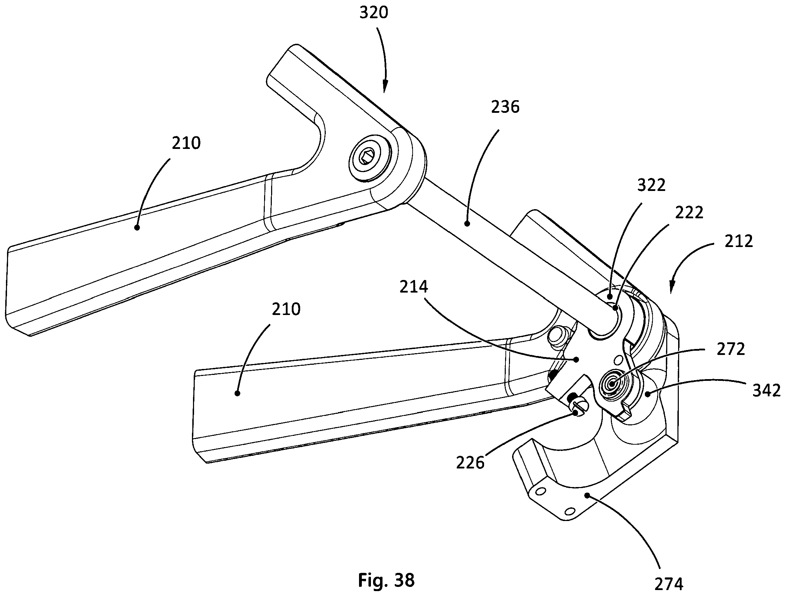

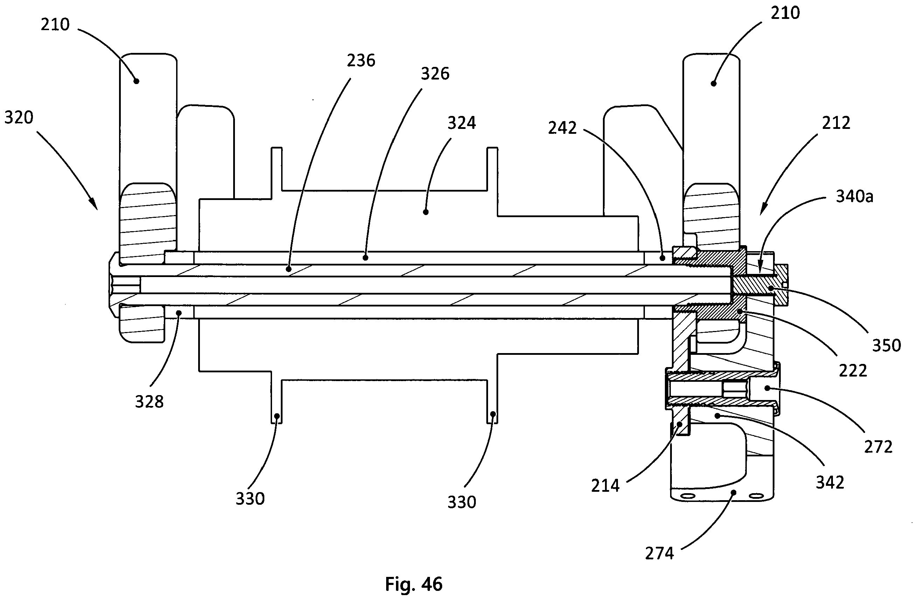

Fig. 38 bis 46 zeigen weitere nicht beanspruchte Ausführungsbeispiele für Schaltwerke bzw. für deren Montage, wobei die Schaltwerke für sich genommen zwar einarmig wie konventionelle Schaltwerke (vgl. Fig. 1A) ausgeführt sind, jedoch durch besondere Gestaltung im montierten Zustand zusammen mit einem verwendeten Schaltauge eine Zweiarm-Anordnung ähnlich der Offenbarung in der EP'324 bilden, mit denselben dort beschriebenen sowie oben u.a. zu Fig. 11 bis 14 nochmals angesprochenen Vorteilen.

Die Zweiarm-Anordnung wird bei den nicht beanspruchten Ausführungsformen gemäß Fig. 38 bis 46 dadurch erreicht, dass das B-Knuckle 274 des jeweiligen Schaltwerks 216 speziell ausgebildet ist dergestalt, dass es im montierten Schaltwerkszustand zusammen mit dem Schaltauge 214 eine integrale, zweiarmig am rechten Ausfallende 212 abgestützte Einheit bildet.

Soweit sinnvoll, werden im Folgenden für entsprechende oder analoge Elemente dieselben Bezugszeichen verwendet wie bei der vorangehenden Beschreibung der bisher behandelten Ausführungsformen, allerdings jeweils vermehrt um 200. Zusätzlich oder neu vergebene Bezugszeichen setzen mit dem Bezugszeichen 320 ein.

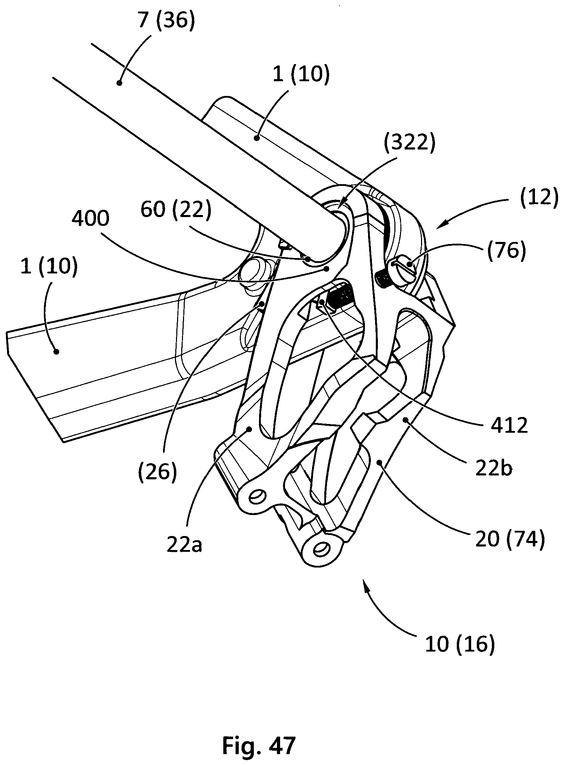

Diese spezielle Ausbildung der Schaltwerke nach den Ausführungsformen gemäß Fig. 38 bis 46 wird nachfolgend als "1,5-Arm-Ausführung" bzw. "1,5-Arm-Schaltwerk" bezeichnet, zur Abgrenzung einerseits gegenüber den konventionellen, einarmig ausgebildeten und einarmig montierten Schaltwerken nach dem Stand der Technik (vgl. Fig. 1A), und andererseits gegenüber zweiarmig ausgebildeten Schaltwerken wie aus der der EP'324 bekannt, und wie in einer weiteren Ausführungsform auch in Fig. 47 bis 55 dargestellt.

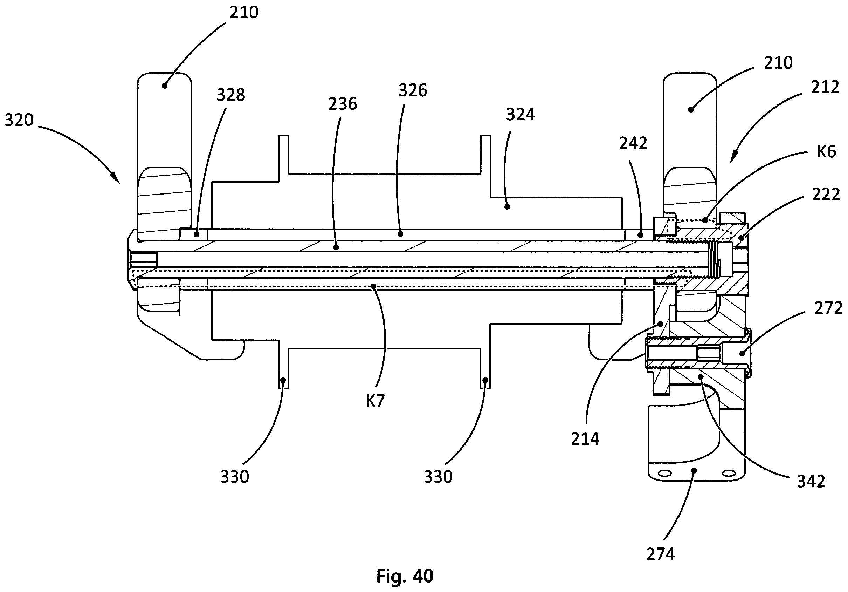

Eine erste nicht beanspruchte Ausführungsform für ein 1,5-Arm-Schaltwerk ist in Fig. 38 bis 40 gezeigt. Fig. 38 zeigt eine perspektivische Ansicht auf den Hinterbau des Fahrradrahmens 210, nämlich den linken Rahmen-Hinterbau mit dem linken Ausfallende 320 und den rechten Rahmen-Hinterbau mit dem rechten Ausfallende 212. Ein Schaltauge 214 bildet gewissermaßen einen inneren Schaltwerksarm, der bei eingeschraubter Steckachse 236 zwischen der Nabenendkappe und der B-Scheibe (sofern vorhanden) rotatorisch geklemmt ist (vgl. Fig. 40 sowie analoge Situation gemäß Fig. 52). Dies bietet den Vorteil, dass bei Schaltwerkkollisionen durch Reibung ein Energieabbau erfolgt und kein Schlagen des Schaltwerks eintritt. Der äußere Schaltwerksarm wird von einem Abschnitt des B-Knuckle 274 gebildet. Zum Ausbauen des hinteren Laufrads des Fahrzeugs, kann der B-Knuckle 274 samt dem Schaltauge 214 nach Lösen der Steckachse nach hinten geschwenkt werden. 322 bezeichnet die Klemmfläche des Schaltauges 214, an welcher die Nabenachse bzw. Nabenendkappe anliegt. Das Schaltauge 214 ist mit einer B-Schraube 226 für die Chain-Gap-Einstellung im Wege einer Winkelfeststellung zwischen dem Schaltauge und dem Rahmen 210 aufgeführt.

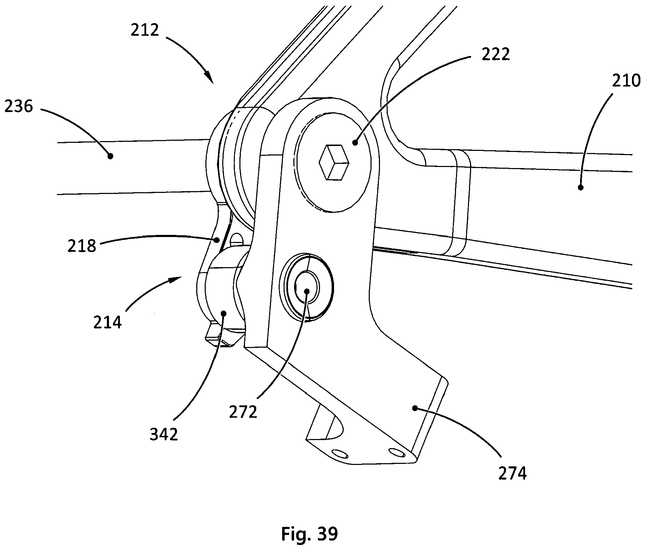

Fig. 39 lässt besonders gut erkennen, wie das Schaltauge 214 zusammen mit dem B-Knuckle 274 eine Zweiarm-Anordnung für die in Bezug auf die Nabenachse koaxiale Montage am rechten Ausfallende 212 bildet, wodurch Vorteile ähnlich der durch die Lösung der EP '324 erreichten Vorteile erhalten werden.

Das Schaltauge 214 ist bei dem gezeigten Ausführungsbeispiel ohne eine angeformte UDH-Hülse ausgeführt, also einfach von einer Basisplatte 218 gebildet. Alternativ könnte man aber eine UDH-Hülse vorsehen.-

Wie also insbesondere in Fig. 38 erkennbar, liegt bei dieser nicht beanspruchten Ausführungsform ein speziell ausgebildetes Schaltauge 214 vor. Bei diesem Schaltauge ist die üblicherweise im Schaltwerk angeordnete B-Schraube 226 (vgl. z.B. Fig. 11 bzw. 22) stattdessen im bzw. am Schaltauge 214 angeordnet. Die Einstellung des Chain-Gap erfolgt bei dieser Ausführungsform somit durch Verstellung der am Schaltauge angeordneten B-Schraube 226.

Hierzu wird die Steckachse 236 zumindest geringfügig gelöst, um die rotatorische Verstellbewegung der aus dem Schaltauge 214 sowie dem hier durch das B-Knuckle 274 repräsentierten 1,5-Arm-Schaltwerk gebildeten zweiarmigen Einheit zu ermöglichen, vgl. Kraftfluss K7 bei festgezogener Steckachse in Fig. 40. Je nach Ausführung der Toleranzlage im Bereich des Kraftflusses K6 gemäß Fig. 40 (Kraftfluss ohne Steckachse) ist hierzu auch der Achsbolzen geringfügig zu lösen.

Im Falle der Situation, dass die schraubbare Steckachse 236 noch fehlt oder nicht festgezogen ist (Kraftfluss K6), werden der B-Knuckle 274 und das Schaltauge 214 durch den in die zugehörige Montageöffnung des Schaltauges 214 eingeschraubten Achsbolzen 222 zusammengehalten und am Ausfallende 212 fixiert. Ist die Steckachse 236 in das Innengewinde des Achsbolzens 222 eingeschraubt und festgezogen, resultiert der Kraftfluss K7 zwischen den beiden Ausfallenden.

In Fig. 40 sind einige übliche Komponenten nur symbolhaft repräsentiert, nämlich die Nabenendkappe 242, die Hinterradnabe 324, die Nabenachse 326, die Nabenendkappe 328 und Speichenflansche 330.

Wie aus jeder der Fig. 38 bis 40 ersichtlich, wird bei dieser nicht beanspruchten Ausführungsform die zweiarmige Anordnung mittels einer Verbindung von Schaltauge 214 und B-Knuckle 274 des 1,5-Arm-Schaltwerks über zwei Bolzen gebildet, nämlich über den Achsbolzen 222 (vgl. UDH-Bolzen gemäß Fig. 1A, bzw. den üblichen Gewindebolzen einer Steckachse) sowie über den B-Bolzen 272 (vgl. üblichen B-Bolzen auch an konventionellen Schaltwerken wie beispielsweise in Fig. 11).

Im Unterschied zu konventionell montierten Schaltwerken z.B. gemäß Fig. 1A oder Fig. 11, deren Schwenkbewegung und damit Chain-Gap-Einstellung um den B-Bolzen und somit exzentrisch zur Hinterradachse erfolgt, ist die nach der Ausführungsform gemäß Fig. 38 bis 40 gebildete Zweiarm-Anordnung (einschließlich des darin enthaltenen 1,5-Arm-Schaltwerks) konzentrisch zur Hinterachse schwenkbar.

Damit weist diese nicht beanspruchte Ausführungsform bezüglich der Einstellung des Schaltwerks dieselben Vorteile auf wie die aus der EP'324 bekannten Schaltwerke zur koaxialen Montage, insbesondere hinsichtlich der erheblich vereinfachten Einstellung des Chain-Gap (vgl. z.B. Fig. 10 und Absatz [0089] Ziff. iv in der EP'324), sowie hinsichtlich des damit ermöglichten Wegfalls insbesondere der Anschlagschraube (vgl. B-Schraube 76) für den inneren (linken) Begrenzungsanschlag des Schaltwerks (vgl. z.B. Fig. 11 und Absatz [0095] in der EP'324).

Auch die Genauigkeit, Reproduzierbarkeit und dauerhafte Stabilität der Toleranzkette zwischen der Axialposition der einzelnen Ritzel und der Axialposition des oberen Schaltwerks-Röllchens, welche entscheidend ist für die bleibende Schaltpräzision des Schaltwerks, ist bei der Ausführungsform gemäß Fig. 38 bis 40 in derselben Weise gewährleistet wie bei den aus der EP'324 bekannten Schaltwerken zur koaxialen Montage (vgl. z.B. Fig. 12 und Absätze [0008], [0039], [0099] in der EP'324).

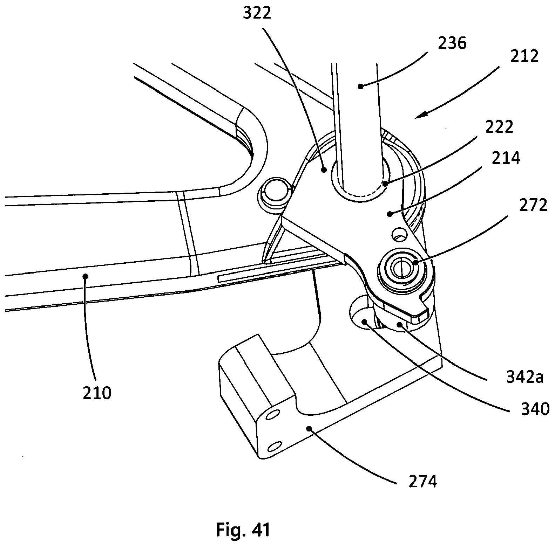

Ein weiterer Vorteil bzw. eine weitere Besonderheit der nicht beanspruchten Ausführungsform gemäß Fig. 38 bis 40 besteht darin, dass an dem dort gezeigten Schaltauge 214 anstelle des 1 ,5-Arm-Schaltwerks, wahlweise auch ein konventionelles Schaltwerk (vgl. Fig. 1A) montiert werden kann. Dies gilt auch für die nachfolgend beschriebenen Ausführungsformen gemäß Fig. 41 bis 46.

Die Ausführungsform gemäß Fig. 41 bis 43 stimmt in den meisten Eigenschaften sowie hinsichtlich der dort genannten Vorteile mit der zuvor beschriebenen Ausführungsform gemäß Fig. 38 bis 40 überein.

Der wesentliche Unterschied zwischen der nicht beanspruchten Ausführungsform gemäß Fig. 41 bis 43 und der davor beschriebenen Ausführungsform gemäß Fig. 38 bis 40 besteht darin, dass das Schaltauge 214 bei der Ausführungsform gemäß Fig. 41 bis 43 nicht zur Einstellung des Chain-Gap schwenkbar, sondern (zum Fahrbetrieb) in einer fixierten, definierten Winkelposition relativ zum Rahmen-Ausfallende montiert ist, wie insbesondere aus Fig. 41 ersichtlich. Die zur Einstellung des Chain-Gap erforderliche Schwenkbarkeit wird bei dieser Ausführungsform durch ein Langloch 340 im B-Knuckle 274 des 1,5-Arm-Schaltwerks erreicht, wodurch das Schaltwerk nach (geringfügigem) Lösen des B-Bolzens 272 um den Achsbolzen 222 geschwenkt, und somit der Chain-Gap bzw. die Kettenspannung eingestellt werden kann.

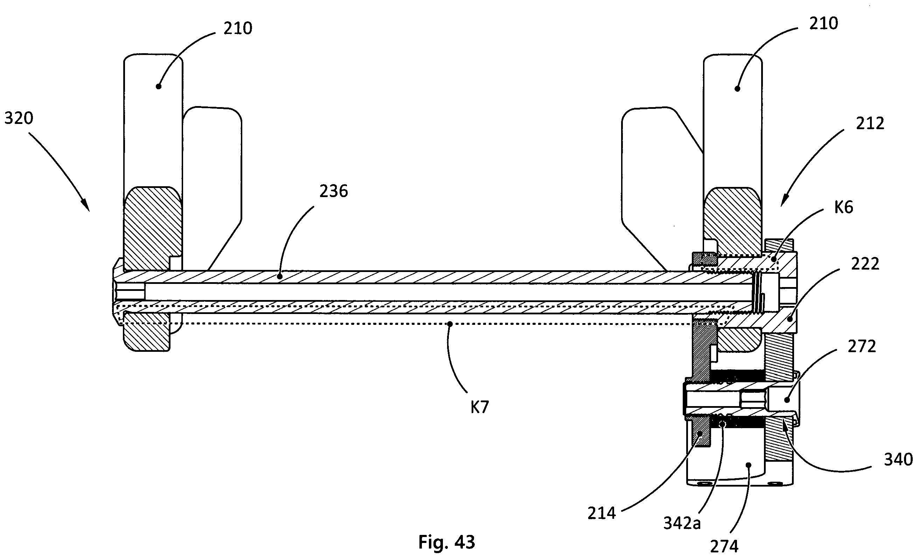

Die Schwenkbarkeit des Schaltwerks zur Entnahme des Hinterrads wird bei der nicht beanspruchten Ausführungsform gemäß Fig. 41 bis 43 ebenfalls wieder dadurch erreicht, dass die Verschraubung der Steckachse gelöst wird, bzw. die Steckachse entfernt wird. Je nach Ausführung der Toleranzlage im Bereich des Kraftflusses K6 (Kraftfluss ohne Steckachse, s. Fig. 43) ist hierzu auch der Achsbolzen geringfügig zu lösen. Daraufhin kam die Anordnung aus Schaltwerk und Schaltauge um die Hinterradachse nach hinten verschwenkt, und das Hinterrad entnommen werden.

Bei der nicht beanspruchten Ausführungsform der Fig. 38 bis 40 ist der B-Knuckle 274 mit einem in Richtung zum Schaltauge 214 vorstehenden, sich im montierten Zustand an diesem abstützenden Fortsatz 342 ausgeführt, der einteilig mit B-Knuckle ausgeführt ist. Durch den festgezogenen B-Bolzen 272 steht der B-Knuckle an diesem Fortsatz unmittelbar mit dem Schaltauge 214 in Klemmeingriff.

Bei der nicht beanspruchten Ausführungsform der Fig. 41 bis 43 erfolgt der Klemmeingriff zwischen dem B-Knuckle und dem Schaltauge 214 bei festgezogenem B-Bolzen 272 durch einen zwischenliegenden Abstandshalter 342a, der als einfache Hülse ausgeführt sein kann, durch den sich der B-Bolzen 272 erstreckt.

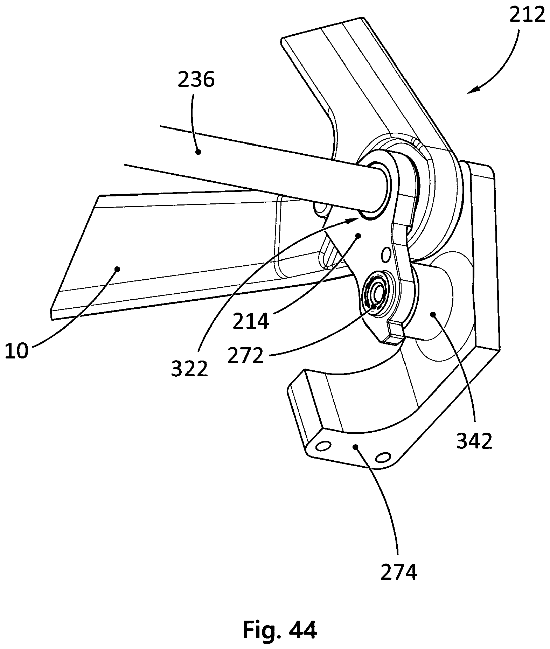

Eine weitere nicht beanspruchte Ausführungsform für eine Zweiarm-Anordnung ist in Fig. 44 bis 46 gezeigt. Diese Ausführungsform hat auf den ersten Blick erhebliche Ähnlichkeit mit der vorherigen Ausführungsform gemäß Fig. 41 bis 43.

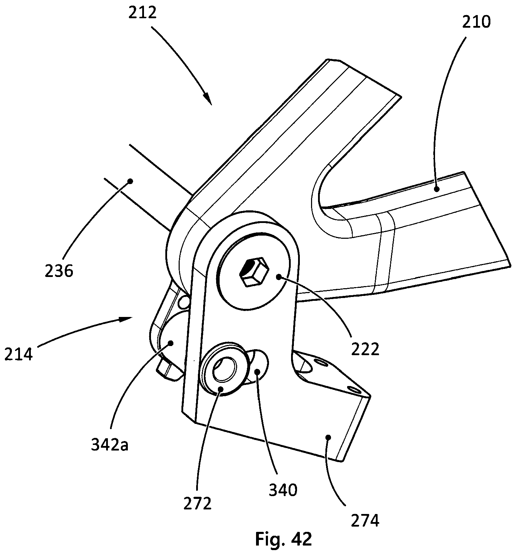

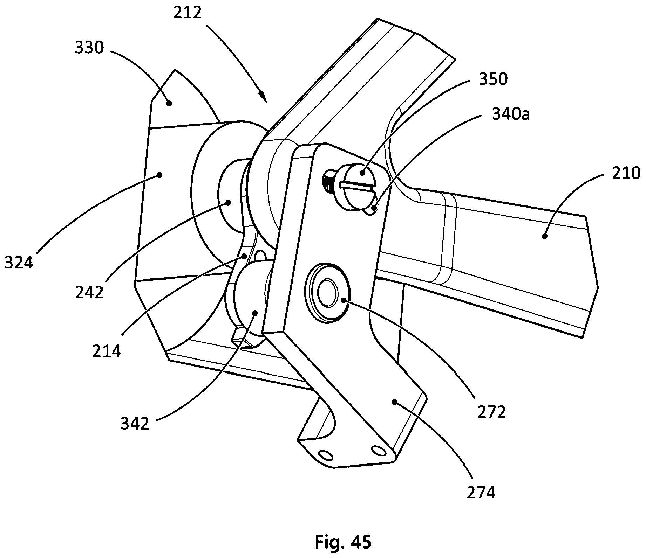

Der Unterschied zwischen diesen beiden Ausführungsformen wird durch eine Zusammenschau insbesondere der Fig. 45 und 42 deutlich. Hierdurch wird erkennbar, dass bei der Ausführungsform gemäß Fig. 45 bis 47 die Chain-Gap-Einstellung nicht durch Schwenken des B-Knuckle 274 um den Achsbolzen 222 erfolgt (wie bei der Ausführungsform gemäß Fig. 41 bis 43), sondern exzentrisch zur Radachse durch Schwenken um den B-Bolzen 272, ähnlich wie bei einem konventionell montierten Schaltwerk (vgl. Fig. 1A oder Fig. 11).

Hierzu weist das Basiselement (B-Knuckle) 274 ein dem Achsbolzen 222 benachbartes Langloch 340a auf, durch welche eine Klemmschraube 350 hindurchgeführt und in einer Schrauböffnung des Achsbolzens 222 eingeschraubt ist. Durch Anziehen der Klemmschraube 350 wird der B-Knuckle 274 in einer jeweiligen, die gewünschte Chain-Gap-Einstellung erreichenden Schwenkstellung fixiert.

Die im Zusammenhang mit den Fig. 38 bis 40 erläuterten Vorteile des 1,5-Arm-B-Knuckle mit dem zugehörigen Schaltauge gelten auch für die Ausführungsform der Fig. 41 bis 45, zu den nur die Unterschiede gegenüber der Ausführungsform der Fig. 38 bis 40 dargelegt wurden.

Im Folgenden geht es um sich auf Schaltwerke des Typs A) beziehende Ausgestaltungen und Lösungsvorschläge.

In den Fig. 47 bis 55 ist eine zweiarmige Schaltwerks-Anordnung bzw. insbesondere das B-Knuckle (Basiselement) 20, eines zweiarmig ausgebildeten Schaltwerks 10 dargestellt. Diese Darstellung und die folgende Beschreibung geht aus von dem Inhalt der EP 3 388 324 A1 (EP '324) und erläutert Weiterbildungen des hieraus bekannten hinteren Schaltwerks auf Basis dieser Offenbarung der EP '324, die im Folgenden vorausgesetzt wird.

In der folgenden Beschreibung werden demgemäß für analoge oder entsprechende Elemente die gleichen Bezugszeichen wie in den Figuren der EP '324 verwendet. Gegenüber der EP '324 neu eingeführte numerische Bezugszeichen haben ein Zahlenwert größer als 400.

Die Beschreibung der nicht beanspruchten Ausführungsform der Fig. 47 bis 55 konzentriert sich auf die Unterschiede im Sinne von Änderungen oder Ergänzungen gegenüber den bekannten Lösungen der Druckschrift EP '324, um Wiederholung von schon Bekanntem zu vermeiden und die Beschreibung auf die Neuerung zu konzentrieren. Zur grundsätzlichen Konstruktion des hinteren Schaltwerks und dessen Montage am Fahrradrahmen und weitere Einzelheiten und Ausführungsmöglichkeiten wird ausdrücklich auf die Figuren sowie den gesamten Inhalt der EP '324 verwiesen.

Für eine leichtere Bezugnahme auch auf die Weiterbildungsvorschläge der vorangehend behandelten Figuren und eine gute Erläuterung im Kontext dieser Beschreibung, sind in den Fig. 47 bis 55 und der folgenden Beschreibung für einige Elemente Bezugszeichen in Klammern angegeben, die den Bezugszeichen vorangehend behandelter Ausführungsformen entsprechen.

Die Schaltwerks-Anordnung der Fig. 47 bis 55, bzw. ein gemäß der Darstellung in Fig. 47 bis 55 ausgeführtes Schaltwerk, stimmt also in den wesentlichen Eigenschaften und damit verbundenen Vorteilen mit dem in der EP'324 offenbarten zweiarmigen Schaltwerk zur koaxialen Montage überein.

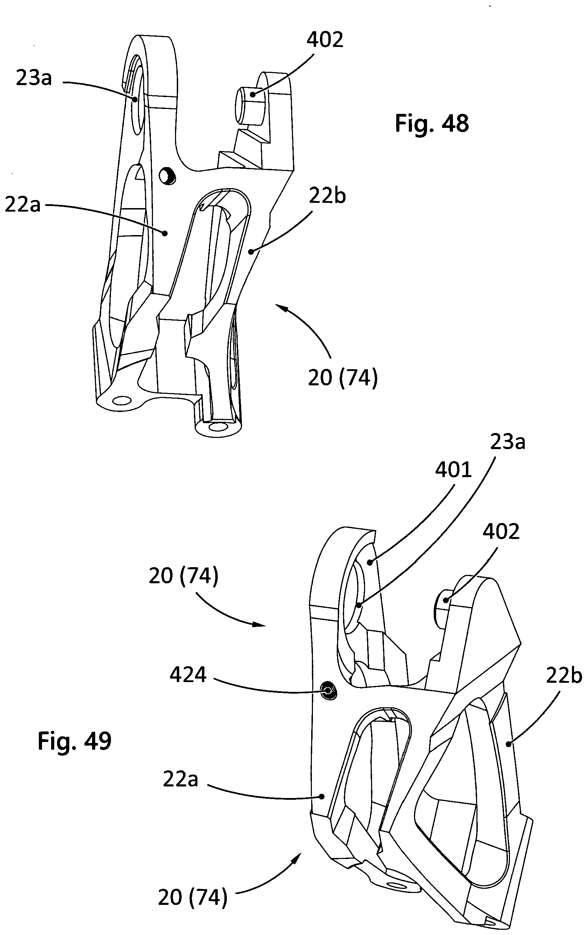

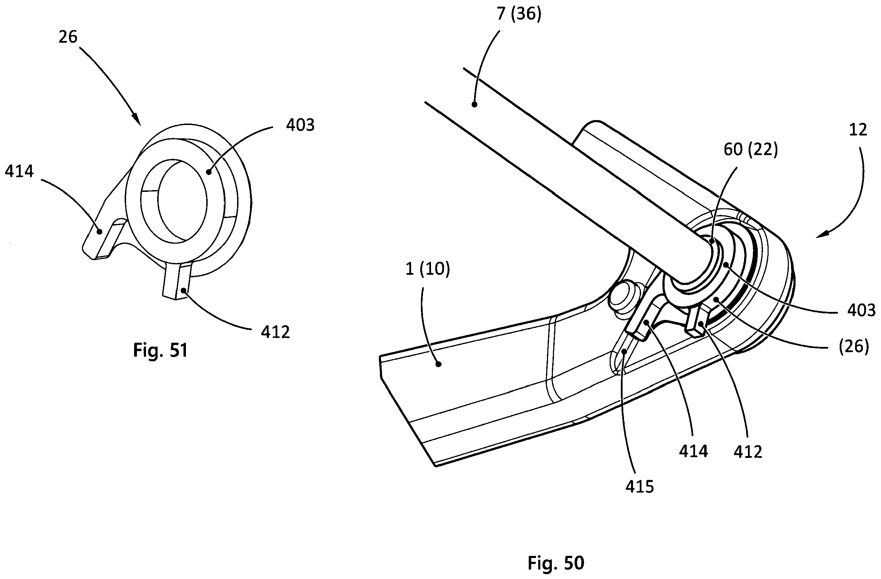

So ist der eine Zentrieröffnung 23a aufweisende innere Schaltwerksarm 22a benachbart der Steckachse 7 (36), etwa an einer Ringfläche bei 400 in Fig. 47, zwischen der Nabenendkappe und einer B-Scheibe (26) rotatorisch geklemmt (vgl. auch Fig. 52). Die entgegengesetzte Klemmfläche zur Anlage an der B-Scheibe (26) ist in Fig. 49 mit 401 bezeichnet. 403 bezeichnet die zugeordnete Gegen-Klemmfläche der B-Scheibe (vgl. Fig. 50 und 51). Es ergibt sich der Vorteil, dass ein Schlagen des Schaltwerks vermieden wird. Bei Schaltwerkkollisionen erfolgt ein Energieabbau. Bei gelöster Steckachse ist das B-Knuckle 20 (74) frei nach hinten schwenkbar, etwa zum Radausbau.

Ein wesentlicher Unterschied zwischen dem Schaltwerk nach der Ausführungsform gemäß Fig. 47 bis 55 und dem zweiarmigen Schaltwerk nach der Lehre der EP'324 besteht in der Ausbildung des rechten Schaltwerksarms 22b sowie in dessen Anbindung an den Achsbolzen 60 (22) der Steckachse 7 (36).

Während der rechte Schaltwerksarm 22b nach der Lehre der EP'324 (vgl. z.B. dort Fig. 8) mittels einer zylindrischen Innenfläche bzw. Zentrieröffnung 23b auf einer entsprechenden Anlagefläche 63a des Achsbolzens 62 rotatorisch gleitet bzw. zentriert wird, erfolgt die Zentrierung des rechten Schaltwerksarms bei der Ausführungsform gemäß Fig. 47 bis 55 über einen am rechten Schaltwerksarm angeordneten Zentriervorsprung 402, welcher in die Ausnehmung 404 am rechten Ende des Achsbolzens 60 (22) eingreift und hierdurch zentrierend geführt wird.

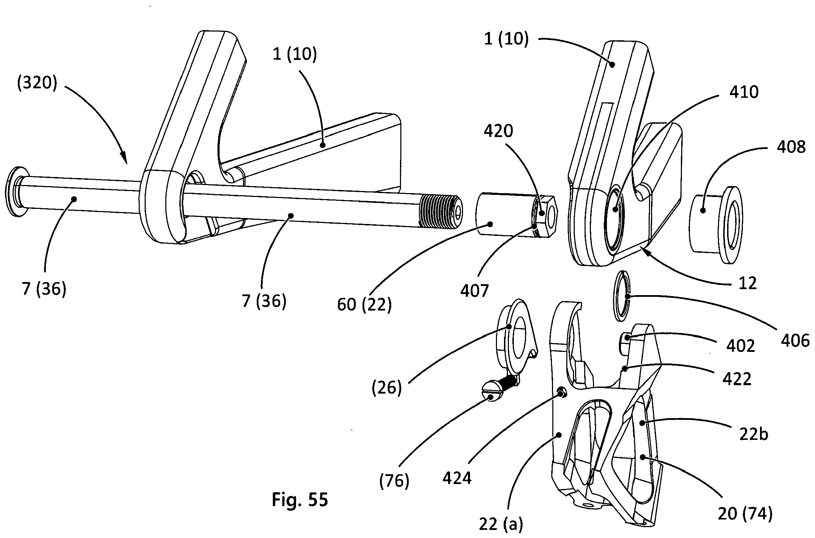

Dies ist bei der nicht beanspruchten Ausführungsform gemäß Fig. 47 bis 55 damit verbunden, dass der Achsbolzen 60 (22) nicht mehr (wie gemäß der Lehre der EP'324) im Ausfallende (12) verschraubt ist. Vielmehr ist der Achsbolzen bei der Ausführungsform gemäß Fig. 47 bis 55 lediglich gesteckt und mittels einer Axialsicherung, vorliegend eines Sprengrings 406, axial fixiert, wie aus der Schnittdarstellung gemäß Fig. 52 sowie aus Fig. 55 hervorgeht. Der von der Inboard- oder Innenseite, also von links, zu zuführende und in dem Ausfallende (12) bzw. die von außen eingesetzte Ausgleichsbuchse 408 einzusteckende Achsbolzen 60 (22) weist eine entsprechende Koppelformation auf, vorliegend eine Nut 407 für den Sprengring. Bezüglich der damit verbundenen Vorteile insbesondere hinsichtlich des Kraftflusses gilt dasselbe wie weiter oben im Rahmen der Beschreibung der Ausführungsform gemäß Fig. 2 bis 4 zu den Vorteilen von Steck- bzw. Schnappverbindungen zwischen UDH-Bolzen/Achsbolzen und UDH-Hülse gesagte.

Die in Fig. 52 und 55 ersichtliche Ausgleichsbuchse 408 ist nicht zwingend notwendig. Beispielsweise bei anderen Durchmesserverhältnissen, z.B. bei Übereinstimmung des Ausfallende-Innendurchmessers 410 und des Achsbolzen-Außendurchmessers, kann die Ausgleichsbuchse entfallen.

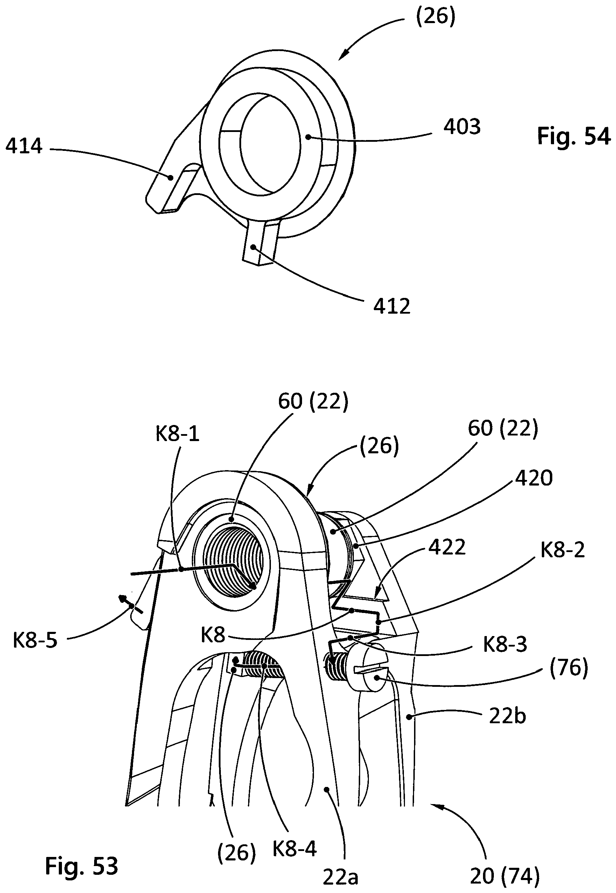

Ein weiterer wesentlicher Unterschied zwischen dem Schaltwerk nach der Ausführungsform gemäß Fig. 47 bis 55 und dem zweiarmigen Schaltwerk gemäß der Lehre der EP'324 besteht in der Art und Weise, wie bei der vorliegenden Ausführungsform der Chain-Gap eingestellt wird. Hierzu umfasst das B-Knuckle 20 (74) des Schaltwerks, wie insbesondere in Fig. 47 und 53 sichtbar, eine in eine Schrauböffnung 424 des B-Knuckle eingeschraubte B-Schraube (76), welche auf einer an der B-Scheibe (26) dieser Ausführungsform angeordneten Anschlagsfläche eines radial vorstehenden Anschlagarms 412 zur Anlage kommt. Die B-Scheibe (26) stützt sich mit einem radial vorstehenden Abstützarm 414 an einer zugeordneten Abstützformation 415 auf der Innenseite des Fahrradrahmens 1(10) ab.

Die damit verbundene Drehmomentabstützung zwischen dem B-Knuckle und der B-Scheibe (26) und weiter am Rahmen 1(10) führt zunächst zu einer einfach vorzunehmenden und sodann jederzeit reproduzierbaren Einstellung des Chain-Gap. Funktionell entspricht die B-Scheibe in der Ausführungsform gemäß Fig. 47 bis 55 damit der eingangs bezeichneten Adaptermutter aus der EP'324.

Zudem wird bei der nicht beanspruchten Ausführungsform gemäß Fig. 47 bis 55 über die B-Schraube (76) und die B-Scheibe (26) auch das beim Einschrauben der Steckachse 7 (36) anfallende Gewindedrehmoment so in die Anordnung aus B-Knuckle 20 (74) und B-Scheibe (26) eingeleitet, dass bereits durch das Einschrauben der Steckachse eine korrekte Anlage sowohl der B-Schraube an der B-Scheibe als auch der Anschlagfläche des Abstützarms 414 der B-Scheibe (26) am Rahmen-Ausfallende gewährleistet ist (vgl. Fig. 53).

Dies vermeidet Einstellungsfehler beim Einbau des Hinterrads bzw. beim Festziehen der Steckachse insbesondere dann, wenn beispielsweise keine Kette montiert ist, welche ansonsten über die Kettenvorspannung das Schaltwerk an seinen Vornanschlag ziehen würde.

Stattdessen erfolgt bei der nicht beanspruchten Ausführungsform gemäß Fig. 47 bis 55 auch bereits ohne aufgelegte Fahrradkette selbsttätig die Einnahme der Ziel-Rotationsposition des B-Knuckle 20 (74) um die Hinterradachse am Vornanschlag gegenüber dem Ausfallende (vgl. Fig. 50) und damit gegenüber dem Rahmen-Hinterbau, welche für die korrekte Einstellung des Chain Gap erforderlich ist.

Reguliert wird diese Einstellung und damit der Chain Gap über die B-Schraube (76), vgl. Fig. 47. Hierdurch kann auch der gemäß der Lehre der EP'324 erforderliche Rändel an der B-Scheibe entfallen, welcher dort die Rotationsposition der Adaptermutter 66 sichert (vgl. dort z.B. Fig. 6), die über die Anschläge 24a und 24b die die vorgenommene Chain-Gap Einstellung fixiert, vgl. Abs. [0089] in der EP'324.

Beim Ausschrauben der Steckachse 7 (36) verläuft der Kraftfluss K8 vom Achsbolzen 60 (22) auf das B-Knuckle 20 (76) in ähnlicher Weise wie in Fig. 53 dargestellt, somit über den am Achsbolzen angeordneten Sechskant 420, welcher im dargestellten, montierten Zustand formschlüssig an einem zugehörigen Anschlagsvorsprung 422 des B-Knuckle anliegt. Hierbei wird das B-Knuckle 20 (76) dann beispielsweise von Hand gegengehalten, um die Steckachse 7 (36) ausschrauben zu können. Im Einzelnen: 1) Der Kraftfluss bzw. das Drehmoment vom Steckachse-Gewinde auf das Achsbolzen-Gewinde ist mit K8-1 bezeichnet. 2) K8-2 bezeichnet das Drehmoment vom Achsbolzen auf das B-Knuckle. 3) K8-3 bezeichnet das Drehmoment vom B-Knuckle auf die B-Schraube, 4) K8-4 bezeichnet das Drehmoment von der B-Schraube auf die B-Scheibe und 5) K8-5 bezeichnet das Drehmoment von der B-Scheibe auf das Ausfallende und damit den Rahmen.

Weitere Kraftflüsse sind in Fig. 52 dargestellt. Der Kraftfluss (K7) ist der Kraftfluss bei verschraubter Steckachse. Das B-Knuckle wird durch diesen Kraftfluss bei der verschraubten Steckachse energieaufnehmend rotatorisch geklemmt, ähnlich EP '324, Absatz [0082], Fig. 4, 16 und 24a. Der Kraftfluss ohne Steckachse ist mit (K6) bezeichnet und hält das B-Knuckle 20 (74), den Achsbolzen 60 (22), die Ausgleichsbuchse 408 und die B-Scheibe (26) mittels des Sprengrings 406 spannungsfrei zusammen, sodass das B-Knuckle zum Radausbau frei nach hinten schwenkbar ist.

Die Schaltwerke bzw. Basiselemente (B-Knuckle) des Typs A) erreichen ein wesentlich steiferes Gesamtsystem, das sehr vorteilhaft zu einer besseren Schaltqualität beiträgt. Außerdem ist das System weniger anfällig für Verbiegungen bei einer Stoß-/Aufprall-Einwirkung.

Der Verzicht auf das Schaltauge als beabsichtigter Biege-/Bruchpunkt birgt allerdings das Risiko, den Umwerfer ohne Reparaturmöglichkeit zu beschädigen. Auch der Fahrradrahmen ist anfälliger für Beschädigungen.

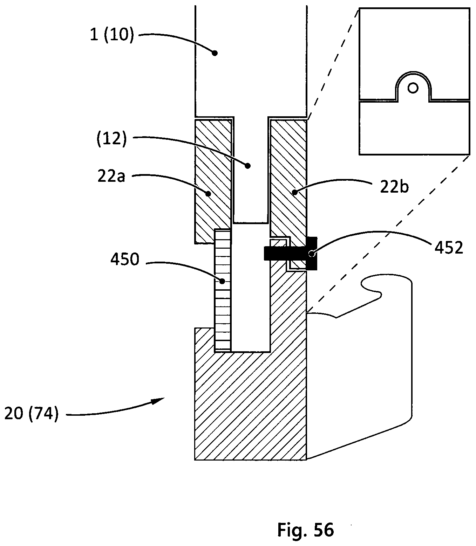

Es wird deshalb vorgeschlagen, dass das Basiselement (der B-Knuckle) dafür ausgeführt ist, zumindest abschnittsweise eine Ausweichbewegung durchzuführen, die im Bedarfsfall durch eine Stoß-Überlastsicherung des Basiselements freigeben wird. Diesbezüglich wird an die folgenden in den Figuren 56 bis 61 veranschaulichten Lösungen gedacht:
i) B-Knuckle mit leicht richtbarem verformbarem Element

Die Idee ist, ein Material oder Element 450 zu verwenden, das die Belastung durch den Aufprall aufnimmt und sich verformt. Dabei ist das Material oder Element so konstruiert bzw. ausgelegt, ist, dass der B-Knuckle 20 (74) leicht mehrmals in seine ursprüngliche Position zurückgebogen werden kann, vorzugsweise ohne die Notwendigkeit, ein zusätzliches Hilfsmittel einzusetzen.

Im Prinzip kann beliebiges Material, z.B. Metall oder Kunststoff, verwendet werden, welches dafür geeignet ist, wieder zurückgebogen zu werden, sei es elastisch oder plastisch.

Dieses Material oder Element einen oberen Teil des B-Knuckle, der am Fahrradrahmen befestigt wird, mit dem unteren Teil des B-Knuckle, der das Parallelogramm hält, verbinden und in Position halten.

Man kann vorteilhaft ein sekundäres Element auf dem nicht gebogenen Teil des zweiteiligen B-Knuckle vorsehen, welches die ursprüngliche Position anzeigt und es dem Fahrer ermöglicht, die Reparatur vorzunehmen und die beiden B-Knuckle-Teile wieder in ihre ursprüngliche Position zu bringen.

Um die Gesamtsteifigkeit des b-Achsschenkels nicht zu beeinträchtigen, kann ein einfacher Stecker, Stopfen, Stift, Einsatz oder dergleichen (vgl. Element 452 in Fig. 56) die beiden Teile an ihrem Platz halten. Es kann sich um ein Sollbruchelement handeln, dessen Festigkeit auf einen bestimmten Wert eingestellt ist, der schwächer ist als die Kraft, die zur Verformung der Schaltwerksteile erforderlich ist. Dieses Element kann nach der Neuausrichtung bez. Reparatur durch ein Ersatzelement ersetzt werden.

Eine gut in Frage kommende konkrete Realisierungsmöglichkeit ergibt sich aus Fig. 56.

Vorteilhaft kann man einen Endanschlag für den unteren, schwenkbaren Teil des B-Knuckle vorsehen, um zu verhindern, dass das Schaltwerk mit Elementen des Hinterrads (z.B. mit den Speichen) kollidiert.

### ii) B-Knuckle mit einem Scharnierelement

Diese Lösung entspricht der Lösung i), allerdings ist das biegsame Material oder Element durch ein Scharnier 454 ersetzt.

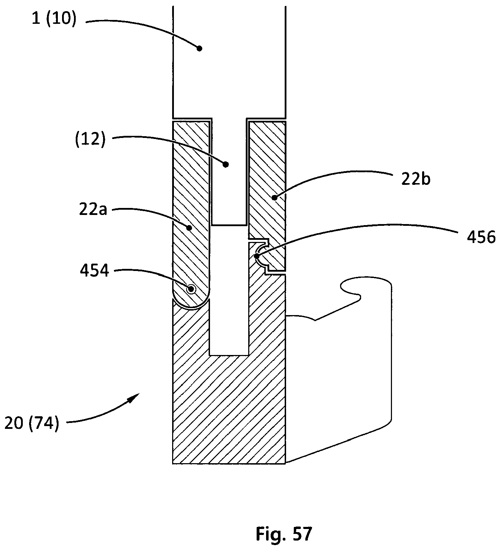

Eine gut in Frage kommende konkrete Realisierungsmöglichkeit ergibt sich aus Fig. 57. Anstelle eines Sollbruchelements ist eine ausschnappbare Einschnappverbindung 456 vorgesehen.

Vorzugsweise sollte auch bei dieser Lösung ein Endanschlag vorgesehen werden, der verhindert, dass das Schaltwerk mit Elementen des Rades wie Speichen kollidiert, um weitere Schäden am Rad zu verhindern.

### iii) B-Knuckle mit einem Kupplungselement

Diese Lösung entspricht wiederum der Lösung i), allerdings ist das biegsame Material oder Element durch eine Kupplung 458 ersetzt, die auch das Sollbruchelement entbehrlich macht. Es kann sich um eine Reibungskupplung etwa in Form einer sog. Rutschkupplung handeln.

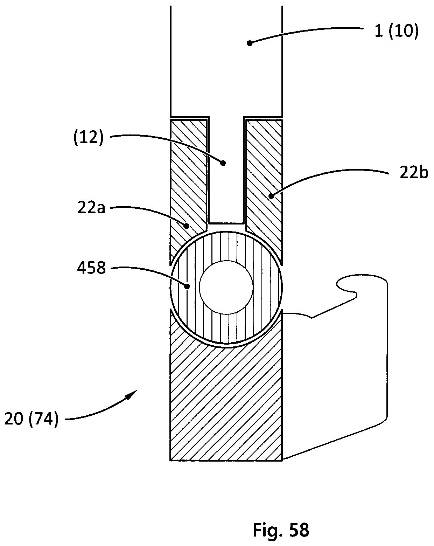

Eine gut in Frage kommende konkrete Realisierungsmöglichkeit ergibt sich aus Fig. 58.

Die Kupplung erlaubt dem Schaltwerk, sich bei einem Aufprall/Absturz zu bewegen. Optional kann die Kupplung indexiert sein, um die Funktion eines (im Prinzip ebenfalls möglichen) Endanschlags zu übernehmen.

### iv) Anzeige der Soll-Ausrichtung

Bei allen vorstehend diskutierten Lösungen kann man eine Markierung oder Anzeige etwa in Form eines grafischen Elements 460 auf dem B-Knuckle 20 (74) vorsehen, um die Geradlinigkeit bzw. Abweichung von der Gradlinigkeit des B-Knuckle einfach erkennbar zu machen.

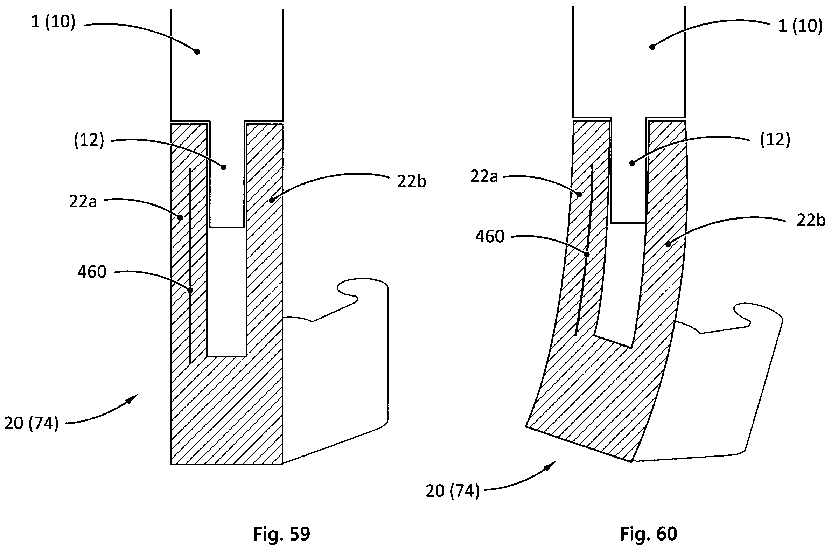

Als grafisches Element oder Markierung kann beispielsweise eine gerade Linie vorgesehen werden. Die Figuren 59 und 60 erläutern beispielhaft diese Realisierungsmöglichkeit.

Eine andere Möglichkeit ist ein Element, das mit einem speziellen Messgerät gemessen oder erfasst werden kann. Man könnte spezielles Werkzeug vorsehen, welches dazu verwendet werden kann, um den B-Knuckle in seine ursprüngliche Position zu richten.

Wenigstens eine ggf. vorzusehende Gewindebohrung (z.B. M10) oder andere Koppelformation am B-Knuckle könnte die Verwendung von Standardwerkzeugen zum Richten von Kettenschaltungsgehäusen oder eines speziell auf die vorliegende Lösung spezialisierten Werkzeugen ermöglichen.

### v) Sich im Überlastfall in mehrere Teile teilender B-Knuckle

Bei zu hoher Belastung aller Teile der Kettenschaltung, z.B. durch einen Aufprall oder durch einen Kettenstau, bricht wenigstens ein dafür vorgesehenes Sollbruchelement 462, das zwei B-Knuckle-Teile 464 und 466 zusammenhält und lässt den B-Knuckle sich in die beiden Einzelteile zerlegen. Durch diese Teilung wird der Umwerfer (unteres B-Knuckle-Teil 466, Schwenkmechanismus 468, bewegliches Element und Kettenführungsanordnung) vom Rahmen 1 (10) getrennt und kann sich von wirkenden Aufprallkräften wegbewegen und ist von diesem Moment an nur noch über die Kette und den Schaltzug (sofern keine drahtlose Schaltung realisiert ist) mit dem Fahrrad verbunden.

Das Schaltwerk wird repariert, indem ein neues Sollbruchelement 462 verwendet und der B-Knuckle wieder zusammengesetzt und dieser durch das Sollbruchelement und ggf. geeignete Eingriffs- und Gegeneingriffsformationen 470 und 472 der beiden B-Knuckle-Teile im zusammengesetzten Zustand gehalten werden. Das Sollbruchelement 462 kann z.B. steckerförmig oder stiftförmig ausgeführt sein.

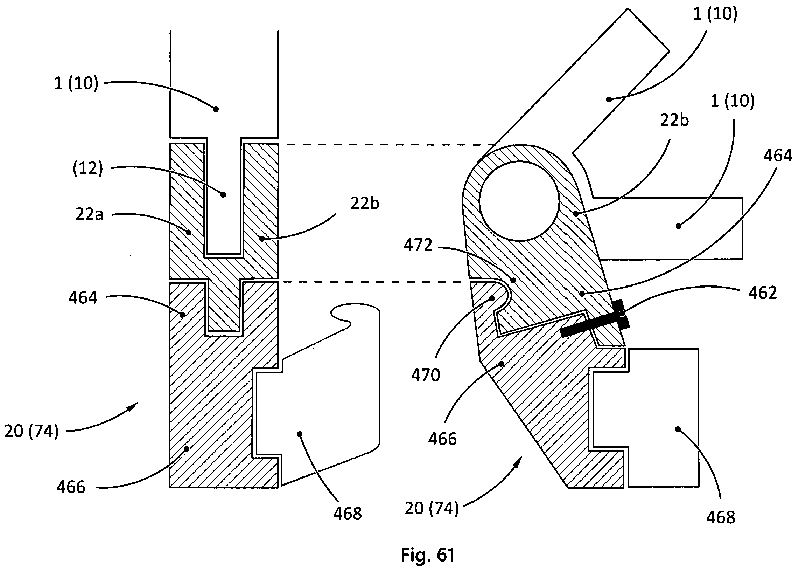

Eine gut in Frage kommende konkrete Realisierungsmöglichkeit ergibt sich aus Fig. 61.

## Patentansprüche

1. Montageset umfassend ein Halterungselement (14) mit einem zugeordneten Halterungsbolzen (22), welche dafür eingerichtet sind, an einem Halterungsabschnitt (12) eines Fahrradrahmens (10) montiert zu werden, wobei das Halterungselement weiter dafür eingerichtet ist, ein hinteres Schaltwerk (16) einer Kettenschaltung an dem Halterungsabschnitt zu montieren,
wobei das Halterungselement (14) umfasst:
- einen ersten Abschnitt, welcher eine Durchgangsöffnung (38) aufweist, welche einer Montageöffnung des Halterungsabschnitts zugeordnet und im an einer Innenseite des Halterungsabschnitts montierten Zustand des Halterungselements zu dieser koaxial ist;
- einen zweiten Abschnitt, welcher eine Montageöffnung (46) aufweist, mittels der ein Basiselement des hinteren Schaltwerks an einer Außenseite des zweiten Abschnitts montierbar oder montiert ist;
- eine mit dem ersten Abschnitt integrale oder an diesem angebrachte, vom ersten Abschnitt axial vorstehende Einführhülse (20), welche von der Innenseite des Halterungsabschnitts in die Montageöffnung des Halterungsabschnitts (12) einführbar oder eingeführt ist, und in die von einer Außenseite des Halterungsabschnitts der Halterungsbolzen (22) einführbar oder eingeführt ist, und die einen sich an die Durchgangsöffnung anschließenden Durchgang aufweist;
wobei die Einführhülse (20) mit dem in diese eingeführten Halterungsbolzen (22) in einen axiale Kräfte zwischen dem Halterungsbolzen und der Einführhülse abstützenden Halteeingriff bringbar oder gebracht ist, um das Halterungselement (14) und den Halterungsbolzen (22) an dem Halterungsabschnitt (12) zu halten;
und wobei der Halterungsbolzen (22) mit einem Innengewinde (50) ausgeführt ist, in welches ein Außengewinde an einem freien Ende einer durch die Durchgangsöffnung des ersten Abschnitts hindurchgeführten Steckachse (36) einer Hinterrad-Achsanordnung des Fahrrads einschraubbar oder eingeschraubt ist, um das Halterungselement mit dem Halterungsbolzen an dem Halterungsabschnitt zu fixieren;
**dadurch gekennzeichnet,**
**dass** wenigstens ein Element von der Einführhülse (20) und dem Halterungsbolzen (22) mit wenigstens einer Eingriffsformation (34; 60; 66; 68; 86) ausgeführt ist, welche dafür eingerichtet ist, zusammen mit wenigstens einem gegenüber der Einführhülse und dem Halterungsbolzen gesonderten Gegeneingriffselement (32; 70) oder einer Gegeneingriffsformation (52; 62) des jeweils anderen Elements von der Einführhülse und dem Halterungsbolzen eine elastische Einschnapp-Halteverbindung oder eine bajonettartige Halteverriegelung herzustellen, die den Halteeingriff formschlüssig realisiert.

2. Montageset nach Anspruch 1, **dadurch gekennzeichnet, dass** der Halterungsbolzen (22) mit einem nicht-rotationssymmetrischen Einsteckabschnitt (40) oder mit wenigstens einer Mitnahmeformation am Einsteckabschnitt ausgeführt ist, der in die komplementär bzw. mit wenigstens einer Gegenmitnahmeformation ausgeführte Durchgangsöffnung (38) oder in den komplementär bzw. mit wenigstens einer Gegenmitnahmeformation ausgeführten Durchgang des Halterungselements drehfest eingreift.

3. Montageset nach Anspruch 1 oder 2, **dadurch gekennzeichnet, dass** die Durchgangsöffnung (38) und die Montageöffnung (46) in einem aus Metall ausgeführten laschenförmigen Bereich (18) des Halterungselements (14) ausgeführt sind und dass ein aus Kunststoff ausgeführter Bereich des Halterungselements die Einführhülse (20) aufweist.

4. Montageset nach Anspruch 1 oder 2, **dadurch gekennzeichnet, dass** als Gegeneingriffselement wenigstens ein elastisches Ringelement (32), vorzugsweise wenigstens ein O-Ring (32), vorgesehen ist, welches zwischen einem Innenumfangsabschnitt eines Elements von der Einführhülse (20) und dem Halterungsbolzen (22) und einem Außenumfangsabschnitt des anderen Elements von der Einführhülse (20) und dem Halterungsbolzen (22) aufnehmbar oder aufgenommen ist, wobei wenigstens ein Element (20; 22) von der Einführhülse (20) und dem Halterungsbolzen (22) an dem Innenumfangsabschnitt bzw. Außenumfangsschnitt mit einer Eingriffsformation (34; 52) ausgeführt ist, in die das Ringelement (32) zur Herstellung des formschlüssigen Halteeingriffs einschnappen kann oder eingeschnappt ist.

5. Montageset nach Anspruch 4, **dadurch gekennzeichnet, dass** die Einführhülse (20) an einem Außenumfangsbereich an einem aus der Montageöffnung des Halterungsabschnitts außenseitig vorstehenden Endbereich die Eingriffsformation (34) aufweist, dass der Halterungsbolzen (22) an einem aus der Montageöffnung des Halterungsabschnitts außenseitig vorstehenden freien Endbereich mit einem in Richtung zum Halterungsabschnitt vorkragenden Flanschbereich ausgeführt ist, welcher an einem Innenumfangsbereich eine weitere Eingriffsformation (52) aufweist, und dass das Ringelement (32) zur Herstellung des formschlüssigen Halteeingriffs in die beiden Eingriffsformationen (32, 52) einschnappen kann oder eingeschnappt ist.

6. Montageset nach Anspruch 1 oder 2, **dadurch gekennzeichnet, dass** die Einführhülse (20) an einem Innenumfangsbereich die Gegeneingriffsformation (60) aufweist, welche zur Herstellung des formschlüssigen Halteeingriffs in die Eingriffsformation (62) an einem Außenumfangsbereich des Halterungsbolzens (22) einschnappen kann oder eingeschnappt ist, oder dass der Halterungsbolzen an einem Außenumfangsbereich die Gegeneingriffsformation aufweist, welche zur Herstellung des formschlüssigen Halteeingriffs in die Eingriffsformation an einem Innenumfangsbereich der Einführhülse einschnappen kann oder eingeschnappt ist.

7. Montageset nach Anspruch 6, **dadurch gekennzeichnet, dass** die Eingriffsformation (62) und die Gegeneingriffsformation (60) an einem aus der Montageöffnung des Halterungsabschnitts außenseitig vorstehenden Endbereich der Einführhülse (20) bzw. des Halterungsbolzens (22) vorgesehen sind.

8. Montageset nach Anspruch 1 oder 2, **dadurch gekennzeichnet, dass** die Einführhülse (20) an einem aus der Montageöffnung des Halterungsabschnitts außenseitig vorstehenden Endbereich wenigstens ein axial vorstehendes Schnappelement (66, 68) aufweist, welches dafür eingerichtet ist, zur Herstellung des formschlüssigen Halteeingriffs mit einem nach radial innen vorstehenden Umgreifabschnitt außenseitig eines außenseitigen Endbereichs des Halterungsbolzens (22) einzuschnappen und diesen zu umgreifen.

9. Montageset nach Anspruch 1 oder 2, **dadurch gekennzeichnet, dass** der Halterungsbolzen (22) an einem aus der Montageöffnung des Halterungsabschnitts außenseitig vorstehenden Endbereich mit wenigstens einer Eingriffsformation (86) ausgeführt ist, die mit wenigstens einer Gegeneingriffsformation (84) des gegenüber der Einführhülse und dem Halterungsbolzen gesonderten Gegeneingriffselements (70) durch eine relative Verdrehung formschlüssig verriegelbar oder verriegelt ist, um die den formschlüssigen Halteeingriff realisierende bajonettartige Halteverriegelung herzustellen.

10. Montageset nach Anspruch 9, **dadurch gekennzeichnet, dass** der Halterungsbolzen (22) wenigstens einen flanschartig radial vorstehenden Verriegelungsabschnitt als wenigstens eine erste Eingriffsformation und wenigsten eine Aussparung oder Nut (86) an einem Außenumfangsabschnitt des Halterungsbolzen (22) als wenigstens eine zweite Eingriffsformation aufweist und das Gegeneingriffselement eine komplementär zu dem wenigstens einen Verrieglungsabschnitt ausgeführte Verriegelungsöffnung (80) als gemeinsames Gegeneingriffselement für die ersten und zweiten Eingriffsformationen aufweist.

11. Montageset nach Anspruch 10, **dadurch gekennzeichnet, dass** das Gegeneingriffselement (70) in einer ersten relativen Drehstellung mit der Verriegelungsöffnung (80) auf den außenseitig vorstehenden Endbereich des Halterungsbolzens (22) aufschiebbar oder aufgeschoben oder von diesem abschiebbar ist und durch Verdrehen aus der ersten relativen Drehstellung in wenigstens eine als Verriegelungsdrehstellung dienende zweite relative Drehstellung mit dem Gegeneingriffselement (70) verriegelbar oder verriegelt ist, wobei in der Verriegelungsdrehstellung der wenigstens eine Verriegelungsabschnitt einen die Verriegelungsöffnung begrenzenden Abschnitt des Gegeneingriffselement umgreift und ein die Verriegelungsöffnung (80) begrenzender Randabschnitt des Gegeneingriffselements (70) mit der Aussparung oder Nut (86) des Halterungsbolzens (22) formschlüssig eingreift.

12. Montageset nach einem der Ansprüche 9 bis 11, **dadurch gekennzeichnet, dass** das Gegeneingriffselement (70) als zusätzliches Hilfs-Halterungselement ausgeführt ist, welches einen die Gegeneingriffsformation (84) aufweisenden ersten Abschnitt und einen eine Koppelformation (80) aufweisenden zweiten Abschnitt aufweist, wobei die Koppelformation (82) gegenüber der Gegeneingriffsformation (84) radial versetzt ist und mit einer Gegenkoppelformation des Basiselements des hinteren Schaltwerks oder mit einem das Basiselement mittels der Montageöffnung am Halterungselement montierenden Montagebolzen (72) koppelbar oder gekoppelt ist.

## Claims

1. Mounting set comprising a securing element (14) with an associated securing pin (22) which are configured to be mounted on a securing portion (12) of a bicycle frame (10), the securing element being configured, furthermore, to mount a rear derailleur (16) of a derailleur system on the support portion,
the securing element (14) comprising:
- a first portion which has a through opening (38) which is assigned to a mounting opening of the securing portion and, in that state of the securing element in which it is mounted on an inner side of the securing portion, is coaxial with respect to this securing portion;
- a second portion which has a mounting opening (46), by means of which a base element of a rear derailleur can be mounted or is mounted on an outer side of the second portion;
- an insertion bushing (20) which is integral with the first portion or is attached to it, projects axially from the first portion, can be introduced or is introduced from the inner side of the securing portion into the mounting opening of the securing portion (12), into which the securing pin (22) can be introduced or is introduced from an outer side of the securing portion, and which has a passage which adjoins the through opening;
the insertion bushing (20) with the securing pin (22) which is inserted into it being able to be brought or being brought into a holding engagement which supports axial forces between the securing pin and the insertion sleeve, in order to hold the securing element (14) and the securing pin (22) on the securing portion (12);
and the securing pin (22) being configured with an internal thread (50), into which an external thread at a free end of a plug-in axle (36), guided through the through opening of the first portion, of a rear wheel axle arrangement of the bicycle can be screwed or is screwed, in order to fix the securing element with the securing pin on the securing portion;
**characterized**
**in that** at least one element of the insertion bushing (20) and the securing pin (22) is configured with at least one engagement formation (34; 60; 66; 68; 86) which is formed to establish an elastic snap-in holding connection or a bayonet-like holding locking action, which realises the holding engagement in a positively locking manner, together with at least one mating engagement element (32; 70), separate from the insertion bushing and the securing pin, or a mating engagement formation (52; 62) of the respective other element of the insertion bushing and the securing pin.

2. Mounting set according to Claim 1, **characterized in that** the securing pin (22) is configured with a non-rotationally symmetrical plug-in portion (40) or with at least one driving formation on the plug-in portion which engages such that it cannot rotate into the through opening (38) which is configured so as to be complementary or with at least one mating driving formation or into the passage, configured so as to be complementary or with at least one mating driving formation, of the securing element.

3. Mounting set according to Claim 1 or 2, **characterized in that** the through opening (38) and the mounting opening (46) are configured in a tab-shaped region (18), configured from metal, of the securing element (14), and **in that** a region, configured from plastic, of the securing element has the insertion bushing (20).

4. Mounting set according to Claim 1 or 2, **characterized in that** at least one elastic ring element (32), preferably at least one O-ring (32), is provided as mating engagement element, which ring element can be received or is received between an inner circumferential portion of one element of the insertion bushing (20) and the securing pin (22) and an outer circumferential portion of the other element of the insertion bushing (20) and the securing pin (22), at least one element (20; 22) of the insertion bushing (20) and the securing pin (22) being configured on the inner circumferential portion or outer circumferential portion with an engagement formation (34; 52), into which the ring element (32) can snap or is snapped in order to establish the positively locking holding engagement.

5. Mounting set according to Claim 4, **characterized in that** the insertion bushing (20) has the engagement formation (34) on an outer circumferential region on an end region which projects on the outer side out of the mounting opening of the securing portion, **in that** the securing pin (22) is configured, on a free end region which projects on the outer side out of the mounting opening of the securing portion, with a flange region which protrudes in the direction of the securing portion and has a further engagement formation (52) on an inner circumferential region, and **in that** the ring element (32) can snap or is snapped into the two engagement formations (32, 52) in order to establish the positively locking holding engagement.

6. Mounting set according to Claim 1 or 2, **characterized in that** the insertion bushing (20) has, on an inner circumferential region, the mating engagement formation (60) which can snap or is snapped into the engagement formation (62) on an outer circumferential region of the securing pin (22) in order to establish the positively locking holding engagement, or **in that** the securing pin has, on an outer circumferential region, the mating engagement formation which can snap or is snapped into the engagement formation on an inner circumferential region of the insertion bushing in order to establish the positively locking holding engagement.

7. Mounting set according to Claim 6, **characterized in that** the engagement formation (62) and the mating engagement formation (60) are provided on an end region, projecting on the outer side out of the mounting opening of the securing portion, of the insertion bushing (20) and the securing pin (22), respectively.

8. Mounting set according to Claim 1 or 2, **characterized in that** the insertion bushing (20) has, on an end region which projects on the outer side out of the mounting opening of the securing portion, at least one axially projecting snap-in element (66, 68) which is configured to snap in on the outer side of an outer-side end region of the securing pin (22) and to engage around the latter by way of a radially inwardly projecting surrounding portion in order to establish the positively locking holding engagement.

9. Mounting set according to Claim 1 or 2, **characterized in that** the securing pin (22) is configured, on an end region which projects on the outer side out of the mounting opening of the securing portion, with at least one engagement formation (86) which can be locked or is locked in a positively locking manner by way of a relative rotation with at least one mating engagement formation (84) of the mating engagement element (70) which is separate from the insertion bushing and the securing pin, in order to establish the bayonet-like holding locking action which realises the positively locking holding engagement.

10. Mounting set according to Claim 9, **characterized in that** the securing pin (22) has at least one locking portion, projecting radially in a flange-like manner, as at least one first engagement formation, and at least one cut-out or groove (86) on an outer circumferential portion of the securing pin (22) as at least one second engagement formation, and the mating engagement element has a locking opening (80), of complementary configuration with respect to the at least one locking portion, as common mating engagement element for the first and second engagement formations.

11. Mounting set according to Claim 10, **characterized in that**, in a first relative rotational position, the mating engagement element (70) can be pushed or is pushed with the locking opening (80) onto the end region, projecting on the outer side, of the securing pin (22) or can be pushed off from the latter and, by way of rotation out of the first relative rotational position into at least one second relative rotational position which serves as a locking rotational position, can be locked or is locked by way of the mating engagement element (70), the at least one locking portion engaging around a portion, delimiting the locking opening, of the mating engagement element in the locking rotational position, and an edge portion, delimiting the locking opening (80), of the mating engagement element (70) engaging in a positively locking manner with the cut-out or groove (86) of the securing pin (22).

12. Mounting set according to one of Claims 9 to 11, **characterized in that** the mating engagement element (70) is configured as an additional auxiliary securing element which has a first portion, having the mating engagement formation (84), and a second portion, having the coupling formation (80), the coupling formation (82) being offset radially with respect to the mating engagement formation (84) and being capable of being coupled or being coupled to a mating coupling formation of the base element of the rear derailleur or to a mounting pin (72) which mounts the base element by means of the mounting opening on the securing element.

## Revendications

1. Kit de montage comprenant un élément de retenue (14) doté d'un boulon de retenue (22) associé, lequel est conçu pour être monté sur une partie de retenue (12) d'un cadre de bicyclette (10), l'élément de retenue étant en outre conçu pour monter un dérailleur arrière (16) d'un changement de vitesses à dérailleur sur la partie de retenue,
l'élément de retenue (14) comprenant :
- une première partie, laquelle présente une ouverture de passage (38), laquelle est associée à une ouverture de montage de la partie de retenue et, dans l'état de l'élément de retenue monté sur un côté intérieur de la partie de retenue, est coaxiale à cet élément de retenue ;
- une deuxième partie, laquelle présente une ouverture de montage (46) au moyen de laquelle un élément de base du dérailleur arrière peut être monté ou est monté sur un côté extérieur de la deuxième partie ;
- une douille d'insertion (20) d'un seul tenant avec la première partie, ou fixée à celle-ci, faisant saillie axialement à partir de la première partie, laquelle douille d'insertion peut être insérée ou est insérée à partir du côté intérieur de la partie de retenue dans l'ouverture de montage de la partie de retenue (12), et dans laquelle le boulon de retenue (22) peut être inséré ou est inséré à partir d'un côté extérieur de la partie de retenue, et laquelle présente un passage se raccordant à l'ouverture de passage ;
la douille d'insertion (20), avec le boulon de retenue (22) inséré dans celle-ci, pouvant être amenée en prise de retenue ou étant en prise de retenue supportant des forces axiales entre le boulon de retenue et la douille d'insertion, afin de retenir l'élément de retenue (14) et le boulon de retenue (22) sur la partie de retenue (12) ;
et le boulon de retenue (22) étant réalisé de manière à présenter un filetage intérieur (50) dans lequel un filetage extérieur peut être vissé ou est vissé à une extrémité libre d'un axe d'enfichage (36), guidé à travers l'ouverture de passage de la première partie, d'un ensemble d'axe de roue arrière de la bicyclette, afin de fixer l'élément de retenue avec le boulon de retenue à la partie de retenue ;
**caractérisé en ce**
**qu'**au moins un élément parmi la douille d'insertion (20) et le boulon de retenue (22) est réalisé de manière à présenter au moins une formation d'entrée en prise (34 ; 60 ; 66 ; 68 ; 86), laquelle est conçue, conjointement avec au moins un élément d'entrée en prise conjugué (32 ; 70) distinct de la douille d'insertion et du boulon de retenue ou une formation d'entrée en prise conjuguée (52 ; 62) de l'autre élément respectif parmi la douille d'insertion et le boulon de retenue, pour produire une liaison de retenue par encliquetage élastique ou un verrouillage de retenue de type baïonnette qui réalise l'entrée en prise de retenue par complémentarité de formes.

2. Kit de montage selon la revendication 1, **caractérisé en ce que** le boulon de retenue (22) est réalisé de manière à présenter une partie d'enfichage (40) ne présentant pas de symétrie de révolution ou de manière à présenter au moins une formation d'entraînement sur la partie d'enfichage, qui vient en prise de manière bloquée en rotation dans l'ouverture de passage (38) réalisée de manière complémentaire ou de manière à présenter au moins une formation d'entraînement conjuguée ou dans le passage de l'élément de retenue, lequel passage est réalisé de manière complémentaire ou de manière à présenter au moins une formation d'entraînement conjuguée.

3. Kit de montage selon la revendication 1 ou 2, **caractérisé en ce que** l'ouverture de passage (38) et l'ouverture de montage (46) sont formées dans une région (18), en forme de patte, réalisée en métal, de l'élément de retenue (14) et **en ce qu'**une région, réalisée en matière synthétique, de l'élément de retenue présente la douille d'insertion (20).

4. Kit de montage selon la revendication 1 ou 2, **caractérisé en ce qu'**au moins un élément annulaire élastique (32), de préférence au moins un joint torique (32), est prévu comme élément d'entrée en prise conjugué, lequel élément annulaire peut être reçu ou est reçu entre une partie périphérique intérieure d'un élément parmi la douille d'insertion (20) et le boulon de retenue (22) et une partie périphérique extérieure de l'autre élément parmi la douille d'insertion (20) et le boulon de retenue (22), au moins un élément (20 ; 22) parmi la douille d'insertion (20) et le boulon de retenue (22) étant réalisé de manière à présenter une formation d'entrée en prise (34 ; 52) au niveau de la partie périphérique intérieure ou de la partie périphérique extérieure, formation d'entrée en prise dans laquelle l'élément annulaire (32) peut s'encliqueter ou est encliqueté pour produire l'entrée en prise de retenue par complémentarité de formes.

5. Kit de montage selon la revendication 4, **caractérisé en ce que** la douille d'insertion (20) présente la formation d'entrée en prise (34) au niveau d'une région d'extrémité faisant saillie du côté extérieur à partir de l'ouverture de montage de la partie de retenue au niveau d'une région périphérique extérieure, **en ce que** le boulon de retenue (22) est réalisé de manière à présenter une région de bride dépassant en direction de la partie de retenue au niveau d'une région d'extrémité libre faisant saillie du côté extérieur à partir de l'ouverture de montage de la partie de retenue, laquelle région de bride présente une autre formation d'entrée en prise (52) au niveau d'une région périphérique intérieure, et **en ce que** l'élément annulaire (32) peut s'encliqueter ou est encliqueté dans les deux formations d'entrée en prise (32, 52) pour produire l'entrée en prise de retenue par complémentarité de formes.

6. Kit de montage selon la revendication 1 ou 2, **caractérisé en ce que** la douille d'insertion (20) présente la formation d'entrée en prise conjuguée (60) au niveau d'une région périphérique intérieure, laquelle formation d'entrée en prise conjuguée peut s'encliqueter ou est encliquetée dans la formation d'entrée en prise (62) au niveau d'une région périphérique extérieure du boulon de retenue (22) pour produire l'entrée en prise de retenue par complémentarité de formes, ou **en ce que** le boulon de retenue présente la formation d'entrée en prise conjuguée au niveau d'une région périphérique extérieure, laquelle formation d'entrée en prise conjuguée peut s'encliqueter ou est encliquetée dans la formation d'entrée en prise au niveau d'une région périphérique intérieure de la douille d'insertion pour produire l'entrée en prise de retenue par complémentarité de formes.

7. Kit de montage selon la revendication 6, **caractérisé en ce que** la formation d'entrée en prise (62) et la formation d'entrée en prise conjuguée (60) sont prévues au niveau d'une région d'extrémité de la douille d'insertion (20) ou du boulon de retenue (22), laquelle région d'extrémité fait saillie du côté extérieur à partir de l'ouverture de montage de la partie de retenue.

8. Kit de montage selon la revendication 1 ou 2, **caractérisé en ce que** la douille d'insertion (20) présente au moins un élément d'encliquetage (66, 68) faisant saillie axialement au niveau d'une région d'extrémité faisant saillie du côté extérieur à partir de l'ouverture de montage de la partie de retenue, lequel élément d'encliquetage est conçu pour s'encliqueter du côté extérieur avec une partie d'enserrement, faisant saillie radialement vers l'intérieur, d'une région d'extrémité, côté extérieur, du boulon de retenue (22) et pour enserrer celle-ci pour produire l'entrée en prise de retenue par complémentarité de formes.

9. Kit de montage selon la revendication 1 ou 2, **caractérisé en ce que** le boulon de retenue (22) est réalisé de manière à présenter au moins une formation d'entrée en prise (86) au niveau d'une région d'extrémité faisant saillie du côté extérieur à partir de l'ouverture de montage de la partie de retenue, laquelle formation d'entrée en prise peut être verrouillée ou est verrouillée par complémentarité de formes par une rotation relative avec au moins une formation d'entrée en prise conjuguée (84) de l'élément d'entrée en prise conjugué (70) distinct de la douille d'insertion et du boulon de retenue, pour produire le verrouillage de retenue de type baïonnette qui réalise l'entrée en prise de retenue par complémentarité de formes.

10. Kit de montage selon la revendication 9, **caractérisé en ce que** le boulon de retenue (22) présente au moins une partie de verrouillage faisant saillie radialement, de type bride, en tant qu'au moins une première formation d'entrée en prise et au moins un évidement ou une rainure (86) au niveau d'une partie périphérique extérieure du boulon de retenue (22) en tant qu'au moins une deuxième formation d'entrée en prise et l'élément d'entrée en prise conjugué présente, en tant qu'élément d'entrée en prise conjugué commun pour les première et deuxième formations d'entrée en prise, une ouverture de verrouillage (80) réalisée de manière complémentaire à l'au moins une partie de verrouillage.

11. Kit de montage selon la revendication 10, **caractérisé en ce que** l'élément d'entrée en prise conjugué (70), dans une première position de rotation relative, peut être poussé ou est poussé avec l'ouverture de verrouillage (80) sur la région d'extrémité, faisant saillie du côté extérieur, du boulon de retenue (22) ou peut être repoussé à partir de celui-ci et peut être verrouillé ou est verrouillé avec l'élément d'entrée en prise conjuguée (70) par rotation à partir de la première position de rotation relative dans au moins une deuxième position de rotation relative servant de position de rotation de verrouillage et, dans la position de rotation de verrouillage, l'au moins une partie de verrouillage enserrant une partie de l'élément d'entrée en prise conjugué limitant l'ouverture de verrouillage et une partie de bord, limitant l'ouverture de verrouillage (80), de l'élément d'entrée en prise conjugué (70) venant en prise par complémentarité de formes avec l'évidement ou la rainure (86) du boulon de retenue (22).

12. Kit de montage selon l'une des revendications 9 à 11, **caractérisé en ce que** l'élément d'entrée en prise conjugué (70) est réalisé sous forme d'élément de retenue auxiliaire supplémentaire, lequel présente une première partie présentant la formation d'entrée en prise conjuguée (84) et une deuxième partie présentant une formation d'accouplement (80), la formation d'accouplement (82) étant décalée radialement par rapport à la formation d'entrée en prise conjuguée (84) et pouvant être accouplée ou étant accouplée à une formation d'accouplement conjuguée de l'élément de base du dérailleur arrière ou à un boulon de montage (72) assurant le montage l'élément de base sur l'élément de retenue au moyen de l'ouverture de montage.
